# EUROPÄISCHE PATENTSCHRIFT

(11) **EP 2 204 256 B1**
(45) Veröffentlichungstag und Bekanntmachung des Hinweises auf die Patenterteilung: **15.02.2012**
(21) Anmeldenummer: 09015343.8
(22) Anmeldetag: 14.12.2005
(51) Int. Cl.: B23K 37/047, B23P 21/00

(54) **Verfahren zum Fügen von Teilen in einer Fertigungsanlage**
Method for joining parts in a production assembly
Procédé d'assemblage de pièces dans une installation de fabrication

(30) Priorität: 29.12.2004 AT 21922004
(43) Veröffentlichungstag der Anmeldung: 07.07.2010
(62) Teilanmeldung aus: 05815743.9
(73) Patentinhaber: STIWA Holding GmbH, 4800 Attnang-Puchheim (AT)
(72) Erfinder: Bittendorfer, Markus, 4813 Altmünster (AT); Heiml, Roland, 4870 Vöcklamarkt (AT); Pauditz, Michael, 4690 Schwanenstadt (AT); Rebhan, Thomas, 4680 Haag am Hausruck (AT)
(74) Vertreter: Ofner, Clemens

(56) Entgegenhaltungen:
- EP-A1- 1 336 447
- GB-A- 2 293 339
- JP-A- 10 166 183
- US-A- 4 010 533
- US-A- 4 738 154

## Beschreibung

Die Erfindung betrifft ein Verfahren zum Fügen von Teilen in einer Fügestation, wie in den Oberbegriffen der Ansprüche 1, 2 und 3 beschrieben.

Es sind aus dem Stand der Technik Fügeverbindungen bekannt, bei denen ein innerer Teil zwischen zwei äußeren Teilen unter definierter Vorspannung angebracht wird. Dazu wird der innere Teil zwischen den äußeren Teilen verbracht und danach die äußeren Teilen soweit aufeinander zugestellt, sodass die Vorspannung eingestellt ist. Treten an den Teilen Maßabweichungen auf, ist auch mit mehr oder weniger hohen Schwankungen der Vorspannung zu rechnen. Eine reproduzierbare Verbindung zwischen den Teilen ist nicht mehr gegeben.

Die GB 2 293 339 offenbart ein Verfahren zur Herstellung einer stoßabsorbierenden Lenkwelle, welche eine äußere Welle mit einem ersten Endabschnitt und eine innere Welle mit einem zweiten Endabschnitt aufweist, wobei die Wellen derart ineinander geschoben werden, dass sich die beiden Endabschnitte teilweise überlappen, wobei die beiden Endabschnitte im Überlappungsbereich durch radiales Pressen der äußeren Umfangsfläche des ersten Endabschnittes plastisch verformt werden und daraufhin die beiden Endabschnitte axial soweit ineinander geschoben werden, bis die überlappenden Abschnitte voneinander freigekommen sind.

Ein Verfahren zum Herstellen einer Lenksäule für ein Fahrzeug ist auch aus der US 4,738,154 A bekannt, aufweisend die Schritte Herstellen der Lenksäule aus einem Rohr, Aufziehen einer Hülse über einen Teil der Länge des Rohres, Verformen des äußeren Durchmessers der Hülse und des äußeren Durchmessers des Rohres derart, dass diese Durchmesser im Wesentlichen zueinander gleich sind.

Die US 4,010,533 A offenbart eine Kupplung zum drehfesten Verbinden einer rohrförmigen Hülse mit einer Nabe, wobei die drehfeste Verbindung durch radiales Aufweiten der Nabe und Einpressen von Vorsprüngen in die Innenfläche der Hülse oder in die Außenfläche der Nabe bewirkt wird.

Aufgabe der Erfindung ist es, ein Verfahren zum Fügen von Teilen in einer Fügestation zu schaffen, mit dem Ungenauigkeiten bei Maßen und gegebenenfalls Formen der zu fügenden Teile beseitigt werden.

Die Aufgabe der Erfindung wird durch die Maßnahmen im Anspruch 1 gelöst. Von Vorteil ist, dass an einer Teilegruppe ein vorgeschriebenes Maß, beispielsweise ein definiertes Spiel zwischen zwei Teilen, allein anhand des Positionier- und Spannvorganges der Teile automatisch eingestellt wird. Nach dem Einstellen des vorgeschriebenen Maßes erfolgt der Fügevorgang, ohne dabei das eingestellte Maß nochmals zu ändern. Darüber hinaus ist von Vorteil, dass Fertigungsungenauigkeiten der Teile keinen Auswirkung auf die Endgenauigkeit der Baugruppe haben und maßhaltige Baugruppen hergestellt werden können. Zudem kann die Baugruppe besonders wirtschaftlich hergestellt werden.

Die Aufgabe der Erfindung wird durch die in den Kennzeichenteilen der Ansprüche 2 und 3 wiedergegebenen Maßnahmen gelöst. Von Vorteil ist, dass durch Auswertung der Spannkraft und/oder des Verfahrweges zumindest eines beweglichen Spannwerkzeuges eine Vorspannung des inneren Teiles kontrolliert eingestellt werden kann. Nach dem Einstellen der Vorspannung im inneren Teil, erfolgt der Fügevorgang, ohne dabei die Vorspannung nochmals zu ändern. Darüber hinaus ist von Vorteil, dass Fertigungsungenauigkeiten der Teile keine Auswirkung auf die Vorspannung des inneren Teiles und Endgenauigkeit der Baugruppe haben. Zudem kann die Baugruppe besonders wirtschaftlich hergestellt werden. Eine nach dem erfindungsgemäßen Verfahren hergestellte Baugruppe findet eine breite Anwendung, beispielsweise in der Antriebstechnik, Kraftfahrzeugtechnologie und dgl..

Vorteilhaft ist auch die Maßnahme nach Anspruch 4, wonach durch die entgegen der Zustellbewegung des äußeren Teiles auf den inneren Teil wirkende, elastische Rückstellkraft, die Teile zumindest in Teilabschnitten gegeneinander angepresst werden und dadurch die Reibkraft zwischen den Teilen eingestellt wird, die über die gesamte Einsatzdauer der nach dem erfindungsgemäßen Verfahren hergestellten Baugruppe konstant aufrecht erhalten bleibt. Wird der innere Teil unter Umständen sogar plastisch verformt, können zusätzlich auch größere Maßungenauigkeiten beseitigt werden und sorgt die elastische Rückfederung des plastisch verformten, inneren Teiles für die entsprechende Reibkraft zwischen den Teilen.

Von Vorteil ist auch die Maßnahme nach Anspruch 5, wonach der Sollwert für die Spannkraft und des zurückzulegenden Verfahr- und Spannweges des verstellbaren Spannwerkzeuges durch ein Toleranzfenster definiert vorgegeben sind, das so festgelegt ist, dass der nachfolgende Fügevorgang, beispielsweise das Strahlschweißen, noch ordnungsgemäß durchgeführt werden kann. Mit anderen Worten wird durch das gewählte Fügeverfahren eine maximale Abweichung eines Qualitätsmerkmals, insbesondere der Maßhaltigkeit, durch das Toleranzfenster vorgeben, innerhalb dem noch ein ausreichend genaues Fügeergebnis erreicht wird. Damit wird der Ausschuss erheblich verringert.

Gemäß der Maßnahme nach Anspruch 6 werden die beim Schweißen an zwei getrennten Stellen auftretenden Schweißspannungen, wenngleich diese auch sehr niedrig sind, nahezu vollständig aufgehoben, sodass die Gesamtgenauigkeit der Baugruppe alleinig durch geschickte Anordnung und Lage der Schweißnähte weiter optimiert wird.

Vorteilhaft ist auch die Maßnahme nach Anspruch 7, da diese Fügeverfahren nur geringste Schweißeigenspannungen hervorrufen und der Verzug vernachlässigbar klein ist und deshalb in Verbindung mit der hohen Positionier- und Spanngenauigkeit der Teile, eine hohe Maßhaltigkeit einer aus den Teilen geschweißten Baugruppe erzeugt wird, wenngleich die Fertigungsgenauigkeiten der Teile gegenüber die Gesamtgenauigkeit der Baugruppe relativ gering ist. Werden die Teile miteinander verklebt, wird eine noch bessere Maßhaltigkeit der Baugruppe erreicht.

Die Erfindung wird im nachfolgenden anhand der in den Zeichnungen dargestellten Ausführungsbeispiele näher erläutert.

Es zeigen:
- Fig. 1: die Teile einer aus diesen herzustellenden Baugruppe, in perspektivischer An- sicht und vereinfachter Darstellung;
- Fig. 2: einen Abschnitt einer aus den in Fig. 1 dargestellten Teilen zusammengefügten Baugruppe, in perspektivischer Ansicht und vereinfachter Darstellung;
- Fig. 3: eine Draufsicht auf ein erfindungsgemäße Fertigungssystem mit einer ersten und zweiten Fertigungsanlage, in vereinfachter Darstellung;
- Fig. 4: eine beispielhafte Ausführung einer Transporteinrichtung der Fertigungsanla- gen nach Fig. 3, in Seitenansicht und stark vereinfachter Darstellung;
- Fig. 5: die Fertigungsanlage in Stimansicht, geschnitten, gemäß den Linien V-V in Fig. 4;
- Fig. 6: eine vergrößerte Darstellung eines Teiletransportträgers mit Aufnahme für die Transporteinrichtung, in Seitenansicht und stark vereinfachter Darstellung;
- Fig. 7: einen Teilbereich einer durch die Teiletransportträger gebildeten Transportket- te der Transporteinrichtung nach Fig. 4, in Draufsicht und stark vereinfachter Darstellung;
- Fig. 8: eine beispielhafte Ausführung einer Teilebereitstellung in Form einer Zuför- dereinrichtung mit Hilfsteiletransportträgern, in Seitenansicht und stark verein- fachter Darstellung;
- Fig. 9: die Zufördereinrichtung nach Fig. 8 in Stirnansicht, teilweise geschnitten und stark vereinfachter Darstellung;
- Fig. 10: eine perspektivische Ansicht einer Fügestation der ersten Fertigungsanlage, stark vereinfacht dargestellt;
- Fig. 11: ein Antriebssystem für eine Schweißvorrichtung der Fügestation nach Fig. 10, in stark vereinfachter Darstellung;
- Fig. 12: einen Teilabschnitt der Transporteinrichtung ohne Teiletransportträger und zu beiden Seiten von dieser angeordnete Zustellachsen sowie die Antriebseinhei- ten für Spanneinrichtungen eines Spannsystems der Fügestation nach Fig. 10, in stark vereinfachter Darstellung;
- Fig. 13: ein Spannsystem der in Fig. 10 dargestellten Fügestation, in Seitenansicht und stark vereinfachter Darstellung;
- Fig. 13a: einen Teilbereich des in Fig. 13 dargestellten Spannsystems in vergrößerter und vereinfachter Darstellung;
- Fig. 14: eine Draufsicht auf das Spannsystem nach Fig. 13, in stark vereinfachter Dar- stellung;
- Fig. 14a: ein Teilabschnitt des Spannsystems nach Fig. 14 in vergrößerter und stark ver- einfachter Darstellung;
- Fig. 15: eine Ausführung einer Höhenpositioniervorrichtung der Spanneinrichtung der Spanneinheit, in Seitenansicht und stark vereinfachter Darstellung;
- Fig. 16: eine andere Ausführung der Höhenpositioniervorrichtung für die Spanneinrich- tungen der Spanneinheit, in Seitenansicht und stark vereinfachter Darstellung;
- Fig. 17: eine Ansicht auf die Höhenpositioniervorrichtung nach Fig. 16, in stark verein- fachter Darstellung;
- Fig. 18a bis 18f: der Positionier- und Spannvorgang von zwei miteinander zu verbin- denden Teile in aufeinander folgenden Verfahrensschritten in der ers- ten Fertigungsanlage, in unterschiedlichen Ansichten und stark verein- fachter Darstellung;
- Fig. 19a bis 19c: der Positionier- und Spannvorgang einer Baugruppe und mit dieser zu verbindenden, weiteren Teil in aufeinander folgenden Verfahrens- schritten in der zweiten Fertigungsanlage, in unterschiedlichen An- sichten und stark vereinfachter Darstellung;
- Fig. 20: ein Diagramm mit dem Verlauf der Spannkraft über den Spann- und Verfahr- weg eines Spannwerkzeuges und Auswertung des Spannvorganges als Gutteil;
- Fig. 21: ein Diagramm mit dem Verlauf der Spannkraft über den Spann- und Verfahr- weg eines Spannwerkzeuges und Auswertung des Spannvorganges als Schlechtteil;
- Fig. 22: ein Diagramm mit dem Verlauf der Spannkraft über den Spann- und Verfahr- weg eines Spannwerkzeuges und Auswertung des Spannvorganges als Schlechtteil;
- Fig. 23: eine weitere Ausführung eines Spannsystems zur Durchführung eines Verfah- rens zum Fügen von zwei Teilen mit zwei Spannwerkzeugen in Zwischenposi- tion, in Stirnansicht und stark vereinfachter Darstellung;
- Fig. 24: die geschweißten Teile als Baugruppe nach Fig. 23 in Seitenansicht und stark vereinfachter Darstellung;
- Fig. 25: die Spanneinrichtungen nach Fig. 23, mit zwei Spannwerkzeugen in Spannpo- sition sowie einer schematisch angedeuteten Strahlschweißvorrichtung;
- Fig. 26: eine weitere Ausführung einer Baugruppe und den in einer Zwischenposition befindlichen Spannwerkzeugen von Spanneinheiten, in Stirnansicht geschnitten und stark vereinfachter Darstellung;
- Fig. 27: die Ausführung nach Fig. 26 mit den in einer Spannposition befindlichen Spannwerkzeugen der Spanneinheiten;
- Fig. 28: die Baugruppe nach Fig. 26 und den in Spannposition befindlichen Spann- werkzeugen, in Seitenansicht und stark vereinfachter Darstellung;
- Fig. 29: eine Draufsicht auf das Spannsystem zur Herstellung der Baugruppe nach Fig. 26, in stark vereinfachter Darstellung;
- Fig. 30: einen Ausschnitt einer anderen Ausführung einer Baugruppe mit den in Spann- position eingetragenen Spannwerkzeugen, geschnitten und stark vereinfachter Darstellung;
- Fig. 31: eine weitere Ausführung einer Baugruppe mit den in Spannposition eingetra- genen Spannwerkzeugen, geschnitten und stark vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

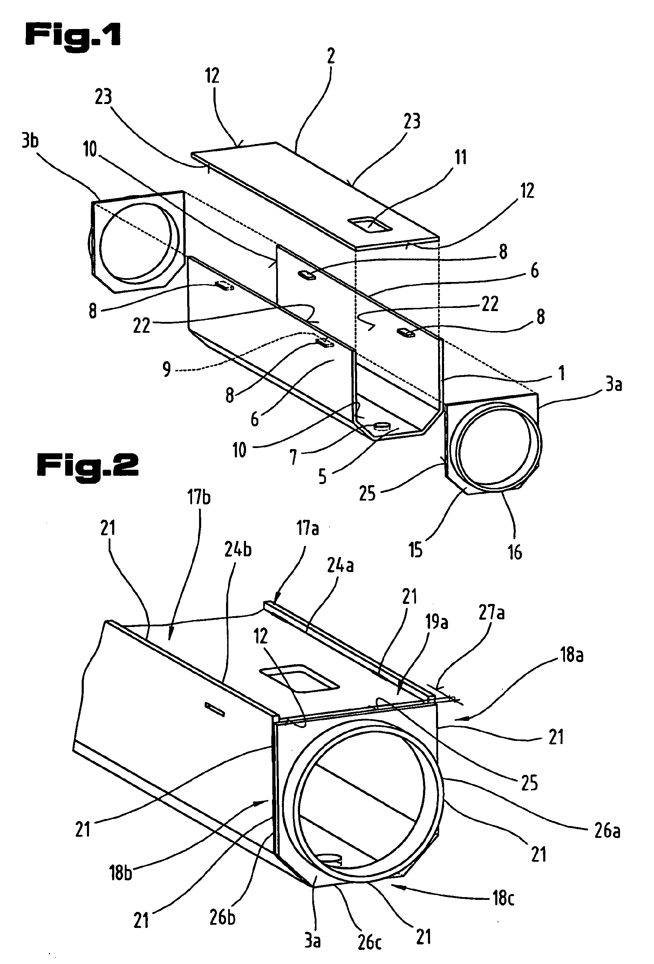

In der Fig. 1 sind die zu einer Baugruppe miteinander zu fügenden, einzelnen Teile 1, 2, 3a, 3b in perspektivischer Ansicht gezeigt. Diese Teile 1 bis 3b sind in einer bevorzugten Ausführung jeweils aus einem nach Maß zugeschnittenen, insbesondere gestanzten und anschließend umgeformten Blechstück hergestellt. Der erste Stanz- und Biegeteil 1 ist im Querschnitt etwa trapezförmig bzw. im Wesentlichen U-förmig ausgebildet und weist eine Basis 5 und zwei von ihr aufragende Schenkel 6 auf. An der Basis 5 ist eine beispielsweise kreisrunde Positionieröffnung 7 angeordnet, deren Funktion später noch erläutert wird. Die Schenkeln 6 sind jeweils im Bereich ihrer gegenüberliegenden Stirnenden mit in Richtung des gegenüberliegenden Schenkels 6 an der Innenseite des U-föimigen Teiles 1 vorspringenden Auflagefortsätzen 8 versehen, deren Funktion später noch genauer beschrieben wird. Diese Auflagefortsätze 8 sind zweckmäßig durch Umformen hergestellte, sickenartige Vertiefungen und weisen auf ihrer der Basis 5 abgewandten Oberseite eine parallel zur Basis 5 verlaufende, ebene Auflagefläche 9 auf. Außerdem bildet der erste Teil 1 stirnseitig, ebene Anlageflächen 10 für die Teile 3a, 3b aus.

Der zweite Teil 2 ist nach dieser Ausführung aus einem im Wesentlichen flachen Blechstück ausgeschnitten, beispielsweise mittels einer Platine ausgestanzt, und ebenflächig ausgebildet. Zusätzlich ist der zweite Teil 2 mit einer, beispielsweise schlitzartigen Positionieröffnung 11 ausgestattet und bildet stimseitig Anlageflächen 12 für die Teile 3a, 3b aus. Die Länge des ersten und zweiten Teiles 1, 2 sind, abgesehen von den möglichen Herstelltoleranzen beim Stanzen etc., mit gleicher Länge hergestellt.

Die Teile 3a, 3b weisen eine ebenflächige Tragplatte 15 und eine Hülse 16 auf. Hierzu werden die Teile 3a, 3b jeweils aus einem nach Maß zugeschnittenen, vorzugsweise gestanzten Blechstück und in diesem durch Umformen, vorzugsweise durch Tiefziehen, ausgeformte Hülse 16 hergestellt. Die Hülsen 16 bilden jeweils ein Lagerauge für ein nicht weiters dargestelltes Lager, das beispielsweise eingepresst ist.

Alle Teile 1 bis 3b sind somit durch reine, spanlose Formgebung und Verformung mit hoher Präzision hergestellt, sodass auch die aus den einzelnen Teilen 1 bis 3b gefügte Baugruppe, wie sie in Fig. 2 abschnittsweise dargestellt ist, durch Verwendung geeigneter Fügeverfahren, wie Kleben, Laserlöten, Laser-, Plasma- und Elektronenstrahlschweißen, mit hoher Maßgenauigkeit hergestellt werden kann.

Wenngleich die spanlose Herstellung der Teile 1 bis 3b nach dem Stanzverfahren als die bevorzugte Ausführung gilt, wäre es auch denkbar, dass diese aus einem mit dem Laser oder Wasserstrahl ausgeschnittenen Blechstück hergestellt sind.

Auch sei an dieser Stelle darauf hingewiesen, dass die in den Fig. 1 und 2 gezeigten einzelnen Teile 1 bis 3b und die aus diesen hergestellte Baugruppe keineswegs als Einschränkung der Erfindung gelten, sondern vielmehr je nach Verwendungsgebiet der Baugruppe unterschiedliche Geometrien annehmen und die Teile 1 bis 3b auf unterschiedliche Weise hergestellt werden können. So könnten die nach dem Verfahren des Kaltumformens hergestellten Teile 1, 3a, 3b anderenfalls auch durch einen Massivumformteil gebildet sein, beispielsweise ein Schmiedeteil, der durch Warm- oder Kaltschmieden maßgenau hergestellt ist. Die Teile 1 bis 4 sind aus Stahl oder Kunststoff gebildet. Sind die Teile aus Kunststoff, so sind diese im Spritzguss- und/oder Extrusionsverfahren hergestellt.

Wie in Fig. 2 hergestellt, werden die Teile 1 bis 3b an mehreren Fügestellen 17a, 17b, 18a, 18b, 18c, 19a, 19b (nicht eingetragen) durch eine oder bevorzugt mehrere Fügenähte 21 zumindest abschnittsweise zusammengefügt. Die Fügenähte 21 sind durch Klebe- oder Schweißnähte, insbesondere Laser-, Plasma- oder Elektronenstrahlschweißnähte gebildet und weisen eine Länge von einigen Millimetern bis einigen Zentimetern auf.

Der zweite Teil 2 ist zwischen den Schenkeln 6 des ersten Teiles 1 angeordnet und werden mittels noch näher zu beschreibenden Spanneinrichtungen die Schenkeln 6 des ersten Teiles 1 und Längsränder des zweiten Teiles 2 gegeneinander angepresst. Hierzu sind die Schenkeln 6 und der zweite Teil 2 auf ihren einander zugewandten Seiten mit Anlageflä-chen 22, 23 versehen. Die miteinander zu verschweißenden Teile 1, 2 bilden nun an den Fügestellen 17a, 17b durch die im Wesentlichen spaltfrei aneinanderstoßenden Anlageflächen 22, 23 der Teile 1, 2 je einen Fügestoß 24a, b aus. Die beiden Teile 1, 2 werden über die entlang der Fügestöße 24a, 24b anzubringenden Fügenähte 21 zusammengefügt.

Die Teile 3a, 3b werden mit der Stirnseite des ersten Teiles 1 verbunden. Hierzu ist der Teil 3a, 3b auf seiner, dem ersten Teil 1 zugewandten Seite und der erste Teil 1 an seiner Stirnseite mit aufeinander zugewandten Anlageflächen 10, 25 versehen. Die Teile 3a, 3b werden über noch näher zu beschreibende Spanneinrichtungen mit ihren Anlageflächen 25 gegen die Anlageflächen 10 des ersten Teiles 1 angepresst, sodass die nun im Wesentlichen spaltfrei aneinanderliegenden Anlageflächen 10, 25 einen Fügestoß 26a, 26b, 26c an den Fügestellen 18a, 18b, 18c ausbilden. Die Teile 1, 3a, 3b werden über die entlang der Fügestöße 26a, 22b, 26c anzubringenden Fügenähte 21 zusammengefügt.

Auch wenn das Stanzen und Umformen der Teile 1 bis 3b eine hohe Maßgenauigkeit erlauben, können geringfügige Maßungenauigkeiten auftreten. Diese Ungenauigkeiten können dazu führen, dass zwischen den einander zugewandten Anlageflächen 12, 25 der Teile 2, 3a, 3b ein Fügespalt 27a, 27b (nicht eingetragen) entsteht. In der Praxis hat sich gezeigt, dass dieser Fügespalt 27a, 27b in einem Ausmaß von bis zu 0,2 mm auch dann keine Auswirkung auf die Qualität der Schweißverbindung mit sich bringt, wenn ohne Zusatzmaterial geschweißt wird, da der Laserstrahl im Fokus ohnehin einen Durchmesser von etwa 0,3 bis 0,6 mm aufweist und an den Schweißabschnitten entlang der Verbindungsstelle 19a, 19b ausreichend Grundmaterial von den Teilen 2, 3a, 3b abgeschmolzen wird, um den Fügespalt 27a, 27b an den Schweißabschnitten zu schließen und eine tragfähige Schweißverbindung zu schaffen.

In einer bevorzugten Ausführung sind die Fügenähte 21 durch Strahlschweißen, insbesondere Laserstrahlschweißen, hergestellt und die Teile 1 bis 3b an den durch die spaltfrei aneinanderstoßenden Anlageflächen 10, 25, 22, 23 ausgebildeten Fügestößen 24a, 24b, 26a bis 26c oder Fügespalten 27a, 27b miteinander verschweißt. Hierzu wird, nachdem die Teile 1 bis 3b zueinander positioniert und fixiert wurden, ein nicht gezeigter Schweißstrahl entlang dem betreffenden Fügestoß 24a, 24b, 26a bis 26c oder Fügespalt 27a, 27b zumindest abschnittsweise geführt, sodass entlang dieser Schweißabschnitte Schweißnähte entstehen, die durch das von einem der miteinander zu verschweißenden Teile 1 bis 3b oder beiden der miteinander zu verschweißenden Teile 1 bis 3b bereichsweise aufgeschmolzene Grundmaterial (Werkstoff) besteht. Die enorme Energiedichte (etwa 10⁶ W/m²) des Schweißstrahls, insbesondere des Laserstrahls, im Fokus, bringt das Grundmaterial (Werkstoff) entlang der Schweißabschnitte zum Schmelzen. Während in Vorschubrichtung des Schweißstrahls Grundmaterial aufgeschmolzen wird, fließt dahinter die Schmelze von den zu verschweißenden Teilen ineinander. Der aufgeschmolzene und durchmischte Werkstoff kühlt ab und die Schmelze erstarrt zu einer schmalen Schweißnaht.

Das Strahlschweißen ist ein energiearmes Schweißverfahren, mit dem ein sogenanntes "Tiefschweißen" möglich ist und sich dadurch auszeichnet, dass sehr schlanke Nahtgeometrien mit einem großen Tiefen-Breiten-Verhältnis erreicht werden und nur eine geringe Streckenenergie erforderlich ist, wodurch eine nur sehr kleine Wärmeeinflusszone resultiert. Dadurch wird die thermische Belastung auf die miteinander zu verschweißenden Teile 1 bis 3b sehr gering gehalten, sodass auch ein Verzug der Teile 1 bis 3b minimal ist. Die Schweißnähte 21 an den Fügestößen 24a, 24b sind durch Kehlnähte und die Schweißnähte 21 an den Fügestößen 26a bis 26c und an den Fügespalten 27a, 27b durch I-Nähte gebildet.

In der Serienfertigung der Baugruppe, wird vorwiegend das Laserschweißen, insbesondere mit einem Festkörperlaser, beispielsweise Nd: YAG-Laser eingesetzt, der vor allem eine hohe Flexibilität der noch näher zu beschreibenden Schweißstation ermöglicht. Die Teile 1 bis 3b sind vorzugsweise ausschließlich durch das Grundmaterial ohne Zusatzwerkstoff unlösbar miteinander verbunden.

Natürlich wäre es auch denkbar, dass die Teile 1 bis 3b durch die unter Beisatz von Zusatzwerkstoff und das bereichsweise aufgeschmolzene Grundmaterial zumindest eines Teiles 1 bis 3b oder beider Teile 1 bis 3b hergestellte Schweißnähte am jeweiligen Fügestoß 24a, 24b, 26a bis 26c oder Fügespalt 27 miteinander verbunden sind.

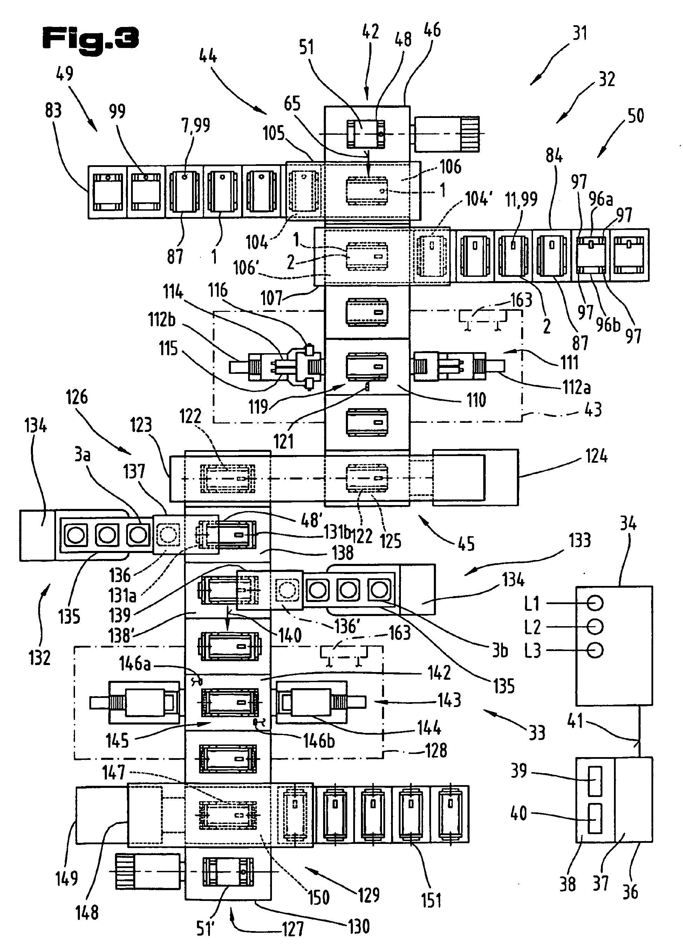

In Fig. 3 ist ein erfindungsgemäßes Fertigungssystem 31 zur Herstellung der in Fig. 2 beispielsweise, dargestellten Baugruppe in Draufsicht und stark vereinfachter Darstellung gezeigt. Dieses Fertigungssystem 31 umfasst nach dieser Ausführung zumindest zwei unmittelbar hintereinander angeordnete, zusammenwirkende Fertigungsanlagen 32, 33, eine Energiequelle 34, insbesondere Lasergenerator, sowie eine Steuereinrichtung 36. Die Steuereinrichtung 36 umfasst eine Energiequelle 37 und eine Auswerteeinheit 38 mit einem Vergleichsmodul 39 für den Soll-Istwert-Vergleich einer Spannkraft und/oder eines Verfahr- und Spannweges eines Spannwerkzeuges und einem Auswertemodul 40 für eine Qualitätsbeurteilung eines Teiles 1 bis 3b, wie dies im Nachfolgenden noch näher beschrieben wird. Die Steuereinrichtung 36 ist mit der Energiequelle 34 über eine Verbindungsleitung 41 verbunden.

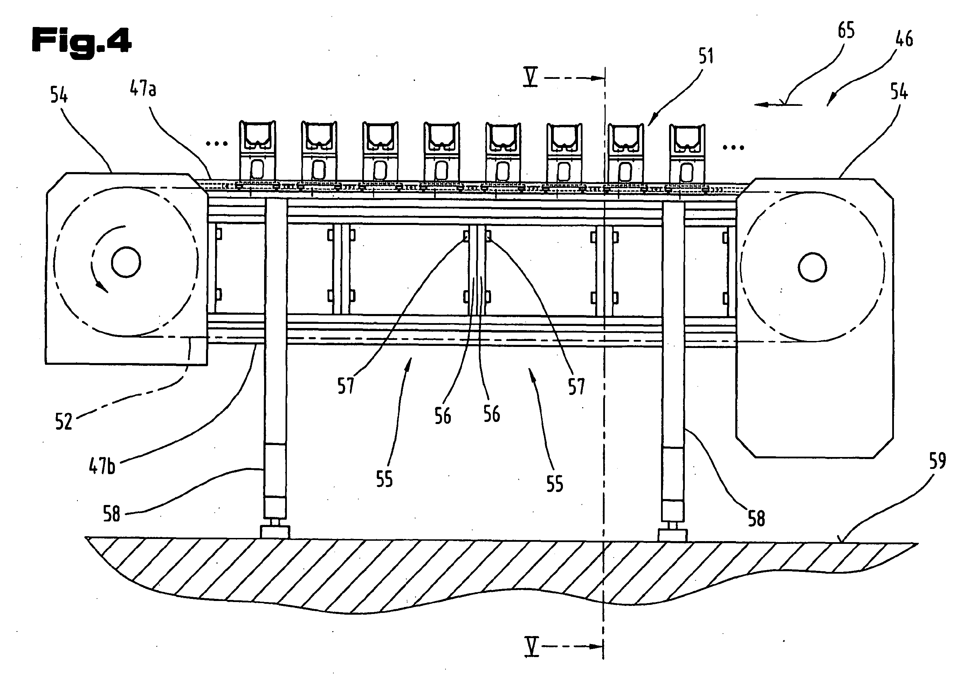

Die erste Fertigungsanlage 32 umfasst ein erstes Transportsystem 42 und zumindest eine erste Fügestation 43, die nach dieser Ausführung durch eine Schweißstation gebildet ist. Das Transportsystem 42 dient der Beförderung von Teilen 1, 2 zur Fügestation 43 und umfasst eine sich zwischen einem Übernahmebereich 44 und einem Weitergabebereich 45 vorzugsweise geradlinig erstreckende, erste Transporteinrichtung 46 mit entlang von in den Fig. 4 bis 7 eingetragenen Führungsbahnen 47a, 47b verfahrbaren und vorzugsweise gleichartig ausgebildeten Teiletransportträgern 48 sowie zumindest eine Teilebereitstellung mit zwei voneinander getrennt angeordneten Teilespeicher 49, 50. Aus Gründen der besseren Übersicht, sind in Fig. 4 nur einige Teiletransportträger 48 dargestellt.

Eine beispielhafte Ausführung einer Transporteinrichtung 46 ist in den Fig. 4 bis 7 gezeigt. Zum Transport der Teile 1, 2 auf den Teiletransportträgern 48 sind Aufnahmen 51 vorgesehen, die mit dem Teiletransportträger 48 verbunden sind. Die Teiletransportträger 48 bilden im vorliegenden Ausführungsbeispiel eine Transportkette 52. Zum getakteten Vorschub der Transportkette 52 dient ein intermittierender Vorschubantrieb, insbesondere ein Elektromotor, wie Servo- oder Schrittschaltantrieb, der im Bereich einer Umlenkstation 54 für die Transportkette 52 angeordnet ist. Zwischen den beiden Umlenkstationen 54 befinden sich mehrere Gehäuseteile 55. Diese Gehäuseteile 55 weisen einander zugewandte Stirnplatten 56 auf, die untereinander über Führungs- und/oder Kupplungsvorrichtungen 57 zu einer selbsttragenden Gehäuseeinheit verbunden werden. Senkrecht zu den Stirnplatten 56 verlaufen die Führungsbahnen 47a, 47b, wobei in der Führungsbahn 47a der gezogene Strang und der Führungsbahn 47b der rücklaufende Strang der Transportkette 52 geführt ist.

Die aus den Umlenkstationen 54 und Gehäuseteilen 55 gebildete Transporteinrichtung 46 ist über Stützvorrichtungen 58 auf einer Aufstandsfläche 59 abgestützt. Die Stützvorrichtungen 58 werden durch spiegelbildlich zu einer vertikalen Symmetrieebene 60 angeordnete, L-förmige Stützen gebildet, die über Befestigungsvorrichtungen 61 mit Seitenwänden 62 der Gehäuseteile 55 verbunden sind.

Die Transporteinrichtung 46 umfasst, die aus den Gehäuseteilen 55 zusammengesetzte, selbsttragende Gehäuseeinheit, die auf der von der Aufstandsfläche 59 abgewandten Oberseite mit der Führungsbahn 47a ausgestattet ist. Die Führungsbahn 47a umfasst an der Gehäuseeinheit befestigte und parallel zur Oberseite derselben verlaufende Höhenführungsbahnen 63 für die Höhenführung der Kettenglieder bildenden Teiletransportträger 48 der Transportkette 52. Zusätzlich umfasst die Führungsbahn 47a parallel zur Oberseite der Gehäuseeinheit verlaufende Seitenfiihrungsbahnen 64 für die Seitenführung und der die Kettenglieder bildenden Transportteileträger 48. Die Höhenführungsbahnen 63 sind durch Führungsleisten gebildet. Die Seitenführungsbahnen 64 sind durch in Vorschubrichtung - gemäß Pfeil 65 - der Teiletransportträger 48 mit im Abstand voneinander angeordneten Stützrollen 66 und Druckrollen 67 gebildet. Die Stütz- und Druckrollen 66, 67 sind beidseits der Transportkette 52 angeordnet. Die Stützrollen 66 sind dabei einer ersten Seitenfläche 68 und die Druckrollen 67 einer dieser gegenüberliegenden, zweiten Seitenfläche 69 des Teiletransportträgers 48 zugeordnet. Die Druckrollen 67 sind konisch ausgebildet und wird durch diese auf die Teiletransportträger 48 eine quer zur Vorschubrichtung - gemäß Pfeil 65 - verlaufende und in Richtung der Stützrollen 66 ausgerichtete Druckkraft ausgeübt, sodass die Teiletransportträger 48 entlang der Führungsbahn 47a im wesentlich spielfrei geführt sind. Die exakte Höhenführung der Teiletransportträger 48 entlang der Führungsbahn 47a wird durch die Führungsleisten sichergestellt.

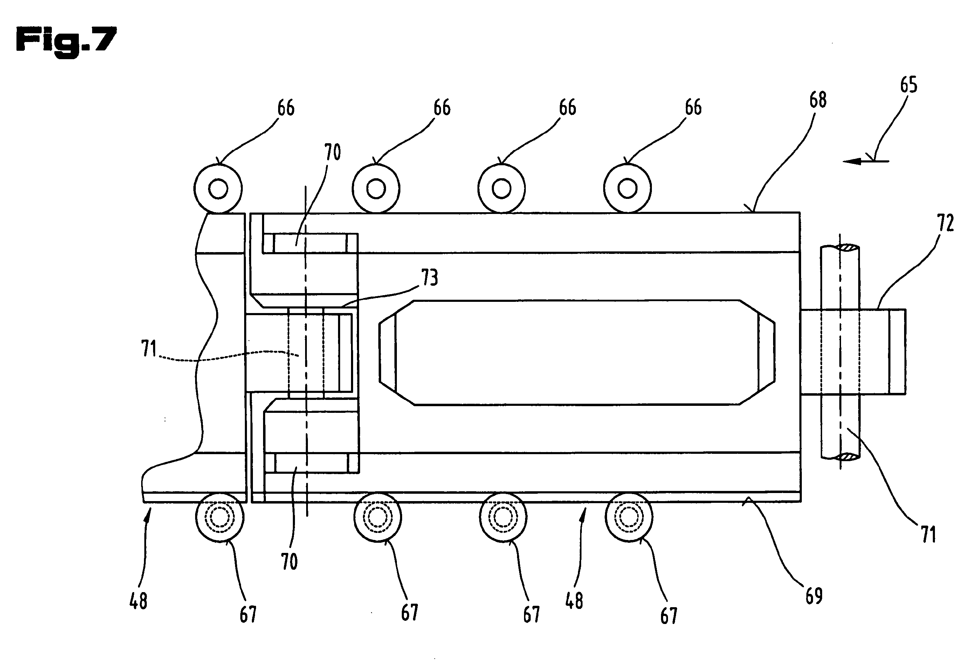

Die Teiletransportträger 48 sind über auf den Führungsleisten sich abwälzende Laufrollen 70 der Höhe nach abgestützt und geführt. Diese Laufrollen 70 sind auf einer als Kettenbolzen 71 dienenden Achse gelagert. Der Kettenbolzen 71 verbindet jeweils zwei unmittelbar aufeinander folgende Teiletransportträger 48. Jeder Teiletransportträger 48 umfasst jeweils stirnseitig einen Kupplungsfortsatz 72 sowie eine Kupplungsaufnahme 73. Der Kettenbolzen 71 ist am Kupplungsfortsatz 72 gelagert (wie in Fig. 7 dargestellt).

Es sei an dieser Stelle daraufhingewiesen, dass die beschriebene Transporteinrichtung 46 nur beispielhaft zu betrachten ist und nicht einschränkend gilt. Beispielsweise kann die Transporteinrichtung genauso gut durch die in der WO 02/072453 A2 offenbarte Transporteinrichtung gebildet sein. Diese bekannte Transporteinrichtung umfasst mehrere hintereinander angeordnete Transportabschnitte, von welchen jeden zumindest eine eigene, von den benachbarten Transportabschnitten unabhängige Vorschubvorrichtung für die Teiletransportträger und zumindest zwei quer zur Vorschubrichtung der Teiletransportträger voneinander distanzierte Führungsbahnen zugeordnet ist, entlang welcher die Teiletransportträger mit an seinen einander gegenüberliegenden Seiten angeordneten Führungsorganen geführt und über die jeweilige Vorschubvorrichtung verfahrbar ausgebildet ist. Somit können die einzelnen Teiletransportträger 48 unabhängig voneinander zwischen den einzelnen Transportabschnitten verfahren, wobei in einem der Transportabschnitte die Fügestation 43 angeordnet ist. Dieser Transportabschnitt entspricht einer geradlinigen Transporteinrichtung.

Hinsichtlich der Ausbildung der einzelnen Transportabschnitte und der Teiletransportträger wird die diesbezügliche, detaillierte Offenbarung aus der WO 02/072453 A2 zum Gegenstand dieser Offenbarung gemacht.

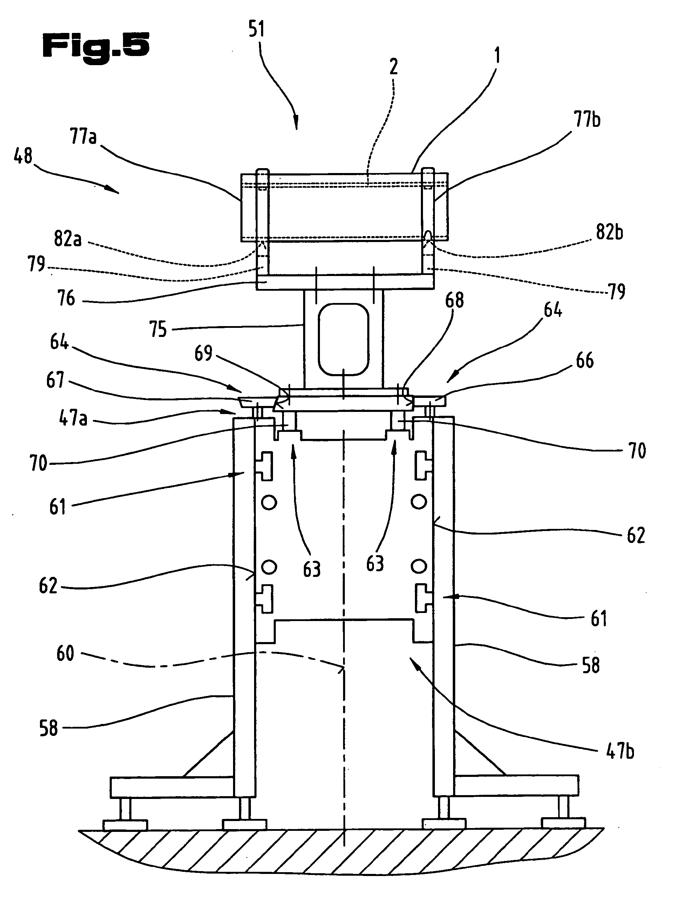

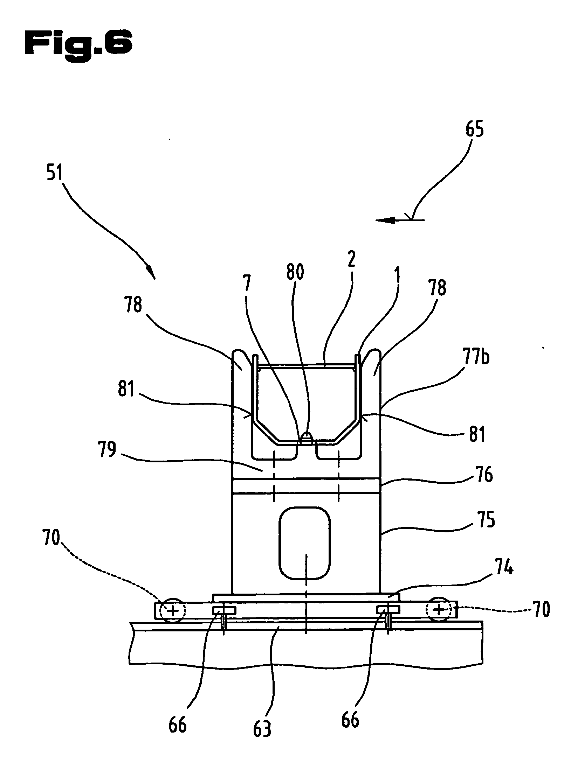

Die Teiletransportträger 48 der unterschiedlich ausgebildeten, oben beschriebenen Transporteinrichtungen sind jeweils mit der in den Fig. 5 und 6 dargestellten Aufnahme 51 ausgestattet. Die Aufnahme 51 ist über eine Montageplatte 74 mit dem Teiletransportträger 48 verbunden und weist eine an dieser befestigte Stützsäule 75, eine auf dieser befestigte Trägerplatte 76 sowie zwei im Abstand voneinander angeordnete und mit der Trägerplatte 76 verbundene, gabelartige Aufnahmebügel 77a, 77b auf. Die Aufnahmebügel 77a, 77b umfassen jeweils zwei an der Trägerplatte 76 senkrecht aufragende, fingerartige Führungsstege 78 und eine diese verbindende Basis 79. Zumindest einer der Aufnahmebügel 77b ist im Bereich seiner Basis 79 mit zumindest einem Positioniermittel 80, insbesondere einem Bolzen, versehen, das in die Positionieröffnung 7 des von der Aufnahme 51 aufgenommenen, ersten Teiles 1 vorragt und dadurch der erste Teil 1 während seinem Transport entlang der Transporteinrichtung 46 in ausreichend genauer Position gehalten wird. Wesentlich ist, dass der erste Teil 1 in der Aufnahme 51 nur in seiner Lage orientiert abgelegt und bis auf einige wenige Millimeter genau gegenüber der Aufnahme 51 positioniert ist. Demgemäß ist die Querschnittsabmessung des Positioniermittels 80 deutlich geringer bemessen als die Querschnittsabmessung der Positionieröffnung 7 im ersten Teil 1.

Wie in Fig. 6 eingetragenen, sind die fingerartigen Führungsstege 78 an ihren einander zugewandten Seiten mit ebenen Seitenführungsflächen 81 versehen. Die Basis 79 der Aufnahmebügel 78 sind jeweils mit einer ebenen Auflagefläche 82a, 82b für den an diesen abstützenden, ersten Teil 1 versehen. Der erste Teil 1 ist somit am Teiletransportträger 48 über die Aufnahme 51 grob vorpositioniert und liegt zwischen den Führungsstegen 78 der Aufnahmebügel 77a, 77b sowie an den Auflageflächen 82a, 82b frei auf.

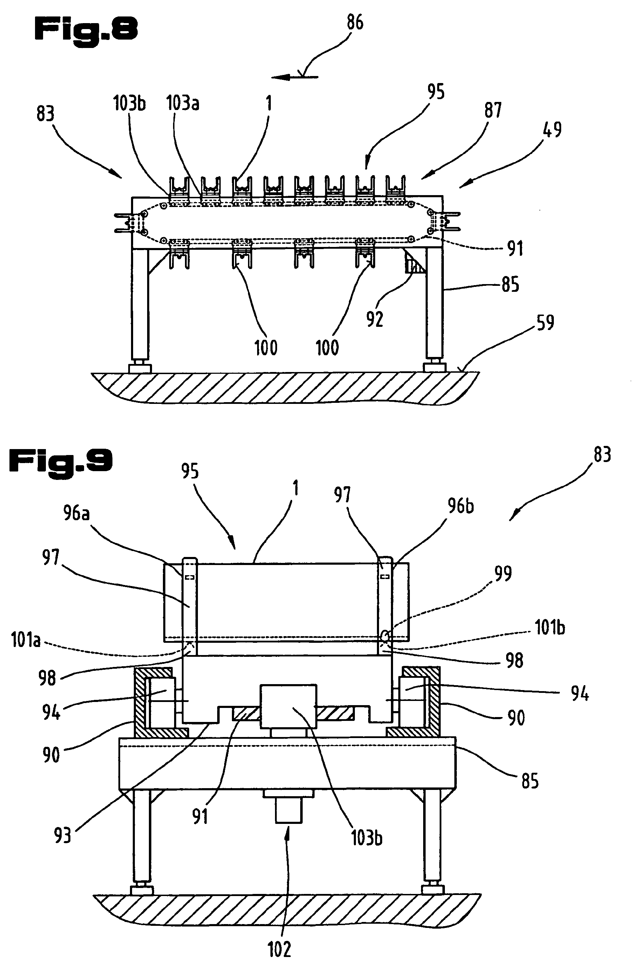

Wie in der Fig. 3 weiters eingetragen, sind im Übernahmebereich 44 zu beiden Seiten der zumindest in einem Teilabschnitt geradlinig ausgebildeten Transporteinrichtung 46 die Teilespeicher 49, 50 der Teilebereitstellung angeordnet. Diese sind nach vorliegender Ausführung jeweils durch ein Staubahnsystem für gleichartige Teile 1, 2 in Form einer Zufördereinrichtung 83, 84 ausgebildet, wie in den Fig. 8 und 9 schematisch dargestellt.

Die Zufördereinrichtungen 83, 84 sind weitestgehend identisch ausgebildet und umfassen einen Grundrahmen 85, einen Zugmitteltrieb, insbesondere einen Riementrieb, und zwei quer zur Vorschubrichtung - gemäß Pfeil 86 - von Hilfsteiletransportträgern 87 im Abstand voneinander angeordnete Führungsbahnen 90. Der Zugmitteltrieb und die Führungsbahnen 90 sind am Grundrahmen 85 gelagert. Der Zugmitteltrieb umfasst ein um ein Antriebsrad und mehrere Umlenkräder geführtes, endloses Zugmittel 91, insbesondere einen Flachriemen, und einen an das Antriebsrad angeflanschten Antriebsmotor 92. Die gleichartig ausgebildeten Hilfsteiletransportträger 87 umfassen jeweils eine Aufnahme 95, die auf einem Fahrgestell 93 eines Fahrwerkes befestigt ist. Das Fahrgestell 93 ist in Vorschubrichtung - gemäß Pfeil 86 - betrachtet am vorderen und hinteren Ende mit je einem Paar von frei drehbaren Laufrädern 94 versehen.

Die Aufnahme 95 der Hilfsteiletransportträger 87 an den Zufördereinrichtungen 83, 84 ist an der Oberseite des Fahrgestelles 93 befestigt und weist zwei im Abstand voneinander angeordnete und mit dem Fahrgestell 93 verbundene, gabelartige Aufnahmebügel 96a, 96b auf. Die Aufnahmebügel 96a, 96b umfassen jeweils zwei am Fahrgestell 93 senkrecht aufragende, fingerartige Führungsstege 97 und eine diese verbindende Basis 98 auf. Zumindest einer der Aufnahmebügel 96b ist im Bereich seiner Basis 98 mit zumindest einem Positioniermittel 99, insbesondere einem Bolzen für den ersten Teil 1 bzw. einem quaderförmigen Fortsatz für den zweiten Teil 2, versehen, das in die Positionieröffnung 7; 11 des von der Aufnahme 95 aufgenommenen Teiles 1; 2 vorragt und dadurch der Teil 1; 2 während seinem Transport entlang der Zufördereinrichtung 83, 84 in ausreichend genauer Position gehalten wird. Wesentlich ist, dass der Teil 1; 2 in der Aufnahme 95 nur in seiner Lage orientiert abgelegt und bis auf einige wenige Millimeter genau gegenüber die Aufnahme 95 positioniert ist. Demgemäß ist die Querschnittsabmessung des Positioniermittels 99 deutlich geringer bemessen als die Querschnittsabmessung der Positionieröffnung 7; 11 im Teil 1; 2.

Wie in den Fig. 3, 8 und 9 eingetragenen, sind die fingerartigen Führungsstege 97 an ihren einander zugewandten Seiten mit ebenen Seitenführungsflächen 100 versehen. Die Basis 98 der Aufnahmebügel 96a, 96b sind jeweils mit einer ebenen Auflagefläche 101a, 101b für den an diesen abstützenden Teil 1; 2 versehen. Der Teil 1; 2 ist somit am Hilfsteiletransportträger 87 über die Aufnahme 95 grob vorpositioniert und liegt zwischen den Führungsstegen 97 der Aufnahmebügel 96a, 96b sowie an den Auflageflächen 101a, 101b frei auf.

Jede Zufördereinrichtung 83, 84 umfasst zusätzlich entlang dem Transportweg der Hilfsteiletransportträger 87 eine Anhaltevorrichtung 102. Diese umfasst zwei getrennt steuerbare und aus einer Ruhestellung in eine, zumindest einen Hilfsteiletransportträger 87 anhaltende Betätigungsstellung verstellbare, insbesondere anhebbare und absenkbare Anschlagelemente 103a, 103b, wie diese stark vereinfacht in Fig. 8 und 9 eingetragen sind. Die Anschlagelemente 103a, 103b werden über jeweils einen schematisch eingetragenen Stellantrieb, insbesondere Pneumatik- oder Hydraulikantrieb, angesteuert.

Das dem stromaufwärts gelegene Ende der Zufördereinrichtung 83, 84 zugewandte, erste Anschlagelement 103a dient zum Aufstauen der mittels Reibschluss zwischen der Oberfläche des Zugmittels 91 und der Unterseite des Fahrgestelles 93 angetriebenen Hilfsteiletransportträger 87. Die hinter dem Anschlagelement 103a aufgestauten Hilfsteiletransportträger 87 werden mit den Teilen 1 und/oder 2 beladen. Das Beladen kann über eine Bedienperson manuell oder beispielsweise mittels eines Roboters automatisch erfolgen. Das dem stromabwärts gelegene Ende der Zufördereinrichtung 83, 84 zugewandte, zweite Anschlagelement 103b dient dazu, dass ein vereinzelter Hilfsteiletransportträger 87 in einer Übergabeposition 104; 104' angehalten wird, von der ein Teil 1; 2 an eine Übernahmeposition 106; 106' der Transporteinrichtung 46 übergeben wird. Danach fährt der leere Hilfsteiletransportträger 87 aus der Übergabeposition 104; 104' heraus und wird dieser für die neuerliche Beladung hinter dem Anschlagelement 103a gestaut. Gleichzeitig wird das erste Anschlagelement 103a angesteuert und ein mit einem Teil 1; 2 beladener Hilfsteiletransportträger 87 in die Übergabeposition 104; 104' verfahren. Die Übergabepositionen 104; 104' sind im Nahbereich der Transporteinrichtung 46 angeordnet.

Wie aus Fig. 3 weiters ersichtlich, ist im Übernahmebereich 44 ein dem stromabwärts gelegenen Ende der Zufördereinrichtung 83 zugeordnetes, erstes Handhabungssystem 105 mit einem im Raum verstellbaren Greifer (nicht dargestellt) angeordnet, mittels dem der in der Übergabeposition 104 am Hilfsteiletransportträger 87 bereitgestellte, erste Teil 1 von der Aufnahme 95 entnommen, einer Übernahmeposition 105 an der Transporteinrichtung 46 zugeführt und an der Aufnahme 51 des Teiletransportträgers 48 der Transporteinrichtung 46 in der Lage orientiert abgelegt wird. Zuvor wird ein leerer Teiletransportträger 46 in die Übernahmeposition 105 verfahren und in dieser angehalten, sodann mit dem ersten Teil 1 beladen. Nach dem Beladen eines Teiletransportträgers 46, wird dieser von der ersten Übernahmeposition 106 in die zweite Übernahmeposition 106' verfahren, dort angehalten und mit dem zweiten Teil 2 beladen.

Dazu ist, wie in der Fig. 3 weiters eingetragen, im Übernahmebereich 44 ein dem stromabwärts gelegenen Ende der Zufördereinrichtung 84 zugeordnetes, zweites Handhabungssystem 107 mit einem im Raum verstellbaren Greifer (nicht dargestellt) angeordnet. Der in der Übergabeposition 104' am Hilfsteiletransportträger 87 bereitgestellte, zweite Teil 2 wird mittels dem zweiten Handhabungssystem 107 bzw. Greifer von der Aufnahme 95 entnommen, einer Übernahmeposition 106' an der Transporteinrichtung 46 zugeführt und auf den Auflagefortsätzen 8 zwischen den Schenkeln 6 des sich bereits auf dem Teiletransportträger 48 befindlichen, ersten Teiles 1 in der Lage orientiert abgelegt.

Wie in der Fig. eingetragenen, wird der Teil 1, 2, bevor er in die Übernahmeposition 106, 106' an der Aufnahme 51 oder den Auflagefortsätzen 8 des ersten Teiles 1 abgesetzt wird, um 90° gedreht.

Daher wird der zweite Teil 2 nicht unmittelbar an der Aufnahme 51 eines Teiletransportträgers 48 abgelegt, sondern in der Lage orientiert zwischen den Schenkeln 6 des ersten Teiles 1 an den Auflagefortsätzen 8. Dadurch können zusätzliche Aufbauten am Teiletransportträger 48 entfallen, das gesamte Gewicht der Transportkette 52 reduziert und die Vorschubgeschwindigkeit der Teiletransportträger 48 mit Aufnahmen 51 erhöht werden.

Wie aus Fig. 3 weiters ersichtlich, sind die Zufördereinrichtungen 83, 84 zu beiden Seiten der Transporteinrichtung 46 gegenüberliegend und in Vorschubrichtung - gemäß Pfeil 65 - der Teiletransportträger 48 hintereinander angeordnet. Die Übergabe- und Übernahmepositionen 104, 104', 106, 106' sind ebenso in Vorschubrichtung - gemäß Pfeil 65 - der Teiletransportträger 48 hintereinander ausgebildet. Natürlich können die Zufördereinrichtungen 83, 84 auch spiegelbildlich gegenüberliegen (nicht gezeigt). Nach dieser Ausführung genügt ein Handhabungssystem 105, das beiden Zufördereinrichtungen 83, 84 zugeordnet ist und mittels dem die Teile 1, 2 von den Übergabepositionen 104, 104' an nur eine Übernahmeposition 106 nacheinander zugeführt und am Teiletransportträger 48 abgelegt werden.

Eine andere nicht gezeigte Ausführung besteht darin, dass die Teile 1, 2 gemeinsam als Teilegruppe der Teilebereitstellung zugeführt werden. Diese Ausführung hat den Vorteil, dass nur noch ein Handhabungssystem 105 nötig ist und die Teilebereitstellung nur noch einen Teilespeicher 49 umfasst, der wie oben beschrieben ausgebildet ist.

Die mittels Hilfsteiletransportträger 87 in der Übergabeposition 104 bereitgestellte Teilegruppe wird vom Handhabungssystem 105 bzw. Greifer von der Aufnahme 95 entnommen, der Übernahmeposition 105 an der Transporteinrichtung 46 zugeführt und an der Aufnahme 51 des Teiletransportträgers 48 der Transporteinrichtung 46 in der Lage orientiert abgelegt wird.

Wie aus der obigen Erläuterung erkennbar, werden die Teiletransportträger 48 der Transporteinrichtung 46 von der Teilebereitstellung taktweise aufeinander folgend mit den Teilen 1, 2 oder Teilegruppen beladen.

Nachdem die miteinander zu fügenden Teile 1, 2 oder fügende Teilegruppe auf einen der Teiletransportträger 48, insbesondere dessen Aufnahme 51, in der Lage orientiert abgelegt wurden, wird dieser in die zur Teilebereitstellung, insbesondere deren Übergabepositionen 104, 104', entfernt gelegene, erste Fügestation 43 transportiert und in einer Halteposition 110 angehalten.

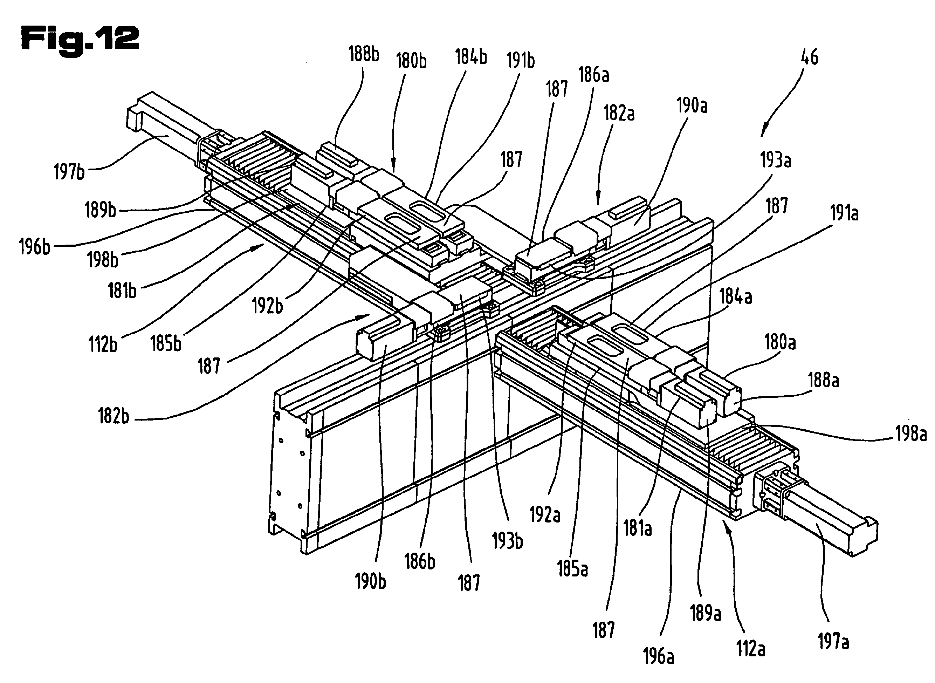

Die Fügestation 43, insbesondere Schweißstation, ist zwischen dem Übernahme- und Weitergabebereich 44, 45 angeordnet und umfasst im Nahbereich eines Transportabschnittes der Transporteinrichtung 46 ein Spannsystem 111, Zustellachsen 112a, 112b, wenigstens eine Höhenpositioniervorrichtung (nicht eingetragen) sowie wenigstens eine vereinfacht dargestellte Fügeeinrichtung zum Fügen der Teile 1, 2 zu einer Baugruppe. Das Spannsystem 111 umfasst drei noch näher zu beschreibende Spanneinheiten 114, 115, 116. Die Zustellachsen 112a, 112b sind als Linearantriebe ausgebildet, wie in Fig. 12 näher dargestellt. Die Fügeeinrichtung ist nach dieser Ausführung als Schweißvorrichtung 119 mit zumindest einem Strahlschweißkopf 121 zum Fügen der Teile 1, 2 ausgebildet.

Die über den Teiletransportträger 48 in die Schweißstation gemeinsam angelieferten Teile 1, 2 werden mittels den Spanneinheiten 114 bis 116 und/oder wenigstens einer Höhenpositioniervorrichtung gemeinsam aus einer am Teiletransportträger 48 befindlichen Transportstellung in vom Teiletransportträger 48 losgelöste Bereitstellungspositionen bewegt, insbesondere vertikal geringfügig angehoben, sodass die Positionieröffnung 7 und ein Positioniermittel 80 des Teiletransportträgers 48 außer Eingriff sind. Danach werden die Teile 1, 2 zueinander positioniert, gegeneinander gespannt und darauffolgend gefügt, insbesondere mittels dem Strahlschweißkopf 121 der Schweißvorrichtung 119 an den Fügestellen 17a, 17b zumindest in Teilabschnitten miteinander verschweißt oder geklebt. Diese vorgefertigte Baugruppe 122 aus den verschweißten Teilen 1, 2 wird wiederum auf den, vorzugsweise während der Dauer des Fügeprozesses in der Halteposition 110 verharrenden Teiletransportträger 48 abgelegt, sodann in den ersten Weitergabebereich 45 abtransportiert.

Im Weitergabebereich 45 ist ein drittes Handhabungssystem 123 mit einem im Raum frei bewegbaren Greifer (nicht dargestellt) und eine Schlechtteilebox 124 angeordnet. Der die vorgefertigte Baugruppe 122 aufnehmende Teiletransportträger 48 wird im Weitergabebereich 45 in einer Endposition 125 angehalten und in dieser mittels dem Handhabungssystem 123 bzw. Greifer die Baugruppe 122 vom Teiletransportträger 48 entnommen und der zweiten Fertigungsanlage 33 oder der Schlechtteilebox 124 zugeführt.

Wie im Nachfolgenden noch beschrieben wird, erfolgt nämlich in der Fügestation 43 anhand eines Soll-Istwert-Vergleiches der Spannkraft und/oder des Verfahr- und/oder Spannweges einer jeden einzelnen Spanneinrichtung der Spanneinheiten 114 bis 116 eine Erfassung der Qualitätsmerkmale, insbesondere der Maßhaltigkeit, der einzelnen Teile 1, 2. Diese Qualitätsmerkmale werden im Vergleichsmodul 39 mit Qualitätsanforderungen verglichen und im Auswertemodul 40 ausgewertet. Entspricht einer der Teile 1, 2 nicht den Qualitätsanforderungen, beispielsweise ist einer der Teile 1, 2 zu lang, zu kurz, zu schmal oder zu breit, wie dies während dem Spannvorgang jedes Teiles 1, 2 ermittelt wird, werden die Teile 1, 2 erst gar nicht miteinander gefügt, sondern von den Spanneinheiten 114 bis 116 bzw. der Höhenpositioniervorrichtung wiederum auf einen Teiletransportträger 48 abgelegt und über die Transporteinrichtung 46 zum Handhabungssystem 123 und darauffolgend über dieses in die Schlechtteilebox 124 transportiert.

Entsprechen die Teile 1, 2 jedoch den Qualitätsanforderungen, wie diese während dem Spannvorgang erfasst werden, werden die Teile 1, 2 miteinander verschweißt und über die Transporteinrichtung 46 zum Handhabungssystem 123 und über dieses vom Weitergabebereich 45 zu einem zweiten Übernahmebereich 126 der zweiten Fertigungsanlage 33 transportiert.

Die zweite Fertigungsanlage 33 umfasst ein zweites Transportsystem 127 und zumindest eine zweite Fügestation 128, die nach dieser Ausführung durch eine Schweißstation gebildet ist. Das Transportsystem 127 dient der Beförderung der von der ersten Fertigungsanlage 32 vorgefertigten, gefügten Baugruppen 122 sowie von weiteren Teilen 3a, 3b, die ihrerseits mit der vorgefertigten Baugruppe 122 gefügt werden.

Dazu weist das zweite Transportsystem 127 eine sich zwischen dem zweiten Übernahmebereich 126 und einem zweiten Weitergabebereich 129 vorzugsweise geradlinig erstreckende, zweite Transporteinrichtung 130 mit entlang von in dieser Fig. nicht eingetragenen Führungsbahnen verfahrbaren und vorzugsweise gleichartig ausgebildeten Teiletransportträgern 48', sowie eine Teilebereitstellung auf. Die zweite Transporteinrichtung 130 weist wiederum eine Vielzahl von Teiletransportträgern 48' auf, die ihrerseits mit der bereits oben ausführlich beschriebenen Aufnahme 51' und zwei weiteren Aufnahmen 131a, 131b für die Teile 3a, 3b versehen sind.

Die Teilebereitstellung für die Teile 3a, 3b ist nach dieser Ausführung durch zwei Vorrichtungen 132, 133 zum Vereinzeln, Fördern und Ausrichten von in einem Behälter 134 als Schüttgut aufgenommenen Teile 3a, 3b gebildet. Diese Vorrichtung 133, 134 umfasst einen Teilespeicher 135 für die Teile 3a, 3b. Eine derartige Vorrichtung 133, 134 ist beispielsweise aus der DE 40 25 391 A1 oder DE 41 26 689 A1 bekannt.

Wie aus Fig. 3 weiters ersichtlich, werden die aus dem Behälter 134 entnommenen Teile 3a mittels der Vorrichtung 132 bis zu einer Übergabeposition 136 am Teilespeicher 135 gefördert. Im zweiten Übernahmebereich 126 ist ein dem stromabwärts gelegenen Ende des Teilespeichers 135 zugeordnetes, erstes Handhabungssystem 137 mit einem im Raum verstellbaren Greifer (nicht dargestellt) angeordnet, mittels dem ein in der Übergabeposition 136 des Teilespeichers 135 bereitgestellter, vereinzelter, dritter Teil 3a entnommen, einer Übernahmeposition 138 an der zweiten Transporteinrichtung 130 zugeführt und an der Aufnahme 131 a des Teiletransportträgers 48' der Transporteinrichtung 130 in der Lage orientiert abgelegt wird. Zuvor wird ein bereits mit der Baugruppe 122 beladener Teiletransportträger 48' in die Übernahmeposition 138 verfahren und in dieser angehalten, sodann mit dem dritten Teil 3a beladen. Nach dem Beladen des Teiletransportträgers 48', wird dieser von der Übernahmeposition 138 in die weitere Übernahmeposition 138' verfahren, dort angehalten und mit dem vierten Teil 3b beladen.

Dazu ist im Übernahmebereich 126 ein dem stromabwärts gelegenen Ende der Vorrichtung 133 zugeordnetes, zweites Handhabungssystem 139 mit einem im Raum verstellbaren Greifer (nicht dargestellt) angeordnet. Mittels der Vorrichtung 133 werden die aus dem Behälter 134 entnommenen Teile 3b bis zu einer Übergabeposition 136' am Teilespeicher 135 gefördert. Der in der Übergabeposition 136' bereitgestellte, vereinzelte, vierte Teil 3b wird mittels dem zweiten Handhabungssystem 139 bzw. Greifer von dieser entnommen, einer Übernahmeposition 138' an der zweiten Transporteinrichtung 130 zugeführt und an der Aufnahme 131b des Teiletransportträgers 48' der Transporteinrichtung 130 in der Lage orientiert abgelegt.

Wie aus Fig. 3 ersichtlich, sind die Vorrichtungen 132, 133 zu beiden Seiten der Transporteinrichtung 130 gegenüberliegend und in Vorschubrichtung - gemäß Pfeil 140 - der Teiletransportträger 48' hintereinander angeordnet. Die Übergabe- und Übernahmepositionen 136, 136', 138, 138' sind ebenso in Vorschubrichtung - gemäß Pfeil 140 - der Teiletransportträger 48' hintereinander ausgebildet. Natürlich können die Vorrichtungen 132, 133 auch spiegelbildlich gegenüberliegen (nicht gezeigt). Nach dieser Ausführung genügt ein Handhabungssystem 137, das beiden die Vorrichtungen 132, 133 zugeordnet ist und mittels dem die Teile 3a, 3b von den Übergabepositionen 136, 136' an nur eine Übernahmeposition 138 nacheinander zugeführt und am Teiletransportträger 48' abgelegt werden.

Die Transportteileträger 48' werden zwischen dem zweiten Übernahme- und Weitergabebereich 126, 129 in Vorschubrichtung - gemäß Pfeil 140 - getaktet fortbewegt. Nachdem ein Teil 3a an der Aufnahme 131 a abgelegt wurde, werden die Teiletransportträger 48' weiterbewegt, sodass der Teiletransportträger 48' von der einen Übernahmeposition 138 zur anderen Übernahmeposition 138' der Teilebereitstellung bewegt wird.

Ist nun auch ein Teil 3b an der Aufnahme 131b abgelegt worden, werden die Teiletransportträger 48' weiterbewegt, sodass der mit einer vorgefertigten Baugruppe 122 und dem dritten und vierten Teil 3a, 3b beladene Teiletransportträger 48' von der Übemahmeposition 138' der Teilebereitstellung gemeinsam zur Fügestation 128, insbesondere der Schweißstation, transportiert und in dieser in einer Halteposition 142 angehalten werden.

Die zweite Fügestation 128, insbesondere Schweißstation, ist zwischen dem zweiten Übernahme- und Weitergabebereich 126, 129 angeordnet und umfasst im Nahbereich eines Transportabschnittes der Transporteinrichtung 130 ein Spannsystem 143, zwei Höhenpositioniervorrichtungen (nicht eingetragen) sowie wenigstens eine vereinfacht dargestellte Fügeeinrichtung zum Fügen der Teile 1, 2 zu einer Baugruppe. Das Spannsystem 143 umfasst eine noch näher zu beschreibende Spanneinheit 144. Die Fügeeinrichtung ist nach dieser Ausführung als Schweißvorrichtung 145 mit zumindest zwei getrennt angesteuerten Strahlschweißköpfen 146a, 146b zum Fügen der Teile 3a, 3b ausgebildet.

In der Halteposition 142 des Transportteileträgers 48' werden die Teile 3a, 3b und die vorgefertigte 122 Baugruppe gemeinsam aus einer am Teiletransportträger 48' befindlichen Transportstellung in eine vom Teiletransportträger 48' losgelöste Bereitstellungsposition zwischen Spanneinrichtungen der Spanneinheit 144 bewegt, insbesondere angehoben, sodann die Baugruppe 122 und die Teile 3a, 3b zueinander positioniert, gegeneinander gespannt und darauffolgend gefügt, insbesondere mittels den Strahlschweißköpfen 146a, 146b der Schweißvorrichtung 145 an den Fügestellen 18a, 18b,18c; 19a, 19b zumindest in Teilabschnitten miteinander verschweißt oder geklebt und danach wiederum auf den vorzugsweise während der Dauer des Fügeprozesses in der Halteposition 142 verharrenden Teiletransportträger 48' abgelegt. Danach wird die gefügte Baugruppe 147 über die Transporteinrichtung 130 zu den zweiten Weitergabebereich 129 transportiert.

Im zweiten Weitergabebereich 129 ist ein drittes Handhabungssystem 148 mit einem im Raum frei bewegbaren Greifer (nicht dargestellt) und eine Schlechtteilebox 149 angeordnet. Der die fertigte Baugruppe 147 aufnehmende Teiletransportträger 48' wird im Weitergabebereich 129 in einer Endposition 150 angehalten und in dieser mittels dem Handhabungssystem 148 bzw. Greifer die Baugruppe 147 vom Teiletransportträger 48' entnommen und einer Abfördervorrichtung 151 oder der Schlechtteilebox 149 zugeführt.

Wie im Nachfolgenden noch beschrieben wird, erfolgt nämlich in der Fügestation 128 anhand eines Soll-Istwert-Vergleiches der Spannkraft und/oder des Verfahr- und/oder Spannweges einer jeden einzelnen Spanneinrichtung der Spanneinheit 144 eine Erfassung der Qualitätsmerkmale, insbesondere der Maßhaltigkeit, der einzelnen Teile 3a, 3b. Diese Qualitätsmerkmale werden im Vergleichsmodul 39 mit Qualitätsanforderungen verglichen und im Auswertemodul 40 ausgewertet. Entspricht einer der Teile 3a, 3b nicht den Qualitätsanforderungen, beispielsweise ist einer der Teile 3a, 3b unzulässig verbogen, wie dies während dem Spannvorgang jedes Teiles 3a, 3b ermittelt wird, werden die Teile 1, 2, 3a, 3b erst gar nicht miteinander gefügt, sondern von der Spanneinheit 144 bzw. den Höhenpositioniervorrichtungen wiederum auf einen Teiletransportträger 48' abgelegt und über die Transporteinrichtung 130 zum Handhabungssystem 148 und darauffolgend über dieses in die Schlechtteilebox 149 transportiert.

Entsprechen die Teile 3a, 3b jedoch den Qualitätsanforderungen, wie die während dem Spannvorgang ermittelt wird, werden die Teile 1, 2, 3a, 3b miteinander verschweißt und über die Transporteinrichtung 130 zum Handhabungssystem 148 und über dieses vom Weitergabebereich 29 zur Abfördervorrichtung 151 transportiert.

Gemäß dem erfindungsgemäßen Fertigungssystem 31 und Fertigungsverfahren ist es nun vorgesehen, dass dem Strahlschweißkopf 121der ersten Schweißstation und den Strahlschweißköpfen 146a, 146b der zweiten Schweißstation die Laserstrahlung von nur einer die Energiequelle 34 bildenden Strahlquelle, beispielsweise einem Lasergenerator, abwechselnd zugeführt wird. Der Strahlschweißkopf 121 der ersten Schweißstation und die Strahlschweißköpfe 146a, 146b der zweiten Schweißstation sind mit einer gemeinsamen Laserstrahlquelle jeweils über einen Lichtwellenleiter (L1, L2, L3) und über eine Strahlweiche (nicht dargestellt) verbunden. Der Lichtwellenleiter (L1) führt zum Strahlschweißkopf 121, der Lichtwellenleiter (L2) zum Strahlschweißkopf 146a und der Lichtwellenleiter (L3) zum Strahlschweißkopf 146b. Die Laserstrahlquelle verfügt über ein nicht dargestelltes Spiegelsystem, mit dem die von der Laserstrahlquelle abgestrahlte Laserstrahlung in den entsprechenden Lichtwellenleiter (L1; L2; L3) und wahlweise in die unterschiedlichen Strahlschweißköpfe 110, 146a, 146b entweder zur ersten Schweißstation oder zur zweiten Schweißstation eingekoppelt bzw. eingespiegelt wird.

Nach dem Fertigungsverfahren werden innerhalb eines ersten Zeitintervalls zwei Teile 1, 2 zur ersten Schweißstation antransportiert und eine geschweißte Baugruppe 122 des vorangegangenen Zyklus von der ersten Schweißstation abtransportiert und währenddessen in der zweiten Schweißstation eine in der ersten Fertigungsanlage 32 vorangegangen geschweißte Baugruppe 122 und ein von der zweiten Teilebereitstellung zugeführter, dritter Teil 3a zueinander positioniert und gespannt sowie zur fertigen Baugruppe 147 geschweißt. Innerhalb eines zweiten Zeitintervalls werden in der ersten Fertigungsanlage 32 zwei von der ersten Teilebereitstellung zugeführte Teile 1, 2 zueinander positioniert, gespannt und zur Baugruppe 122 geschweißt und währenddessen in der zweiten Fertigungsanlage 33 eine in der ersten Fertigungsanlage 32 vorangegangen geschweißte Baugruppe 122 zur zweiten Schweißstation der zweiten Fertigungsanlage 33 antransportiert und eine in der zweiten Schweißstation der zweiten Fertigungsanlage 33 fertig geschweißte Baugruppe 147 des vorangegangenen Zyklus an den zweiten Weitergabebereich 129 abtransportiert.

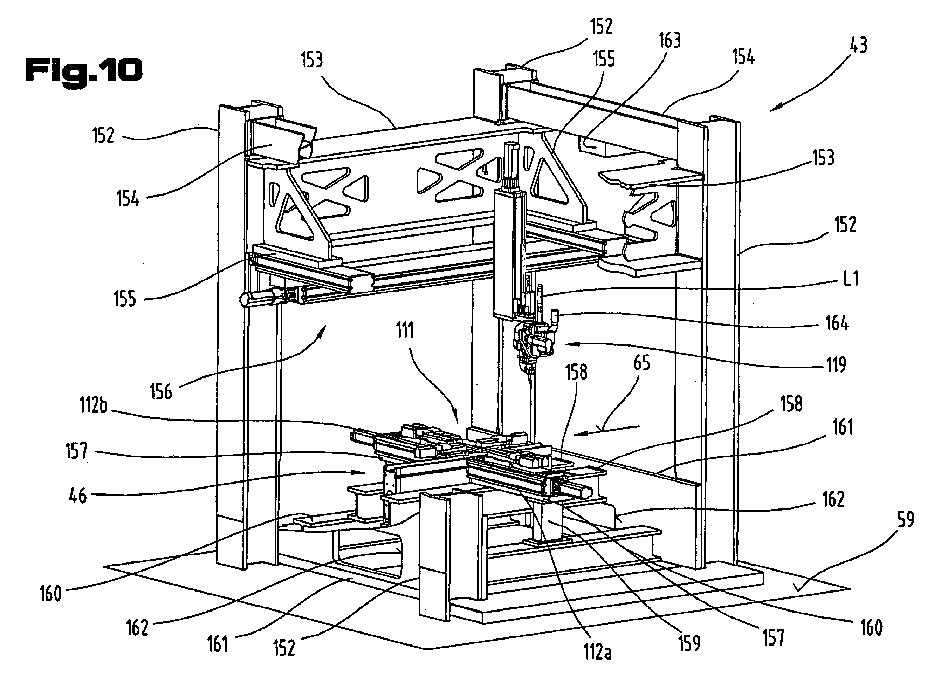

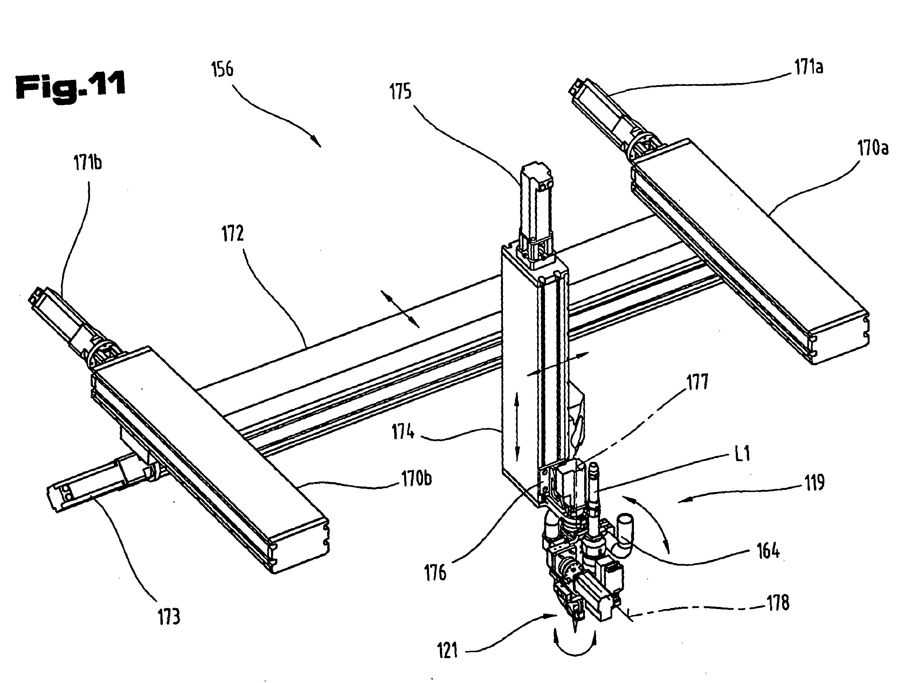

In der Fig. 10 ist die Fügestation 43 bzw. Schweißstation mit der(m) nur teilweise dargestellten Transporteinrichtung 46 und Spannsystem 111 sowie der Schweißvorrichtung 119 gezeigt, wobei die Umkleidung entfernt ist. Die Schweißstation umfasst eine aus vier vertikal auf die Aufstandsfläche 59 ausgerichtete Steher 152 und einen diese verbindenden Rahmen bestehende Tragkonstruktion. Der Rahmen umfasst zwei parallel zur Vorschubrichtung - gemäß Pfeil 65 - der Transporteinrichtung 46 verlaufende Portale 153 und zwei zu diesen quer verlaufende Portale 154 auf. Die Portale 153, 154 sind über Schrauben mit den Stehern 152 lösbar verbunden. Ein Portal 153 ist mit Konsolen 155 versehen, an dem ein in Fig. 11 näher dargestelltes Antriebssystem 156 befestigt ist, über welches die Schweißvorrichtung 119 am Rahmen verstellbar gelagert ist. Zusätzlich umfasst die Tragkonstruktionen einen Grundrahmen, der zu beiden Seiten der Transporteinrichtung 46 Montageplatten 157 umfasst, an denen die Zustellachsen 112a, 112b lösbar befestigt sind. Die Montageplatten 157 sind mit ihren aufeinander zugewandten Enden auf parallel zur Vorschubrichtung - gemäß Pfeil 65 - der Transporteinrichtung 46 und unmittelbar benachbart zu dieser verlaufenden Tragprofilen 158 und mit ihren voneinander abgewandten Enden über Stützkonsolen 159 an parallel zur Vorschubrichtung - gemäß Pfeil 65 - der Transporteinrichtung 46 verlaufenden, weiteren Tragprofilen 160 befestigt. Zur Versteifung der Tragkonstruktion sind außerdem noch zwei die Steher 152 im Fußbereich miteinander verbindende Trägerplatten 161 vorgesehen. Diese Trägerplatten 161 sind zum Durchtritt des rücklaufenden Trums der Transportkette 52 der Transporteinrichtung 46 mit einer Aussparung 162 versehen.

Wie aus der Zusammenschau der Fig. 3 und 10 ersichtlich, ist die Fügestation 43 mit einer Anschlussschnittstelle 163 versehen, die eine Datenschnittstelle, einen Anschluss für ein Absaugrohr 164, einen Anschluss für elektrische und/oder mechanische und/oder optische Energie, und/oder einen Anschluss für einen Lichtwellenleiter (L1, L2, L3) versehen ist. Das Absaugrohr 164 ist über die Anschlussschnittstelle 163 mit einem nicht dargestellten Entlüftungssystem und der Lichtwellenleiter (L1, L2, L3) über die Anschlussschnittstelle 163 mit der Energiequelle 34 verbunden. Außerdem ist die Anschlussschnittstelle 163 ihrerseits mit einer elektrischen und/oder mechanischen Energiequelle 36 und/oder Steuereinrichtung 37 verbunden. Natürlich kann der Lichtwellenleiter (L1, L2, L3) auch unmittelbar mit der optischen Energiequelle 34 verbunden sein.

Fig. 11 zeigt das Antriebssystem 156 dargestellt, mit der der Strahlschweißkopf 121 der Schweißvorrichtung 119 im Raum bewegt werden kann. Das Antriebssystem 156 umfasst zwei an den in Fig. 10 eingetragenen Konsolen 155 des Rahmens ortsfest angeordnete Linearantriebe 170a, 170b mit über jeweils einen stufenlos steuerbaren Elektromotor 171a, 171b, insbesondere Servo- oder Schrittschaltmotor, synchron verstellbaren Schlitten (nicht ersichtlich), und einen an den Schlitten befestigten, dritten Linearantrieb 172 mit über einen stufenlos steuerbaren Elektromotor 173, insbesondere Servo- oder Schrittschaltmotor, verstellbaren Schlitten (nicht ersichtlich), sowie einen an diesem Schlitten befestigten, vierten Linearantrieb 174 mit über einen stufenlos steuerbaren Elektromotor 175, insbesondere Servo- oder Schrittschaltmotor, vertikal verstellbaren Schlitten (nicht ersichtlich), der mit dem Schlitten des dritten Linearantriebes 172 verbunden ist. Die Schweißvorrichtung 119 ist über eine Befestigungsvorrichtung 176 am unteren Ende des vierten Linearantrieb 174 montiert und mittels dem ersten/zweiten Linearantrieb 170a, 170b quer zur Vorschubrichtung der Transporteinrichtung 46 (in Fig. 10 eingetragen) und mittels dem dritten Linearantrieb 172 in Vorschubrichtung der Transporteinrichtung 46 sowie mittels dem vierten Linearantrieb 174 in vertikaler Richtung verstellbar ausgebildet. Der Strahlschweißkopf 121 ist zusätzlich noch um eine vertikale Schwenkachse 177 und um eine parallel zum ersten/zweiten Linearantrieb 170a, 170b verlaufende Schwenkachse 178 verschwenkbar an der Befestigungsvorrichtung 176 gelagert. Der Strahlschweißkopf 121 ist um die vertikale Achse 177 sowie um die horizontale Achse 178 jeweils um ca. 270° verschwenkbar.

In den gemeinsam beschriebenen Fig. 12 bis 17 ist ein Teilbereich der Transporteinrichtung 46 und des Spannsystems 111 der ersten Fügestation 43 stark vereinfacht und in unterschiedlichen Ansichten gezeigt. Aus Gründen der besseren Übersicht sind die Teiletransportträger 48 in den Fig. nicht dargestellt.

Die Fig. 12 zeigt dabei das Spannsystem 111 in Rüststellung, in der die noch näher zu beschreibenden Tragrahmen und Spannwerkzeuge der Spanneinheiten 114 bis 116 von Antriebseinheiten 180a bis 182b der Spanneinheiten 114 bis 116 abgebaut sind. Die Antriebseinheiten 180a bis 182b weisen jeweils einen mittels Elektromotor 188a bis 190b angesteuerten Linearantrieb 184a bis 186b und eine Rüstplattform 187 auf. Die Linearantriebe 184a bis 186b umfassen jeweils einen in einer horizontalen Ebene verstellbaren Schlitten 191a bis 193b, auf dem eine Rüstplattform 187 befestigt ist. Nach gezeigter Ausführung ist die Rüstplattform 187 durch den Schlitten 191a bis 193b gebildet.

Die Zustellachsen 112a, 112b sind ebenso durch Linearantriebe 196a, 196b gebildet, die von Elektromotoren 197a bis 197b angesteuert sind und jeweils einen in einer horizontalen Ebene verstellbaren Schlitten 198a, 198b umfassen.

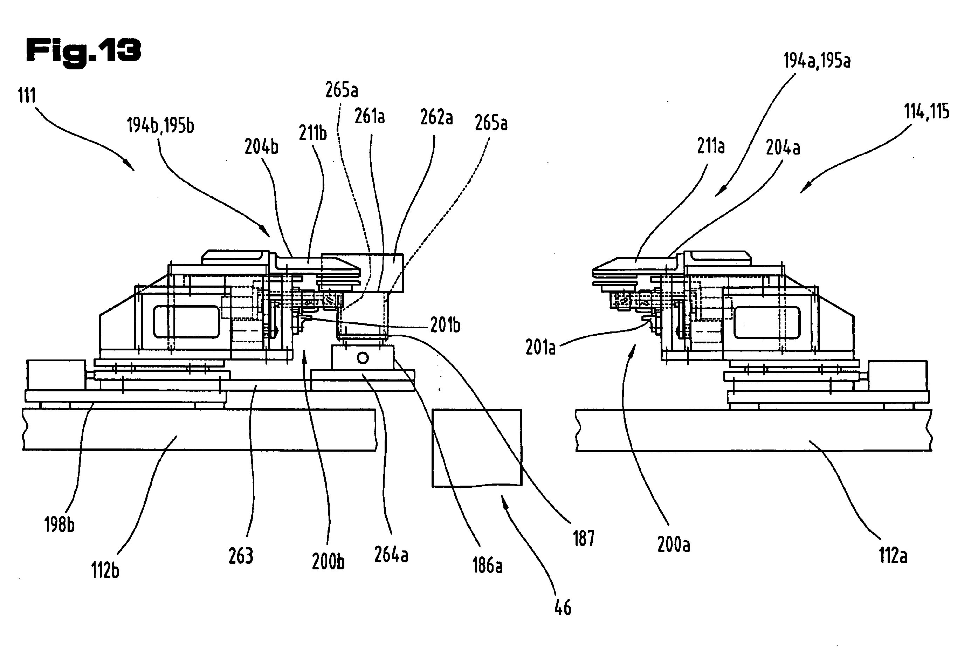

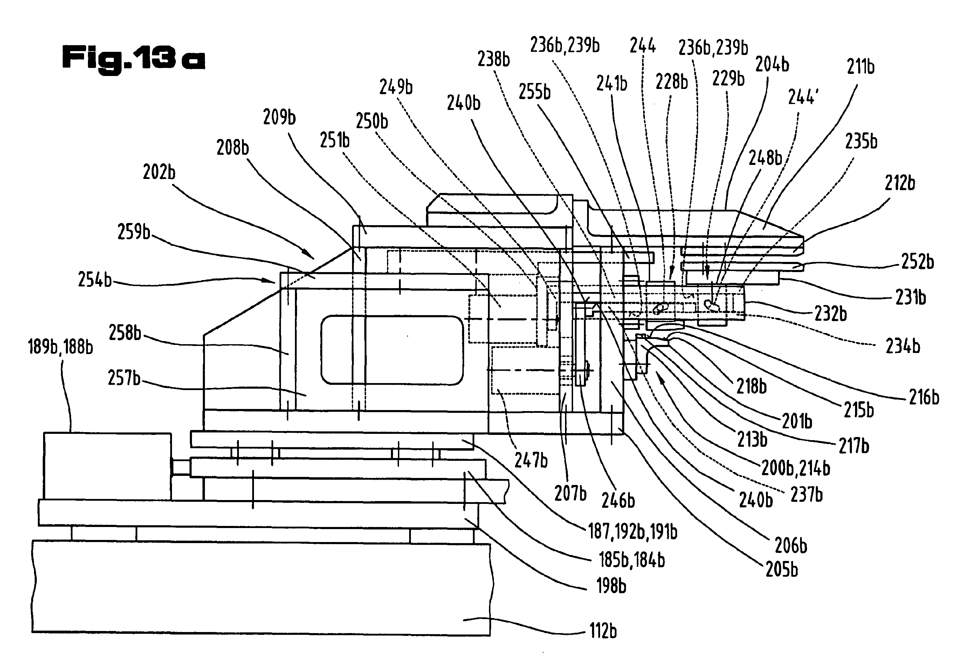

Wie nun in den Fig. 13 bis 14a dargestellt, umfassen die erste und zweite Spanneinheit 114, 115 des Spannsystems 111 zu beiden Seiten des geradlinigen Transportabschnittes der Transporteinrichtung 46 angeordnete und über die Antriebseinheiten 180a, 180b quer zur Vorschubrichtung - gemäß Pfeil 46 - der Teiletransportträger 48 gegebenenfalls synchron verstellbare, zusammenwirkende Spanneinrichtungen 194a bis 195b.

Die Spanneinrichtungen 194a, 194b der ersten Spanneinheit 114 umfassen jeweils die Antriebseinheit 180a, 180b, eine Höhenpositioniervorrichtung 200a, 200b, ein Spannwerkzeug 201a, 201b, einen Tragrahmen 202a, 202b, eine Anpressvorrichtung 203a, 203b zur Fixierung der Teile 1, 2 zwischen den Spanneinrichtungen 194a, 194b und ein Widerlager 204a, 204b. Das Spannwerkzeug 201a, 201b ist über den Tragrahmen 202a, 202b mit der Rüstplattform 187 der Antriebseinheit 180a, 180b verbunden. Die Tragrahmen 202a, 202b der Spanneinrichtungen 194a, 194b umfassen jeweils eine an der Rüstplattform 187 befestigte, untere Montageplatte 205a, 205b, an dieser befestigte Tragwände 206a bis 208b, eine mit diesen an der Oberseite verbundene, obere Montageplatte 209a, 209b sowie eine an dieser befestigte Tragplatte 210a, 210b. Das Widerlager 204a, 204b ist mit der Tragplatte 210a, 210b und der der Transporteinrichtung 46 zugewandten Tragwand 206a, 206b befestigt. Das Widerlager 204a, 204b umfasst einen Kragarm 211a, 211b, der auf seiner der Antriebseinheit 180a, 180b zugewandten Unterseite mir einer Spannbacke 212a, 212b versehen ist.

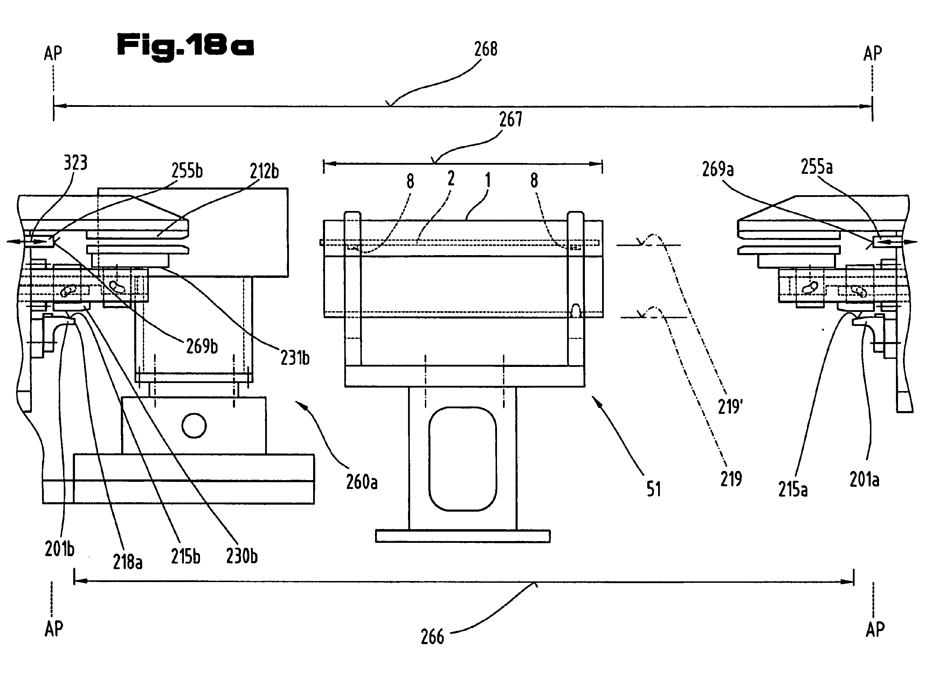

Die quer zur Vorschubrichtung - gemäß Pfeil 46 - der Teiletransportträger 48 gegebenenfalls synchron verstellbaren, zusammenwirkenden Spannwerkzeuge 201 a, 201 b der Spanneinrichtungen 194a, 194b sind aufeinander zugerichtet und am Tragrahmen 202a, 202b, insbesondere der vorderen Tragwand 206a, 206b befestigt. Jedes der Spannwerkzeuge 201a, 201b ist nach dieser Ausführung durch ein Auflagerelement 213a, 213b einer die Höhenpositioniervorrichtung 200a, 200b aufweisenden Hebevorrichtung 214a, 214b gebildet und ist als Winkelprofil ausgebildet. Der aufragende Schenkel des Winkelprofils ist mit der Tragwand 206a, 206b des Tragrahmens 202a, 202b verbunden, während der horizontale Schenkel an der Tragwand 206a, 206b senkrecht vorragt. Der horizontale Schenkel des Winkelprofils bzw. des Spannwerkzeuges 201a, 201b weist nach dieser Ausführung eine in Richtung der Transporteinrichtung 46 nach unten geneigte Auflaufschräge 215a, 215b, eine an diese anschließende, horizontale Auflagefläche 216a, 216b und ein Anschlagelement mit einer vertikalen Anschlagfläche 217a, 217b auf. Eine vordere Kante 218a, 218b der Spannwerkzeuge 201 a, 20 1 b ist knapp unterhalb einer Transportebene bzw. Transportstellung 219 des am Teiletransportträger 48 abgelegten, ersten Teiles 1 ausgebildet, wie in Fig. 18a dargestellt.

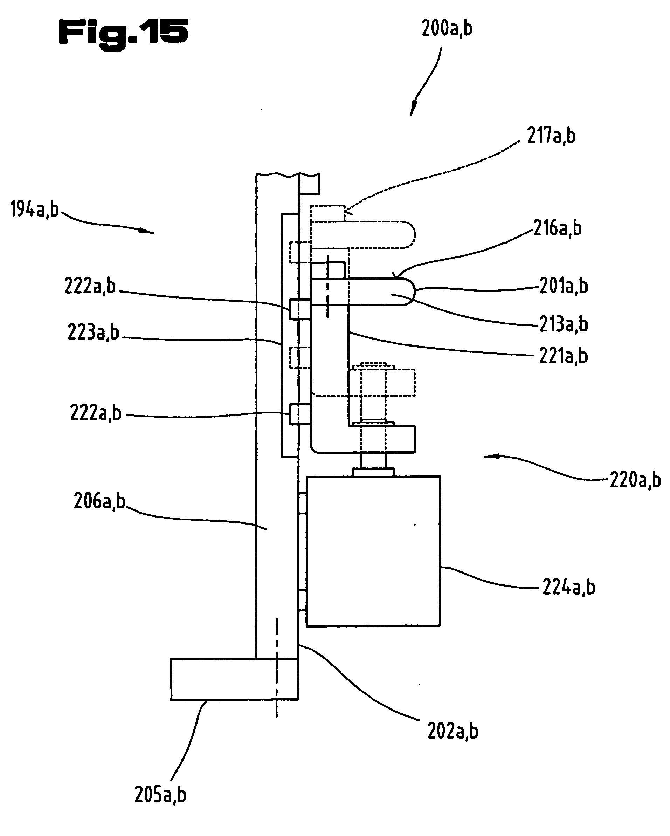

In Fig. 15 ist eine andere Ausführung der Höhenpositioniervorrichtung 200a, 200b der Spanneinrichtungen 194a, 194b und ein Teilabschnitt des Tragrahmens 202a, 202b stark vereinfacht gezeigt. Die Höhenpositioniervorrichtung 200a, 200b umfasst eine andere Ausführung einer Hebevorrichtung 220a, 220b. Diese Hebevorrichtung 220a, 220b weist einen Stellantrieb 224a, 224b und das die Teile 1, 2 zwischen einer Transportstellung und einer gegenüber dieser oberhalb oder unterhalb liegenden Bereitstellungsposition gemeinsam anhebende oder absenkende Auflagerelement 213a, 213b auf. Das Auflagerelement 213a, 213b ist durch das Spannwerkzeug 201a, 201b gebildet und ist mit diesem ein etwa L-formiges Schieberelement 221 a, 221 b verbunden. Das Schieberelement 221 a, 221 b ist über zumindest ein Führungsorgan 222a, 222b auf zumindest einer Führungsbahn 223a, 223b am Tragrahmen 202a, 202b, insbesondere an der Tragwand 206a, 206b geführt und über den Stellantrieb 224a, 224b entlang der Führungsbahn 223a, 223b im Wesentlichen vertikal verstellbar. Das Spannwerkzeug 201a, 201b kragt an der Führungsbahn 223a, 223b senkrecht vor. Der Stellantrieb 224a, 224b ist nach gezeigter Ausführung durch einen Elektro- oder Fluidantrieb gebildet und mit dem Auflagerelement 213a, 213b bzw. dem Schieberelement 221a, 221 b bewegungsmäßig gekoppelt.

Die Spannwerkzeuge 201a, 201b der Spanneinrichtung 194a, 194b sind zwischen einer Ausgangsstellung, wie in vollen Linien eingetragen, und einer ober- oder unterhalb liegenden Betätigungsstellung, wie in strichlierte Linien eingetragen, synchron verstellbar. Dabei wird über geeignete Mittel, beispielsweise eine mechanische Endlagenbegrenzung, die Ansteuerung des Stellantriebes 224a, 224b vorgenommen, sodass die Spannwerkzeuge 201a, 201b in deren Betätigungsstellung stets eine exakte Höhenposition einnehmen und ein zuverlässiger Spannvorgang des in dieser Figur nicht eingetragenen, ersten Teiles 1 erfolgen kann. Jedes Auflagerelement 213a, 213b bzw. Spannwerkzeug 201a, 201b weist nur eine horizontale Auflagefläche 216a, 216b und ein die vertikale Anschlagfläche 217a, 217b ausbildendes Anschlagelement auf.

Eine andere, nicht gezeigte Ausführung besteht darin, dass am Tragrahmen 202a, 202b, insbesondere an der vorderen Tragwand 206a, b ein Stellantrieb 224a, 224b in Form eines Linearantriebes befestigt ist, der einen Elektromotor und einen über eine an diesen angeflanschte Gewindespindel positioniert verstellbaren und entlang einer Führungsbahn geführten Schlitten umfasst. Das Spannwerkzeug 201a, 201b ist in diesem Fall am Schlitten befestigt.

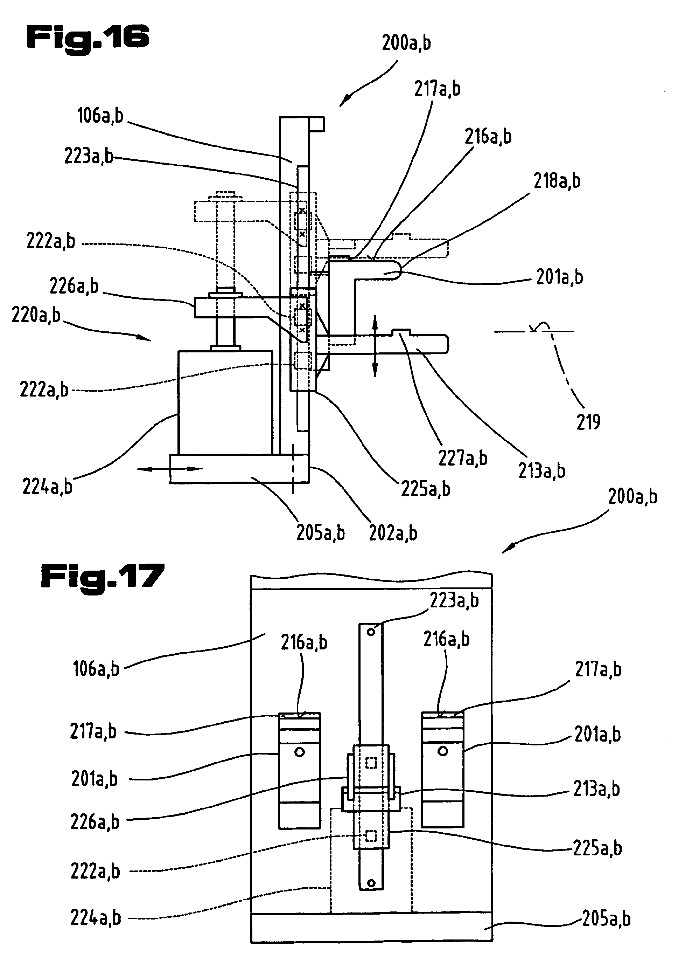

In den gemeinsam beschriebenen Fig. 16 und 17 ist eine weitere Ausführungsvariante der Höhenpositioniervorrichtung 200a, 200b der Spanneinrichtungen 194a, 194b in unterschiedlichen Ansichten gezeigt. Jede Spanneinrichtung 194a, 194b umfasst nach dieser Ausführung zwei Spannwerkzeuge 201a, 201b, von welchen jedes die Auflagefläche 217a, 217b und Anschlagfläche 216a, 216b ausbildet. Die Spannwerkzeuge 201a, 201b sind zu beiden Seiten der Führungsbahn 223a, 223b angeordnet und am Tragrahmen 202a, 202b befestigt. Nach dieser Ausführung sind die Höhenpositioniervorrichtung 200a, 200b bzw. die Hebevorrichtung 220a, 220b und das Spannwerkzeug 201a, 201b getrennt voneinander ausgebildet. Die Höhenpositioniervorrichtung 200a, 200b umfasst wiederum die Hebevorrichtung 220a, 220b, wovon letztere das die Teile 1, 2 (nicht dargestellt) zwischen einer am Teiletransportträger 48 befindlichen Transportstellung und einer gegenüber dieser ober- oder unterhalb liegende Bereitstellungsposition anhebende oder absenkende Auflagerelement 213a, 213b ausbildet. Demnach sind das Spannwerkzeug 201a, 201b und das Auflagerelement 213a, 213b voneinander getrennt und relativ zueinander verstellbar ausgebildet. Die Hebevorrichtung 220a, 220b umfasst zumindest ein Führungsorgan 222a, 222b, mittels dem das Auflagerelement 213a, 213b auf zumindest einer Führungsbahn 223a, 223b geführt und mittels einem Stellantrieb 224a, 224b entlang der Führungsbahn 223a, 223b gemäß eingetragenem Doppelpfeil vertikal verstellbar ist.

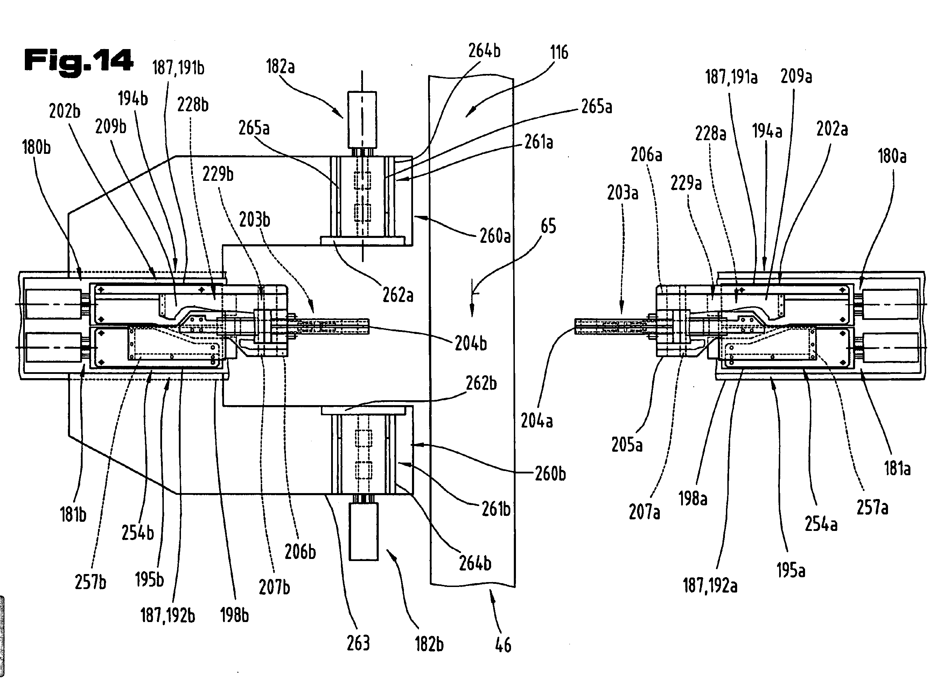

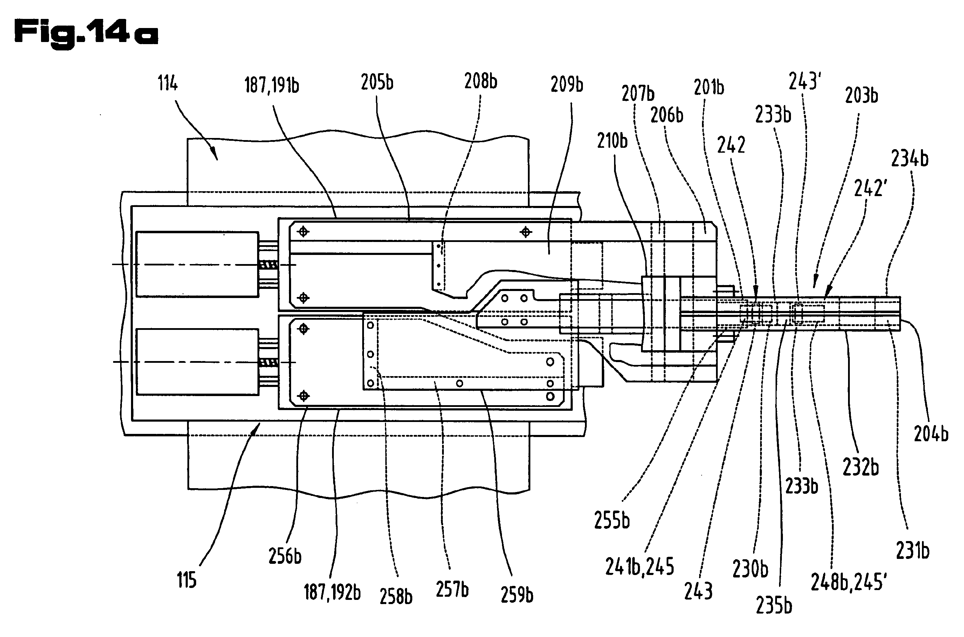

Das Führungsorgan 222a, 222b ist auf einem Schlitten 225a, 225b gelagert. Der Schlitten 225a, 225b ist über eine Konsole mit dem Auflagerelement 213a, 213b verbunden. Der Stellantrieb 224a, 224b ist seinerseits über ein Übertragungselement 226a, 226b mit dem Schlitten 225a, 225b bzw. Auflagerelement 213a, 213b bewegungsmäßig gekoppelt. Der Stellantrieb 224a, 224b ist durch einen Elektro- oder Fluidmotor gebildet. Das Auflagerelement 213a, 213b ragt mit seiner der Transporteinrichtung 46 (siehe Fig. 13 und 14) zugewandten Kante an der Kante 118a, 118b des Spannwerkzeuges 201a, 201b vor und weist an seiner Oberseite ein Anschlagelement 227a, 227b auf, um sicherzustellen, dass während dem Anheben der nicht dargestellten Teile 1, 2 der erste Teil 1 nicht mit dem Spannwerkzeug 201a, 201b kollidiert. Demnach ist das Anschlagelement 227a, 227b gegenüber die Kante 218a, 218b des Spannwerkzeuges 201a, 201b in Richtung zur Transporteinrichtung 46 versetzt angeordnet und überragt dessen vertikale Anschlagfläche die Kante 218a, 218b.

Das Auflageelement 213a, 213b ist aus einer Ausgangsstellung, wie in volle Linien eingetragen, in eine knapp oberhalb der Auflagefläche 216a, 216b des Spannwerkzeuges 201 a, 201b liegende Betätigungsstellung, wie in strichlierte Linien eingetragen, verstellbar ausgebildet. Die Auflageelemente 213a, 213b der Spanneinrichtungen 194a, 194b heben dabei einen auf diesen aufgelagerten Teil 1 gemeinsam mit dem Teil 2 an oder senken den Teil 1 gemeinsam mit dem Teil 2 ab. Nach dem Erreichen der Betätigungsstellung der Auflagerelemente 213a, 213b oder während dem Absenken derselben in Richtung der Ausgangsstellung, werden die Paare von Spannwerkzeugen 201a, 201b bzw. die Spanneinrichtungen . 194a, 194b aufeinander zugestellt, sodass ein Abstand zwischen den aufeinander zugewandten Kanten 218a, 218b der Spannwerkzeuge 201a, 201b geringer ist als die Länge des ersten Teiles 1 (nicht dargestellt). Werden nun die Auflagerelemente 213a, 213b mit den Teilen 1, 2 in Richtung der Ausgangsstellung nach unten bewegt, wird der Teil 1 gemeinsam mit dem Teil 2 an den in einer Ebene befindlichen Auflageflächen 216a, 216b der Spannwerkzeuge 201a, 201b abgesetzt. Die Auflagerelemente 213a, 213b werden bis in ihre Ausgangsstellungen zurückbewegt. Der Spannvorgang des Teiles 1 wird im Nachfolgenden noch näher beschrieben.

Eine andere nicht gezeigte Ausführung besteht darin, dass die Höhenpositioniervorrichtungen 200a, 200b bzw. die Hebevorrichtungen 220a, 220b mit den einen Teil 1 abstützenden Auflagerelementen 213a, 213b zu beiden Seiten der Transporteinrichtung 46 und getrennt von den Spanneinrichtungen 194a, 194b; 195a, 195b der Spanneinheiten 114, 115 ausgebildet und in der Fügestation 43 im Nahbereich der Spanneinheiten 114, 115 angeordnet sind.

Genauso gut ist es auch möglich, dass die Fügestation 43 im Nahbereich der Spanneinheiten 114, 115 nur eine Höhenpositioniervorrichtung 200a bzw. eine Hebevorrichtung 220a mit dem Auflagerelement 213a aufweist, mit dem beide Teile 1, 2 zwischen einer Transportstellung und Bereitstellungsposition gemeinsam angehoben oder abgesenkt werden.

Werden die Teile 1, 2 auf zwei Teiletransportträgern 48 getrennt von den Übernahmepositionen 106, 106' zur Halteposition 110 in die Fügestation 43 transportiert, ist einerseits eine erste Höhenpositioniervorrichtung für den ersten Teil 1 und andererseits eine zweite Höhenpositioniervorrichtung für den zweiten Teil 1 vorgesehen. Die Höhenpositioniervorrichtungen weisen jeweils die Hebevorrichtungen auf. Die erste Hebevorrichtung bildet ein den ersten Teil 1 zwischen einer am Teiletransportträger 48 befindlichen Transportstellung und einer gegenüber dieser ober- oder unterhalb liegende Bereitstellungsposition des ersten Teiles 1 anhebendes oder absenkendes, erstes Auflagerelement aus. Die zweite Hebevorrichtung bildet ein den zweiten Teil 2 zwischen einer am Teiletransportträger 48 befindlichen Transportstellung und einer gegenüber dieser ober- oder unterhalb liegende Bereitstellungsposition des zweiten Teiles 2 anhebendes oder absenkendes, zweites Auflagerelement aus. Im allgemeinen können die erste und zweite Höhenpositioniervorrichtung identisch aufgebaut sein. Dabei kann eine der Spanneinrichtungen 194a, 194b, 195a, 195 mit der zweiten Höhenpositioniervorrichtung oder beide Spanneinrichtungen 194a, 194b, 195a, 195 der Spanneinheiten 114, 115 mit jeweils einer zweiten Höhenpositioniervorrichtung ausgestattet sein. Andererseits kann auch die Fügestation 43 mit zumindest einer zweiten Höhenpositioniervorrichtung versehen sein, die getrennt von den Spanneinheiten 114, 115 ausgebildet und im Nahbereich deren angeordnet ist.

Wie bereits oben beschrieben, umfasst jede Spanneinrichtung 194a, 194b eine Anpressvorrichtung 203a, 203b, wie diese in den Fig. 13a und 14a dargestellt ist. Die Anpressvorrichtung 203a, 203b der Spanneinrichtungen 194a, 194b umfassen jeweils zwei über getrennte Stellvorrichtungen 228a, 228b, 229a, 229b relativ zueinander verstellbare Anpresselemente 230a, 230b, 231a, 231b und einen Gehäuseteil 232a, 232b, der über einen Flansch am Tragrahmen 202a, 202b, insbesondere der vertikalen Tragwand 206a, 206b befestigt ist. Der Gehäuseteil 232a, 232b umfasst zwei im Abstand voneinander angeordnete Seitenwände 233a, 233b, einen diese verbindenden Boden 234a, 234b und einen Deckel 235a, 235b. Der Boden und Deckel 234a, 234b, 235a, 235b bilden auf ihren einander zugewandten Innenseiten jeweils eine Führungsfläche 236a, 236b aus, entlang denen noch näher zu beschreibende Horizontalschieber 237a, 237b, 238a, 238b geführt sind. Die Horizontalschieber 237a, 237b, 238a, 238b bilden wiederum auf ihren den Führungsflächen 236a, 236b zugewandten Außenseiten und an diesen aufliegende Führungsflächen 239a, 239b aus. Zusätzlich sind die Horizontalschieber 237a, 237b, 238a, 238b auf ihren einander zugewandten Innenseiten mit inneren Führungsflächen 240a, 240b versehen. Die Horizontalschieber 237a, 237b, 238a, 238b stützen sich mit ihren inneren Führungsflächen 240a, 240b aufeinander ab und führen sich gegenseitig.

Das erste Anpresselement 230a, 230b ist an einem ersten Vertikalschieber 241a, 241b befestigt. Der erste Vertikalschieber 241a, 241b ist über eine Kulissenanordnung 242 mit dem unteren Horizontalschieber 237a, 237b bewegungsmäßig gekoppelt. Dazu ist der in Längsrichtung des Gehäuseteiles 232a, 232b horizontal und quer zur Vorschubrichtung - gemäß Pfeil 46 - der Teiletransporträger 48 verstellbare, untere Horizontalschieber 237a, 237b mit einem Kulissenelement 243, beispielsweise ein zylindrischer Bolzen, versehen, das innerhalb einer bogenförmigen Kulissenbahn 244 im ersten Vertikalschieber 241 a, 241b gelagert ist. Wie in Fig. 14, 14a ersichtlich, sind der Boden 234a, 234b, Deckel 235a, 235b und die Horizontalschieber 237a, 237b, 238a, 238b mit vertikal übereinanderliegenden, ersten Durchtrittsöffnungen 245 versehen. Der Vertikalschieber 241a, 241b ist etwa quaderförmig ausgebildet und entspricht die Umrissform der Durchtrittsöffnung 245 der Außenkontur des Vertikalschiebers 241a, 241b. Der Vertikalschieber 241a, 241b durchsetzt die Durchtrittsöffnungen 245 und ist mittels der im Gehäuseteil 232b bzw. Boden 234a, 234b, Deckel 235a, 235b ausgebildeten Durchtrittsöffnungen 245 zwangsgeführt. Der untere Vertikalschieber 241a, 241b ist über ein Koppelement 246 mit einem ersten Antriebsmotor 247a, 247b, beispielsweise einen Elektro- oder Fluidmotor verbunden. Der Antriebsmotor 247a, 247b ist am Tragrahmen 202a, 202b, insbesondere der mittleren Tragwand 207a, 207b befestigt.

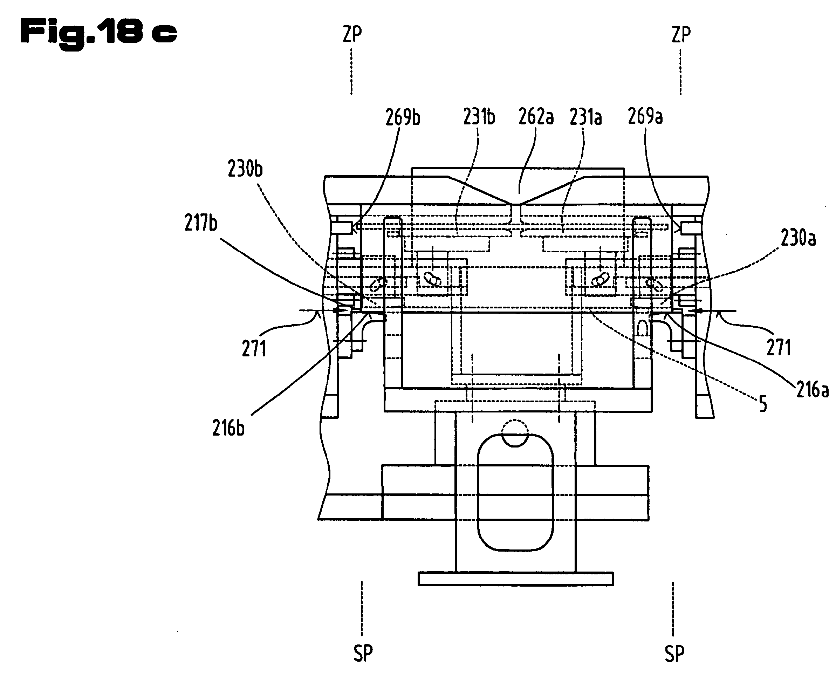

Wird nun der untere Horizontalschieber 237a, 237b mittels des Antriebsmotors 247a, 247b aus der gezeichneten Ausgangsstellung in eine in Fig. 18c dargestellte Betätigungsstellung von links nach rechts verschoben, wird gleichzeitig das erste Anpresselement 230a, 230b in Richtung auf das feststehende Spannwerkzeug 201a, 201b bewegt und der nicht weiters dargestellte, erste Teil 1 zwischen dem Spannwerkzeug 201a, 201b und dem Anpresselement 230a, 230b fixiert.

Das zweite Anpresselement 231a, 231b ist an einem zweiten Vertikalschieber 248a, 248b befestigt und mit einer Spannbacke 252a, 252b versehen. Der zweite Vertikalschieber 248a, 248b ist über eine Kulissenanordnung 242' mit dem oberen Horizontalschieber 238a, 238b bewegungsmäßig gekoppelt. Dazu ist der in Längsrichtung des Gehäusesteiles 232a, 232b horizontal und quer zur Vorschubrichtung - gemäß Pfeil 46 - der Teiletransporträger 48 verstellbare, obere Horizontalschieber 238a, 238b mit einem Kulissenelement 243', beispielsweise ein zylindrischer Bolzen, versehen, das innerhalb einer bogenförmigen Kulissenbahn 244' im zweiten Vertikalschieber 248a, 248b gelagert ist. Wie in Fig. 14, 14a ersichtlich, sind der Boden 234a, 234b, Deckel 235a, 235b und die Horizontalschieber 237a, 237b, 238a, 238b mit vertikal übereinanderliegenden, zweiten Durchtrittsöffnungen 245' versehen. Der Vertikalschieber 248a, 248b ist etwa quaderförmig ausgebildet und entspricht die Umrissform der Durchtrittsöffnung 245' der Außenkontur des Vertikalschiebers 248a, 248b. Der Vertikalschieber 248a, 248b durchsetzt die Durchtrittsöffnungen 245' und ist mittels der im Gehäuseteil 232b bzw. Boden 234a, 234b, Deckel 235a, 235b ausgebildeten Durchtrittsöffnungen 245' zwangsgeführt. Der Vertikalschieber 248a, 248b ist über ein Koppelement 249a, 249b mit einem zweiten Antriebsmotor 251a, 251b, beispielsweise einen Elektro- oder Fluidmotor verbunden. Der zweite Antriebsmotor 251a, 251b ist über einen Montagewinkel 250a, 250b mit dem Tragrahmen 202a, 202b, insbesondere der Tragwand 207a, 207b verbunden.

Wird nun der obere Horizontalschieber 238a, 238b mittels dem Antriebsmotor 251a, 251b aus der gezeichneten Ausgangsstellung in eine in Fig. 18c dargestellte Betätigungsstellung von links nach rechts verschoben, wird gleichzeitig das zweite Anpresselement 231a, 231b in Richtung auf das feststehende Widerlager 204a, 204b bewegt und der nicht weiters dargestellte, zweite Teil 2 zwischen den Spannbacken 212a, 212b, 252a, 252b fixiert.

Die das erste Anpresselement 230a, 230b betätigende Stellvorrichtung 228a, 228b umfasst den oben beschriebenen, ersten Vertikalschieber 241a, 241b, die Kulissenanordnung 242, das Koppelelement 246a, 246b und den ersten Antriebsmotor 247a, 247b. Die das zweite Anpresselement 231a, 231b betätigende Stellvorrichtung 229a, 229b umfasst den oben beschriebenen, zweiten Vertikalschieber 248a, 248b, die Kulissenanordnung 242', das Koppelelement 249a, 249b und den zweiten Antriebsmotor 251a, 251b.

Nach dieser Ausführung bildet die zweite Stellvorrichtung 229a, 229b eine Hebevorrichtung einer zweiten Höhenpositioniervorrichtung aus, wobei das zweite Anpresselement 231a, 231b bzw. die Spannbacke 252a, 252b das den zweiten Teil 2 zwischen einer am Teiletransportträger 48 befindlichen Transportstellung und einer gegenüber dieser ober- oder unterhalb liegende Bereitstellungsposition anhebende oder absenkende Auflagerelement der Hebevorrichtung ausbildet.

Wie ebenfalls in Fig. 13 und 14 eingetragen, umfasst das Spannsystem 111 der in Fig. 1 und 10 dargestellten Fügestation 43, die zweite Spanneinheit 115. Diese weist zu beiden Seiten der Transporteinrichtung 46 angeordnete, zusammenwirkende Spanneinrichtungen 195a, 195b auf.

Die Spanneinrichtungen 195a, 195b der zweiten Spanneinheit 115 umfassen jeweils die Antriebseinheit 181a, 181b, einen Tragrahmen 254a, 254b sowie ein Spannwerkzeug 255a, 255b. Das Spannwerkzeug 255a, 255b ist über den Tragrahmen 254a, 254b mit der Rüstplattform 187 der Antriebseinheit 181a, 181b verbunden. Der Tragrahmen 254a, 254b umfasst eine an der Rüstplattform 187 befestigte Montageplatte 256a, 256b, an dieser befestigte, senkrecht ausgerichtete Tragwände 257a, 257b, 258a, 258b sowie eine an diesen, oben befestigte Tragplatte 259a, 259b. An der Tragplatte 259a, 259b ist das Spannwerkzeug 255a, 255b montiert. Die aufeinander zugerichteten Spannwerkzeuge 255a, 255b sind nun über die Antriebseinheiten 181 a, 181 b quer zur Vorschubrichtung - gemäß Pfeil 65 - der Teiletransportträger 48 und zum Spannwerkzeug 201 a, 201b der Spanneinrichtungen 194a, 194b der ersten Spanneinheit 114 relativ verstellbar ausgebildet. Die gegebenenfalls synchron zueinander verstellbaren Spannwerkzeuge 201a, 201b als auch die Spannwerkzeuge 255a, 255b sind ausschließlich in horizontalen Ebenen verstellbar.

Wie weiters aus den Fig. 13 und 14 ersichtlich, umfasst das Spannsystem 111 der in Fig. 1 und 10 dargestellten Fügestation 43 eine dritte Spanneinheit 116, die zwei in Vorschubrichtung - gemäß Pfeil 65 - der Teiletransportträger 48 hintereinander angeordnete und über die Antriebseinheiten 182a, 182b zusammenwirkende Spanneinrichtung 260a, 260b umfasst. Die Spanneinrichtungen 260a, 260b der dritten Spanneinheit 116 umfassen jeweils die Antriebseinheit 182a, 182b, einen Tragrahmen 261a, 261b sowie ein Spannwerkzeug 262a, 262b. Jedes Spannwerkzeug 262a, 262b ist über den Tragrahmen 261a, 261b mit der Rüstplattform 187 der Antriebseinheit 182a, 182b verbunden. Die Antriebseinheiten 182a, 182b der Spanneinrichtungen 260a, 260b sind über eine etwa U-fönmige Befestigungsplatte 263 am Schlitten 198b montiert. Die Schenkel der Befestigungsplatte 263 tragen die Antriebseinheiten 182a, 182b, während deren Basis mit dem Schlitten 198b verbunden ist. Der Tragrahmen 261 a, 261b umfasst eine an der Rüstplattform 187 befestigte Montageplatte 264a, 264b sowie an dieser befestigte, senkrecht ausgerichtete Tragwände 265a, 265b, mit denen das Spannwerkzeug 262a, 262b verbunden ist. Die Spannwerkzeuge 262a, 262b sind über die Antriebseinheiten 182a, 182b in Vorschubrichtung - gemäß Pfeil 65 - der Teiletransportträger 49 gegebenenfalls synchron verstellbar ausgebildet.

Wie aus der Betrachtung der Fig. ersichtlich, sind die Spanneinrichtungen 194a, 195a auf dem Schlitten 198a des Linearantriebes 196a (Zustellachse 112a) und die Spanneinrichtungen 194b, 195b, 260a, 260b am Schlitten 198b des Linearantriebes 196b (Zustellachse 112b) aufgebaut.

Es sei an dieser Stelle kurz daraufhingewiesen, dass die an sich bekannten Linearantriebe der Spanneinheiten 114 bis 116 und des Antriebssystems 156 für die Schweißvorrichtung 119 sowie der Zustellachsen 112a, 112b jeweils einen Elektromotor, insbesondere einen stufenlos steuerbaren Servo- oder Schrittschaltmotor, eine an diesen direkt angeflanschte Gewindespindel und zumindest eine über die Gewindespindel entlang von Führungen verstellbare Spindelmutter umfasst, wobei an der Spindelmutter der Schlitten der Spanneinheiten 114 bis 116 und des Antriebssystems 156 gelagert ist. Die Elektromotoren sind über Verbindungsleitungen an die elektronische Steuereinrichtung 36 angeschlossen. Wie im Nachfolgenden noch beschrieben wird, wird von jedem der Elektromotoren der Spanneinheiten 114 bis 116 das ausgeübte Drehmoment bzw. der Motorstrom erfasst, der Steuereinrichtung 36 und/oder Auswerteeinheit 38 gemeldet und daraus eine Spannkraft und/oder ein Verfahr- und/oder Spannweg jeder einzelnen Spanneinrichtung der Spanneinheiten 114 bis 116 ermittelt, worauf ein Soll-Istwert-Vergleich im Vergleichsmodul 39 durchgeführt und eine Information über das Qualitätsmerkmal des zu verarbeitenden Teiles 1, 2 in Form von "Gutteil" oder "Schlechtteil" im Auswertemodul 40 ausgewertet und in die Steuereinrichtung 36 eingegeben werden, anhand deren die Spanneinrichtungen der Spanneinheiten 114 bis 116 und/oder das Antriebssystems 156 für die Schweißvorrichtung 119 sowie die Zustellachsen 112a, 112b angesteuert werden.

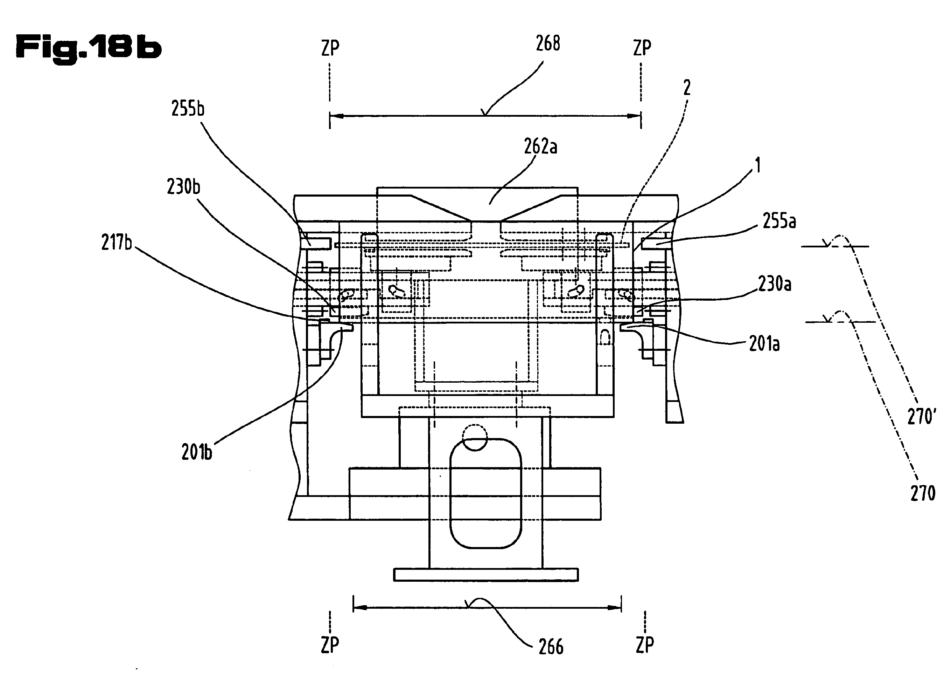

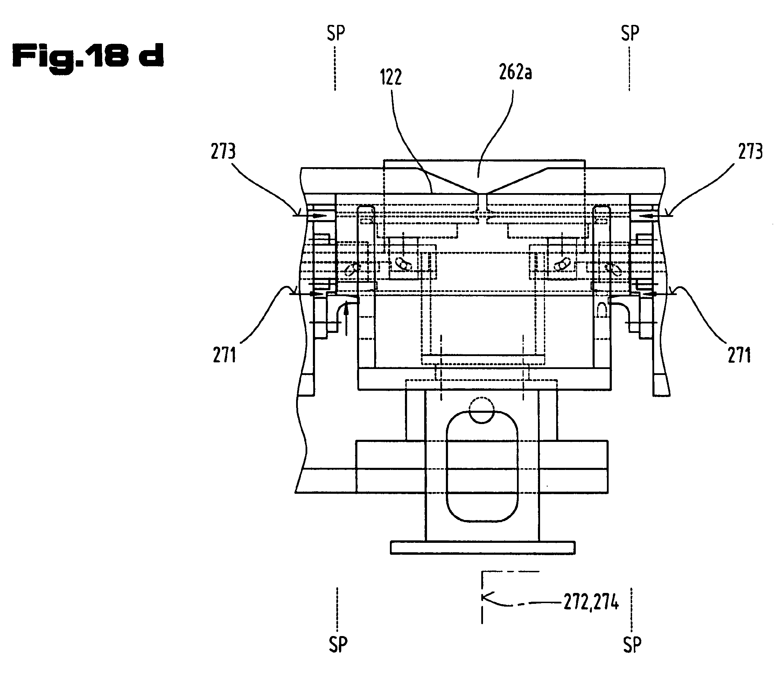

In den Fig. 18a bis 18f wird nun der Spannvorgang mittels des Spannsystems 111 näher beschrieben. Zunächst werden die Spanneinrichtungen 194a, 194b, 195a, 195b der Spanneinheiten 114, 115 durch Verfahren der Schlitten 198a, 198b der Zustellachsen 112a, 112b aufeinander zu bewegt, sodass eine lichte Weite 266 bemessen zwischen den einander zugewandten Kanten 218a, 218b der Spannwerkzeuge 201a, 201 b soweit verkleinert wird, bis diese geringer ist als die Länge 267 des ersten Teiles 1. Ebenso wird eine lichte Weite 268 bemessen zwischen den einander zugewandten Anschlagflächen 269 verkleinert. Dabei werden die Spannwerkzeuge 201a, 201b, 255a, 255b der Spanneinheiten 214, 215 jeweils aus einer vom Teil 1, 2 entfernten Ausgangsposition (AP), wie in strichlierte Linien in Fig. 18a eingetragen, in eine Zwischenposition (ZP), wie in strichlierte Linien in Fig. 18b eingetragen, bewegt. Die Bewegung der Spannwerkzeuge 201a, 201b, 255a, 255b zwischen der Zwischenposition (ZP) und einer den Teil 1, 2 festlegenden bzw. klemmenden Spannposition (SP), wie in Fig. 18d dargestellt, erfolgt über die Antriebseinheiten 180a, 180b, 181a, 181b. In der Zwischenposition (ZP) liegen die Anschlagflächen 217a, 217b, 269a, 269b der Spannwerkzeuge 201a, 201b, 255a, 255b im Nahbereich knapp vor den Anlageflächen 10, 12 der Teile 1, 2.

Wie oben beschrieben, sind die aufeinander zustellbaren Spannwerkzeuge 201a, 201b mit der Auflaufschräge 215a, 215b versehen, sodass alleinig auf Grund der Zustellbewegurig der Spannwerkzeuge 201a, 20 1 b von der Ausgangsposition (AP) in die Zwischen- oder Spannposition (ZP, SP), der zuvor mittels dem Teiletransportträger 48 in die Halteposition 110 der Fügestation 43 angelieferte Teile 1 auf die Spannwerkzeuge 201a, 201b aufgeschoben und vom Teiletransportträger 48 abgehoben wird. Wie in den vorhergehenden Fig. erläutert, ist der zweite Teil 2 an Auflagefortsätzen 8 des ersten Teiles 1 abgestützt und werden die Teile 1, 2 gemeinsam über einen Teiletransportträger 48 in die Fügestation 43 antransportiert als auch gemeinsam vom Teiletransportträger 48 angehoben oder abgesenkt. Hierbei wird der erste Teil 1 aus der am Teiletransportträger 48 befindlichen Transportstellung 219 in eine ober- oder unterhalb vom Teiletransportträger 48 befindliche Bereitstellungsposition 270 als auch der zweite Teil 2 aus der am Teiletransportträger 48 befindlichen Transportstellung 219' in eine ober- oder unterhalb vom Teiletransportträger 48 befindliche Bereitstellungsposition 270' bewegt. Werden im Gegensatz dazu, die Teile 1, 2 auf zwei Teiletransportträgern 48 getrennt angeliefert, wird der erste Teil 1 über die erste Höhenpositioniervorrichtung 200a, 200b und der zweite Teil 2 über die zweite Höhenpositioniervorrichtung vom Teiletransportträgern 48 abgehoben oder abgesenkt.

In den Bereitstellungspositionen 270, 270' befinden sich die Teile 1, 2 zwischen den gegenüberliegenden Spannweikzeugen 201a, 201b und 255a, 255b der Spanneinrichtungen 194a, 194b, 195a, 195b.

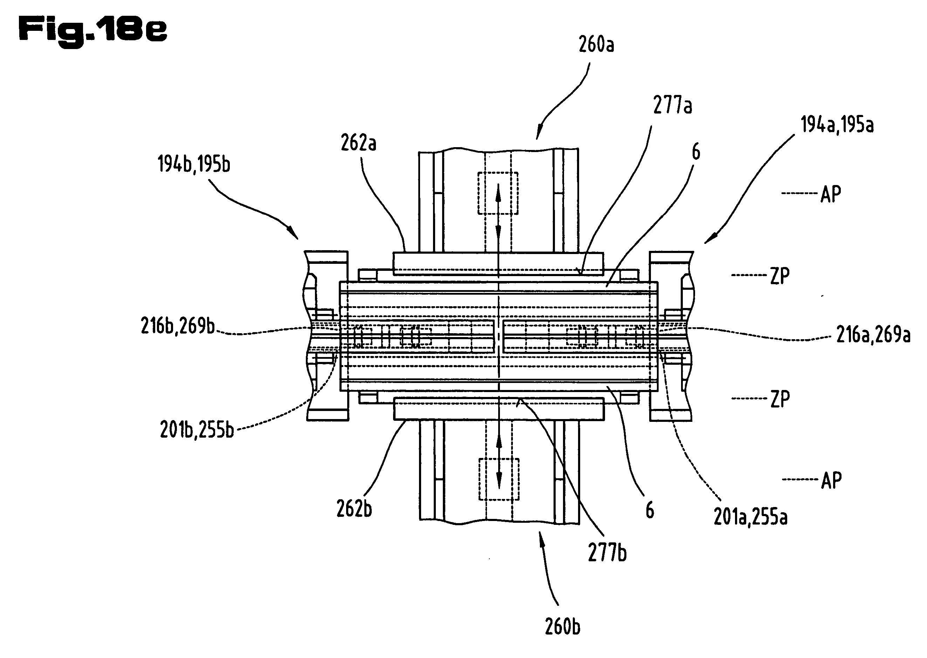

Während der Zustellbewegung der Spanneinrichtungen 194a bis 195b der Spanneinheiten 114, 115 werden gleichzeitig auch die Spannwerkzeuge 262a, 262b der Spanneinrichtungen 260a, 260b der Spanneinheit 115 jeweils aus einer Ausgangsposition (AP), siehe Fig. 18a, in eine Zwischenposition (ZP), siehe Fig. 18e, knapp vor die Schenkeln 6 des Teiles 1 bewegt. Die Bewegung der Spannwerkzeuge 262a, 262b zwischen der Zwischenposition (ZP) und einer die Teile 1, 2 fixierenden Spannposition (SP), wie in Fig. 18d dargestellt, erfolgt über die Antriebseinheiten 182a, 182b.

Gemäß Fig. 18c werden zunächst die Spannwerkzeuge 201a, 201b der Spanneinrichtungen 194a, 195b relativ zueinander verstellt bis die Anschlagflächen 217a, 217b gegen die stimseitigen Anlageflächen 10 des ersten Teiles 1 anliegen, sodass der erste Teil 1 in einer ersten Raumrichtung positioniert und gespannt wird. Der Teil 1 wird dabei mit entgegengerichteten Spannkräften - gemäß eingetragenen Pfeilen 271 - beaufschlagt. Auf diese Weise ist der erste Teil 1 in einer ersten Raumrichtung festgelegt.

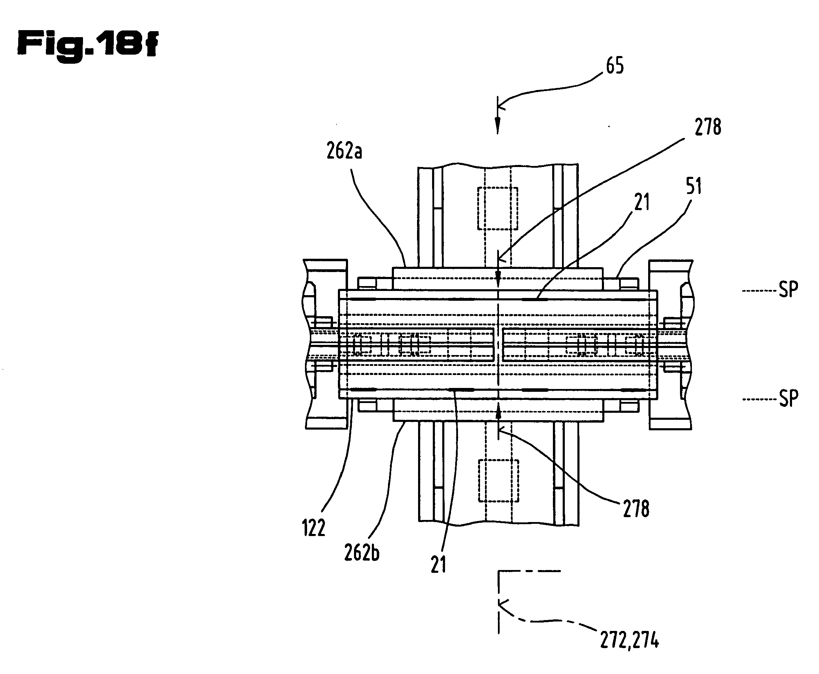

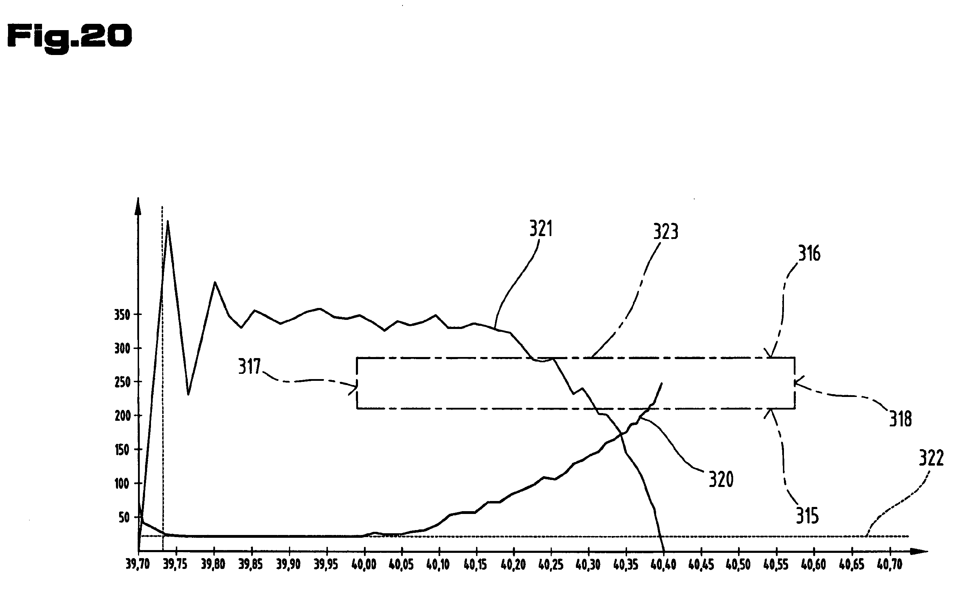

In einer ersten Ausführung sind die Elektromotoren 188a, 188b der Spanneinrichtungen 194a, 194b elektronisch gekoppelt und werden die Spannwerkzeuge 201a, 201b über die Antriebseinheiten 180a, 180b aus der in Fig. 18b gezeigten Zwischenposition (ZP) in die in Fig. 18c in strichlierte Linien eingetragene, klemmende Spannposition (SP) synchron zueinander verstellt bzw. aufeinander zubewegt bis die Anschlagflächen 217a, 217b gegen die stirnseitigen Anlageflächen 10 des ersten Teiles 1 anliegen und den Teil 1 zwischen diesen spannen. Dadurch wird der Teil 1 in seiner Spannposition 274 (siehe Fig. 18d, 18f) bezüglich der Fügestation 43, wie in Fig. 1 und 10 dargestellt, zentrisch aufgenommen und gespannt, wie durch strichpunktierte Linie angedeutet. Die Istwerte der Spannkräfte werden aus den ausgeübten Drehmomenten bzw. dem Motorstrom der stufenlos steuerbaren Elektromotoren 188a, 188b der Spanneinrichtungen 194a, 194b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 201 a, 20 1 b vorzugsweise laufend als Istwert erfasst und der Auswerteeinheit 38 übermittelt, sodann in dieser ein Soll-Istwert-Vergleich der Verfahr- und Spannwege der Spannwerkzeuge 201a, 201b vorzugsweise laufend durchgeführt.

In einer zweiten Ausführung, wird nur eines der Spannwerkzeuge 201b über die Antriebseinheit 180b aus der in Fig. 18b gezeigten Zwischenposition (ZP) in die in Fig. 18c in strichlierte Linien eingetragene Spannposition (SP) verstellt, während das andere Spannwerkzeug 201 a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 188b das ausgeübte Drehmoment bzw. der Motorstrom erfasst und daraus die auf den Teil 1 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 201a, 201b sowie die zwischen der Zwischen- und Spannposition (AP, ZP, SP) zurückgelegten Verfahr- und Spannwege des Spannwerkzeuges 201b vorzugsweise laufend als Istwert erfasst und der Auswerteeinheit 38 übermittelt, sodann in dieser ein Soll-Istwert-Vergleich der Verfahr- und Spannwege der Spannwerkzeuge 201 a, 201 b vorzugsweise laufend durchgeführt.

Wie in Fig. 18c eingetragen, werden während dem Spannvorgang bzw. der Zustellbewegung eines oder beider Spannwerkzeuge(s) 201a, 201b aus der Zwischenposition (ZP) in die klemmenden Spannposition (SP) oder nachdem die Spannwerkzeuge 201a, 201b die Spannposition (SP) erreicht haben, die Anpresselemente 230a, 230b betätigt und aus einer Ruheposition, wie in Fig. 18b eingetragen, in eine Anpressposition, wie in Fig. 18c eingetragen, verstellt. Die Anpresselemente 230a, 230b werden in Richtung auf die Auflagefläche 216a, 216b zubewegt und gegen die Basis 5 des Teiles 1 mit einer Anpresskraft angedrückt, sodass der erste Teil 1 in der Anpressposition der Anpresselemente 230a, 230b auch in einer zweiten Raumrichtung positioniert und gehalten ist.

Nachdem nun der erste Teil 1 in zwei Raumrichtungen festgelegt ist, wird nun auch der zweite Teil 2 mittels der Spannwerkzeuge 255a, 255b der Spanneinrichtungen 195a, 195b der zweiten Spanneinheit 115 gegenüber dem ersten Teil 1 positioniert, gespannt und fixiert.

Wie in Fig. 18c weiters eingetragen, werden zunächst die Spannwerkzeuge 255a, 255b relativ zueinander verstellt bis die Anschlagflächen 269a, 269b gegen die stirnseitigen Anlageflächen 12 des zweiten Teiles 2 anliegen, sodass der zweite Teil 2 relativ zum ersten Teil 1 verstellt, gegenüber den ersten Teil 1 in einer ersten Raumrichtung positioniert und gespannt wird. Der Teil 2 wird dabei mit entgegengerichteten Spannkräften - gemäß in Fig. 18d eingetragenen Pfeilen 273 - gespannt wird. Somit ist nun der zweite Teil 2 in Richtung seiner Längserstreckung gegenüber dem ersten Teil 1 und in einer zweiten Raumrichtung festgelegt.

Hierzu können in einer ersten Ausführung die Elektromotoren 189a, 189b der Spanneinrichtungen 195a, 195b elektronisch gekoppelt und die Spannwerkzeuge 255a, 255b über die Antriebseinheiten 181a, 181b aus der in Fig. 18b gezeigten Zwischenposition (ZP) in die in Fig. 18c in strichlierte Linien eingetragene Spannposition (SP) synchron zueinander verstellt bzw. aufeinander zubewegt werden, bis die Anschlagflächen 269a, 269b gegen die stirnseitigen Anlageflächen 12 des zweiten Teiles 2 anliegen und den Teil 2 zwischen diesen spannen. Dadurch wird der Teil 2 in seiner Spannposition (siehe Fig. 18d, 18f) bezüglich der Fügestation 43, wie in Fig. 1 und 10 dargestellt, zentrisch aufgenommen und gespannt, wie durch strichpunktierte Linie angedeutet. Die Istwerte der Spannkräfte werden aus den ausgeübten Drehmomenten bzw. dem Motorstrom der stufenlos steuerbaren Elektromotoren 189a, 189b der Spanneinrichtungen 195a, 195b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 255a, 255b vorzugsweise laufend als Istwert erfasst und der Auswerteeinheit 38 übermittelt, sodann in dieser ein Soll-Istwert-Vergleich der Verfahr- und Spannwege der Spannwerkzeuge 255a, 255b vorzugsweise laufend durchgeführt.

In einer zweiten Ausführung, wird nur eines der Spannwerkzeuge 255b über die Antriebseinheit 181b aus der in Fig. 18b gezeigten Zwischenposition (ZP) in die in Fig. 18c in strichlierte Linien eingetragene Spannposition (SP) verstellt, während das andere Spannwerkzeug 255a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 189b das ausgeübte Drehmoment bzw. der Motorstrom erfasst und daraus die auf den Teil 2 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 255a, 255b sowie die zwischen der Zwischen- und Spannposition (AP, ZP, SP) zurückgelegten Verfahr- und Spannwege des Spannwerkzeuges 255b vorzugsweise laufend als Istwert erfasst und der Auswerteeinheit 38 übermittelt, sodann in dieser ein Soll-Istwert-Vergleich der Verfahr- und Spannwege der Spannwerkzeuge 255a, 255b vorzugsweise laufend durchgeführt.

Gemäß Fig. 18c werden noch vor, während dem Spannvorgang bzw. der Zustellbewegung eines oder beider Spannwerkzeuge(s) 255a, 255b aus der Zwischenposition (ZP) in die Spannposition (SP) oder nachdem die Spannwerkzeuge 255a, 255b die Spannposition (SP) erreicht haben, die Anpresselemente 231a, 231b der zweiten Höhenpositioniervorrichtungen betätigt und aus einer Ruheposition, wie in Fig. 18b eingetragen, in eine Anpressposition, wie in Fig. 18c eingetragen, verstellt. Die Anpresselemente 231 a, 231 b werden dazu in Richtung auf die Widerlager 204a, 204b zubewegt, der Teil 2 relativ zum ersten Teil 1 bewegt und gegen den Teil 2 mit einer Anpresskraft angedrückt, sodass in der Anpressposition der Anpresselemente 231a, 231b der Teil 2 auch in einer zweiten Raumrichtung positioniert und gehalten ist.

In den nachfolgenden Schritten, wie zu den Fig. 18e und 18f beschrieben, werden die Teile 1, 2 nunmehr auch in einer dritten Raumrichtung gegenüber die Fügestation 43 positioniert und festgelegt, indem die Spannwerkzeuge 262a, 262b der Spanneinrichtungen 260a, 260b relativ zueinander verstellt werden, bis die Anschlagflächen 277a, 277b gegen die Außenseite der Schenkeln 6 vom ersten Teil 1 anliegen und beide Teile 1, 2 in die im Raum vorgegebene Spannposition 272, 274 gemeinsam bewegt, positioniert und gegeneinander gespannt werden. Die Teile 1, 2 werden dabei mit entgegengerichteten Spannkräften - gemäß eingetragenen Pfeilen 278 - beaufschlagt. Die Spannkräfte 278 der Spannwerkzeuge 262a, 262b sind so gewählt, dass der erste und zweite Teil 1, 2 gegenüber die Spannwerkzeuge 201a, 201b, 255a, 255b und Anpresselemente 230a, 230b, 231a, 231b in der dritten Raumrichtung in die Spannposition 272, 274 bzw. in Vorschubrichtung - gemäß Pfeil 65 - der Teiletransportträger 48 geringfügig verschoben werden können. Auf diese Weise sind die Teile 1, 2 auch in einer dritten Raumrichtung festgelegt und in der Spannposition 272, 274 exakt im Raum positioniert, fixiert und entlang der Fügestellen 17a, 17b miteinander verspannt.

Hierzu können in einer ersten Ausführung die Elektromotoren 190a, 190b der Spanneinrichtungen 260a, 260b elektronisch gekoppelt und die Spannwerkzeuge 262a, 262b über die Antriebseinheiten 182a, 182b aus der in Fig. 18e gezeigten Zwischenposition (ZP) in die in Fig. 18f in strichlierte Linien eingetragene Spannposition (SP) synchron zueinander verstellt bzw. aufeinander zubewegt werden, bis die Anschlagflächen 277a, 277b gegen die Schenkeln 6 des zweiten Teiles 2 anliegen und die Teile 1, 2 gegeneinander gespannt sind. Dadurch, dass mittels den Spannwerkzeugen 262a, 262b ein symmetrisches Spannen erfolgt, werden die Teile 1, 2 nun auch in einer dritten Raumrichtung in die vorgegebene Spannposition 272, 274 verbracht und bezüglich der Fügestation 43 zentrisch aufgenommen und gespannt. Die Istwerte der Spannkräfte werden aus den ausgeübten Drehmomenten bzw. dem Motorstrom der stufenlos steuerbaren Elektromotoren 190a, 190b der Spanneinrichtungen 260a, 260b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 262a, 262b vorzugsweise laufend als Istwert erfasst und der Auswerteeinheit 38 übermittelt, sodann in dieser ein Soll-Istwert-Vergleich der Verfahr- und Spannwege der Spannwerkzeuge 262a, 262b vorzugsweise laufend durchgeführt.

In einer zweiten Ausführung, wird nur eines der Spannwerkzeuge 262b über die Antriebseinheit 182b aus der in Fig. 18e gezeigten Zwischenposition (ZP) in die in Fig. 18f in strichlierte Linien eingetragene Spannposition (SP) verstellt, während das andere Spannwerkzeug 262a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 190b das ausgeübte Drehmoment bzw. der Motorstrom erfasst und daraus die auf die Teile 1, 2 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 262a, 262b sowie die zwischen der Zwischen- und Spannposition (AP, ZP, SP) zurückgelegten Verfahr- und Spannwege des Spannwerkzeuges 262b vorzugsweise laufend als Istwert erfasst und der Auswerteeinheit 38 übermittelt, sodann in dieser ein Soll-Istwert-Vergleich der Verfahr- und Spannwege der Spannwerkzeuge 262a, 262b vorzugsweise laufend durchgeführt.

Nachdem die beiden Teile 1, 2 in den drei Raumrichtungen in die Spannposition 272, 274 bewegt, in dieser positioniert, gespannt und gegebenenfalls fixiert sowie die Qualitätsmerkmale überprüft und positiv ausgewertet wurden, werden die Teile 1, 2 entlang der durch die Spannwerkzeuge 262a, 262b vorgespannten Bereiche an den Fügestellen 17a, 17b mittels Fügenähten 21 zumindest bereichsweise miteinander verbunden, insbesondere verschweißt. Während dem Fügevorgang, werden die Spannwerkzeuge 201a, 201b, 255a, 255b, 262a, 262b ruhig gehalten.

Dabei ist von Vorteil, dass die Fügestellen 17a, 17b zwischen den Teilen 1, 2, sofern diese den Qualitätsanforderungen, insbesondere der Maßhaltigkeit entsprechen, stets an der gleichen Position im Raum vorgegeben sind und die Fügeeinrichtung, insbesondere der Strahlschweißkopf, nach einer einmalig programmierten Bewegungsbahn verfahren werden kann und dabei die Teile 1, 2 miteinander verschweißt. Diese Bewegungsbahn wird beispielsweise im Teach-In-Verfahren programmiert und ist in der Steuereinrichtung 36 abgespeichert. Eine aus dem Stand der Technik bekannte Nahtverfolgung kann dadurch entfallen. Wie noch in den Fig. 20 bis 22 beschrieben wird, kann die Position der Fügestellen 17a, 17b innerhalb eines zulässigen Toleranzfensters liegen und die Schweißverbindung dennoch erfolgen, da der Schweißstrahl im Fokus etwa einen Durchmesser von 0,3 mm bis 0,5 mm aufweist. Der Durchmesser des Fokus fließt in die Definition des Toleranzfensters mit ein.

Nachdem die Teile 1, 2 zur Baugruppe 122 gefügt und der Fügevorgang beendet wurden, werden die Spannwerkzeuge 201a, 201b, 255a, 255b, 262a, 262b aus deren Spannpositionen (SP) in die Ausgangspositionen (AP) bewegt und dabei durch Vergrößerung der lichten Weite 266 die Baugruppe 122 wiederum auf den vorzugsweise während dem Spann- und Schweißvorgang in der Halteposition 110 verharrenden Teiletransportträger 48 abgesetzt und aus der Fügestation 43 abtransportiert. Am Teiletransportträger 48 wird der Positionierfortsatz 80 in die Positionieröffnung 7 eingefädelt und die Baugruppe 122 gegenüber dem Teiletransportträger 48 in ausreichender Genauigkeit positioniert.

Vorzugsweise werden die Zustellachsen 112a, 112b gleichermaßen die Spannwerkzeuge 201a, 201b, 255a, 255b, 262a, 262b der Spanneinrichtungen 194a bis 195b, 260a, 260b aus der Ausgangsposition (AP) bis zur Spannposition (ZP) geregelt verfahren. Die Regelung der Verfahrgeschwindigkeit der Spannwerkzeuge 201a, 201b, 255a, 255b, 262a, 262b kann auf unterschiedliche Arten erfolgen.

In einer ersten Ausführung, werden zunächst die Spannwerkzeuge 201a, 201b, 255a, 255b, 262a, 262b aus der Ausgangsposition (AP) bis knapp vor die Zwischenposition (ZP) beschleunigt und bis hin zur Zwischenposition (ZP) zum Stillstand verzögert verfahren, worauf eines oder beide Spannwerkzeuge 201a, 201b, 255a, 255b, 262a, 262b aus der Zwischenposition (ZP) beschleunigt und bis zur Spannposition (SP) zum Stillstand verzögert verfahren. Die Art und Weise der Regelung der Verfahrgeschwindigkeit der Spannwerkzeuge 201a, 201b, 255a, 255b, 262a, 262b, wird im Nachfolgenden noch zu den Fig. 20 bis 22 genauer beschrieben.

In einer zweiten Ausführung, werden die Spannwerkzeuge 201a, 201b, 255a, 255b, 262a, 262b aus der Ausgangsposition (AP) bis knapp vor die Zwischenposition (ZP) beschleunigt und bis hin zur Zwischenposition (ZP) verzögert verfahren, sodann eines oder beide Spannwerkzeuge 201a, 201b, 255a, 255b, 262a, 262b aus der Zwischenposition (ZP) bis zur Anlage der Anschlagflächen 217a, 217b, 269a, 269b, 277a, 277b gegen den Teil 1, 2 beschleunigt, annähernd mit konstanter Verfahrgeschwindigkeit oder weiterhin verzögernd verfahren und erst dann in Abhängigkeit des Kraftanstieges die Verfahrgeschwindigkeit, wie zu den Fig. 20 bis 22 genauer beschrieben, geregelt bis zum Stillstand verzögert.

In der Zwischenposition (ZP) können die Spannwerkzeuge 201 a, 201b, 255a, 255b, 262a, 262b den Teil 1; 2 ergreifen und in die gezeigte Bereitstellungsposition 270, 270' verstellen, wobei die Anschlagflächen 217a, 217b, 269a, 269b, 277a, 277b vom Teil 1, 2 noch entfernt sind, oder sind diese vom Teil 1; 2 noch geringfügig entfernt.

Vorzugsweise sind die Elektromotoren 197a, 197b der Zustellachsen 112a, 112b elektronisch gekoppelt und werden durch deren Zustellbewegung die Spannwerkzeuge 201 a, 201b, 255a, 255b, 262a, 262b der Spanneinrichtungen 194a bis 195b, 260a, 260b aus einer Vorposition in die in Fig. 18a gezeigte Ausgangsposition (AP) verstellt. Die Verstellbewegung der Spannwerkzeuge 201a, 201b, 255a, 255b, 262a, 262b aus der Ausgangsposition (AP) in die Zwischen- und Spannposition (ZP, SP) erfolgt mittels der Antriebseinheiten 180a bis 181b.

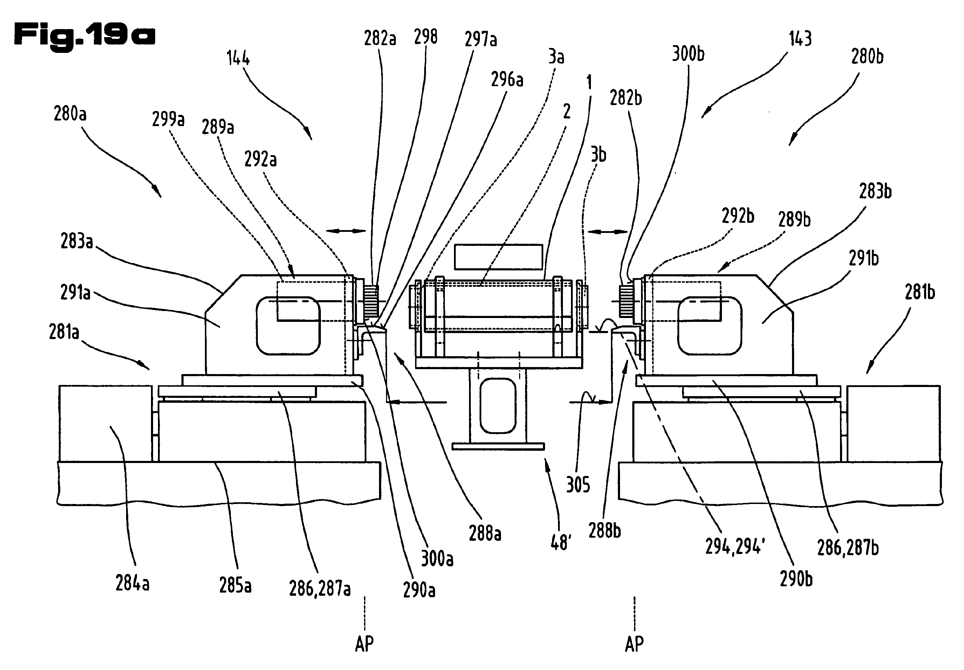

In den gemeinsam beschriebenen Fig. 19a bis 19c ist das Spannsystem 143 für die zweite Fügestation 128 (wie in Fig. 3 dargestellt) und der Verfahrensablauf näher beschrieben. Das Spannsystem 143 umfasst nach dieser Ausführung die Spanneinheit 144, die durch zu beiden Seiten eines geradlinigen Transportabschnittes der zweiten Transporteinrichtung 130 angeordnete Spanneinrichtungen 280a, 280b gebildet ist. Diese Spanneinrichtungen 280a, 280b umfassen jeweils eine Antriebseinheit 281a, 281b, ein in Richtung des eingetragenen Doppelpfeiles verstellbares Spannwerkzeug 282a, 282b, einen Tragrahmen 283a, 283b, eine Höhenpositioniervorrichtung 288a, 288b sowie eine Stellvorrichtung 289a, 289b für das Spannwerkzeug 282a, 282b. Die Antriebseinheiten 281a, 281b weisen jeweils einen mittels Elektromotor 284a, 284b angesteuerten Linearantrieb 285a, 285b und eine Rüstplattform 286 auf. Die Linearantriebe 285a, 285b umfassen jeweils einen in einer horizontalen Ebene verstellbaren Schlitten 287a, 287b, an dem die Rüstplattform 286 befestigt ist. Nach gezeigter Ausführung ist die Rüstplattform 286 durch den Schlitten 287a, 287b gebildet. Das Spannwerkzeug 282a, 282b ist über den Tragrahmen 283a, 283b mit der Rüstplattform 286 der Antriebseinheit 281a, 281b verbunden. Die Tragrahmen 283a, 283b der Spanneinrichtungen 280a, 280b umfassen jeweils eine an der Rüstplattform 286 befestigte Montageplatte 290a, 290b und zwei an dieser befestigte, voneinander beabstandet angeordnete Seitenwände 291a, 291b sowie eine diese verbindende, auf einer der Transporteinrichtung 130 zugewandten Seite angeordnete Tragwand 292a, 292b.

Die Höhenpositioniervorrichtung 288a, 288b umfasst eine Hebevorrichtung 293a, 293b mit einem die vorangegangen geschweißte Baugruppe 122 und die Teile 3a, 3b gemeinsam zwischen einer am Teiletransportträger 48' befindlichen Transportstellung 294, 294' derselben und einer gegenüber dieser ober- oder unterhalb liegende Bereitstellungsposition 302, 302' derselben anhebenden oder absenkenden Auflageelement 295a, 295b. Dieses Auflageelement 295a, 295b besitzt ausschließlich eine in Richtung der Transporteinrichtung 130 geneigt nach unten verlaufende Auflaufschräge 296a, 296b sowie eine horizontale Auflagefläche 297a, 297b für die Baugruppe 122 und den Teil 3a, 3b. Das Auflageelement 295a, 295b der Hebevorrichtung 293a, 293b ist am Tragrahmen 283a, 283b, insbesondere an der Tragwand 292a, 292b befestigt. Natürlich kann das Auflageelement 295a, 295b der Höhenpositioniervorrichtung 288a, 288b auch nach dieser Ausführung über einen Stellantrieb vertikal verstellbar ausgebildet sein, wie in den Fig. 15 bis 17 beschrieben. Ebenso kann die Höhenpositioniervorrichtung 288a, 288b getrennt von den Spanneinrichtungen 280a, 280b innerhalb der Fügestation 128 angeordnet sein.

Das Spannwerkzeug 282a, 282b ist nach dieser Ausführung durch eine Spannzange mit über die Stellvorrichtung 289a, 289b radial verstellbaren Spannsegmenten 298 gebildet, wie nur schematisch angedeutet. Die Stellvorrichtung 289a, 289b weist dazu einen Stellantrieb 299a, 299b auf, beispielsweise einen Fluidantrieb, mittels dem von innen die Spannsegmente 298 mit dem Druckmittel beaufschlagbar sind. Das Spannwerkzeug 282a, 282b oder der Tragrahmen 283a, 283b ist mit einer Anschlagfläche 300a, 300b versehen.

Zusätzlich umfasst die Fügestation 128 eine Anpressvorrichtung 301, die getrennt von der Spanneinheit 144 ausgebildet ist und drei voneinander getrennt angeordnete, gemäß den Doppelpfeilen verstellbare Anpresselemente 304a, 304b, 304c ausbildet. Die Anpresselemente 304a, 304b, 304c sind der vorangegangenen geschweißten Baugruppe 122 zugeordnet.

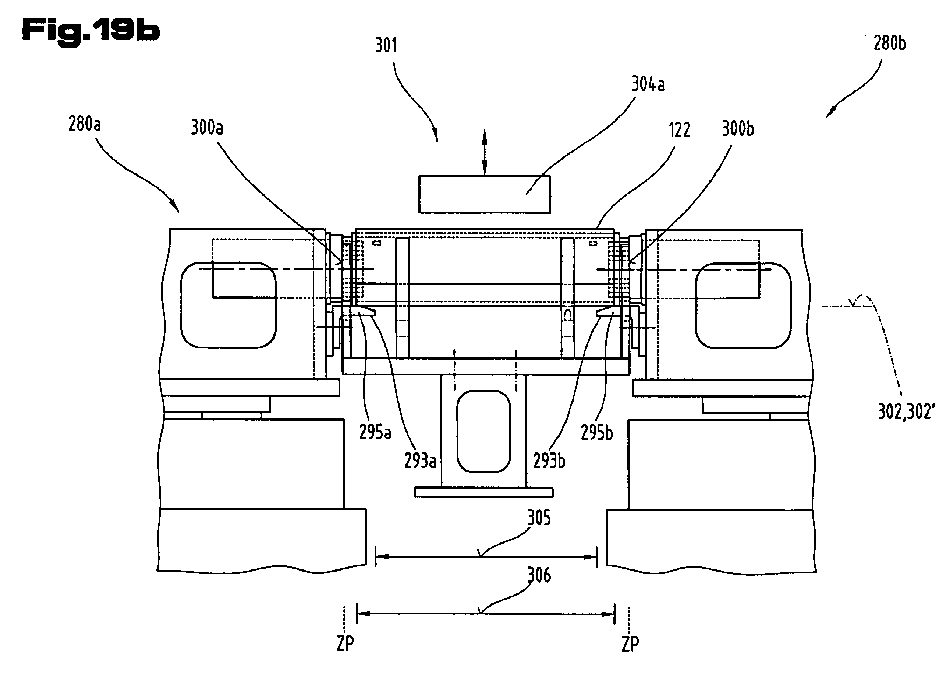

In Fig. 19a ist der Teiletransportträger 48' in die Halteposition 142 (siehe Fig. 3) zwischen die Spanneinrichtungen 280a, 280b der Spanneinheit 144 verfahren und in dieser angehalten. Zunächst werden die Spannwerkzeuge 282a, 282b der Spanneinrichtungen 280a, 280b mittels der Antriebseinheiten 281 a, 281b quer zur Vorschubrichtung - gemäß Pfeil 140 - der Teiletransportträger 48' aus einer von den Teilen 3a, 3b entfernten Ausgangsposition (AP), wie in strichlierte Linien in Fig. 19a eingetragen, in eine Zwischenposition (ZP), wie in strichlierte Linien in Fig. 19b eingetragen, bewegt. Demnach wird eine lichte Weite 305 bemessen zwischen den einander zugewandten Kanten der aufeinander zugerichteten Auflageelemente 295a, 295b soweit verkleinert, dass diese geringer ist als die Länge 306 der Baugruppe 122. Ebenso wird eine lichte Weite bemessen zwischen den einander zugewandten Anschlagflächen 300a, 300b verkleinert. Dadurch werden die am Teiletransportträger 48' gemeinsam angelieferten Teile 3a, 3b und Baugruppe 122 entlang der Auflaufschrägen 296a, 296b auf die Auflageelemente 295a, 295b aufgeschoben und von der Transportstellung 294, 294' am Teiletransportträger 48', insbesondere dessen Aufnahmen 51', 131a, 131b, in die Bereitstellungsposition 302, 302' angehoben sowie an den Auflageflächen 297a, 297b aufgelagert. Gleichzeitig dringen die Spannwerkzeuge 282a, 282b, insbesondere deren Spannsegmente 298 in die Hülsen 16 der Teile 3a, 3b vor und werden die Teile 3a, 3b von den Spannwerkzeugen 282a, 282b aufgenommen. Während dem Aufschieben der Teile 3a, 3b auf die Spannwerkzeuge 282a, 282b sind die Spannsegmente 298 in einer unbetätigten Ausgangsstellung.

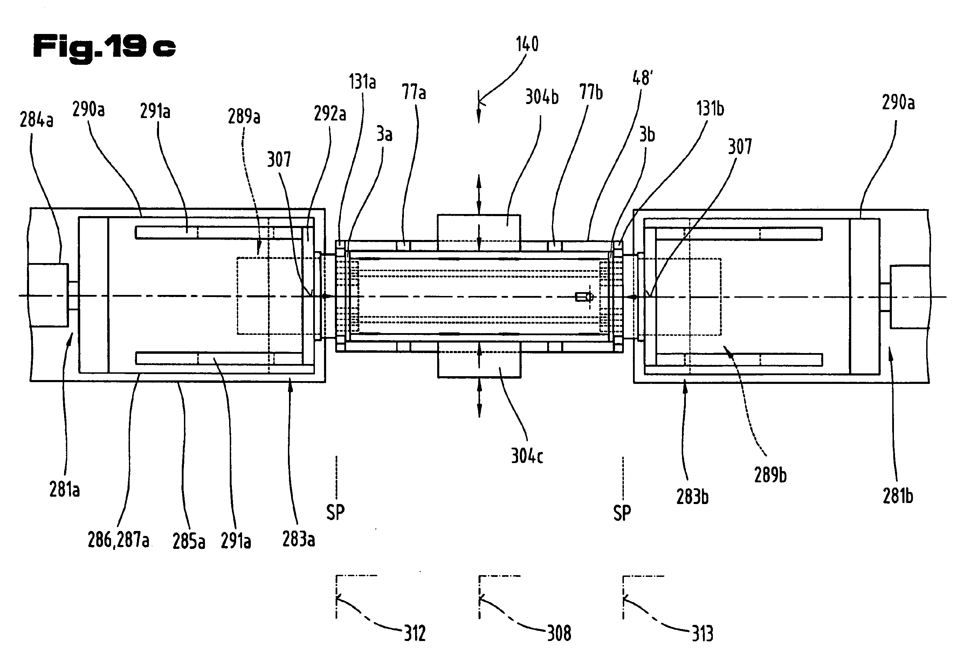

Gemäß Fig. 19b und 19c werden vorzugsweise beide Spannwerkzeuge 282a, 282b der Spanneinheiten 280a, 280b aus den Zwischenpositionen (ZP) in die Spannpositionen (SP) synchron aufeinander zugestellt bis die Anschlagflächen 300a, 300b gegen die Stirnflächen der Teile 3a, 3b anliegen und die Teile 3a, 3b mit entgegengerichteten Spannkräften - gemäß den eingetragenen Pfeilen 307 - gegen die Baugruppe 122 gespannt sind. Dabei werden die Teile 3a, 3b und Baugruppe 122 relativ zueinander verstellt, sodass diese in Richtung einer Längserstreckung der Teile 3a, 3b/Baugruppe 122 bzw. in einer ersten Raumrichtung positioniert und gespannt sind.

In einer anderen Ausführung wird nur eines der Spannwerkzeuge 282b der Spanneinheiten 280b von der Ausgangsposition (AP) in die Spannposition (SP) verstellt, während das andere Spannwerkzeuge 282a der Spanneinheiten 280a in der Zwischenposition (ZP) als Spannposition (SP) verharrt. Die Istwerte der Spannkraft bzw. Spannkräfte und Spann- und Verfahrwege werden erfasst, der Auswerteeinheit 38 gemeldet und mit den Sollwerten verglichen sowie die Qualitätsmerkmale ausgewertet, wie noch beschrieben wird.

Gemäß den Fig. 19a und 19c werden als nächstes die Anpresselemente 202 bis 204 auf die Baugruppe 122 zugestellt. Die Baugruppe 122 wird über die Anpresselemente 304a, 304b, 304c von oben und seitlich mit Anpresskräften beaufschlagt. Die Anpresskräfte sind so gewählt, dass die Baugruppe 122 gegenüber den Teilen 3a, 3b und/oder den Spannflächen 300a, 300b der Spannwerkzeuge 282a, 282b in einer zweiten und dritten Raumrichtung geringfügig verschoben werden kann. Auf diese Weise wird die Baugruppe 122 auch in der zweiten und dritten Raumrichtung positioniert sowie in die im Raum definierte Spannposition 308 bewegt als auch in dieser fixiert.

Darauffolgend werden die Teile 3a, 3b aus ihrer Bereitstellungsposition 302' in die Spannposition 312, 313 bewegt, indem die Spannsegmente 298 der Spannwerkzeuge 282a, 282b betätigt und aus ihrer Ausgangsstellung in eine Betätigungsstellung verstellt und dabei gegen die Innenfläche der Hülsen 16 angepresst werden, wie in Fig. 19c eingetragen. In der Betätigungsstellung der Spannsegmenten 298 sind die Teile 3a, 3b auf diesen zentriert aufgenommen und bilden die Mittelachsen beider Hülsen 16 eine gemeinsame Achse. Somit werden die Teile 3a, 3b gegenüber die im Raum festgelegte Baugruppe 122 in der zweiten und dritten Raumrichtung positioniert sowie in die im Raum definierte Spannposition 312, 313 bewegt als auch in diesen fixiert gehalten.

Mit den Spannwerkzeugen 282a, 282b, insbesondere den Spannsegmenten 298, können auch Maßabweichungen der Hülse 16 korrigiert werden, indem die Spannsegmente 298 soweit radial nach außen bewegt werden, dass die Hülsen 16 der Teile 3a, 3b von einer Istform in eine Sollform umgeformt werden, wie dies in der AT 1278/2004 beschrieben ist und Gegenstand der vorliegenden Anmeldung bilden kann. Dadurch können nun auch geringfügige Formabweichungen der Hülsen 16 auf einfache Weise beseitigt werden. In der formgebenden Betätigungsstellung werden die Spannsegmente 298 der Spannwerkzeuge 282a, 282b gegen die Innenfläche der Hülse mit einer Vorspannkraft angepresst, sodass die Hülse 16 elastisch und/oder plastisch verformt wird.

Nachdem die Teile 3a, 3b und Baugruppe 122 in den drei Raumrichtungen positioniert und in die jeweilige Spannposition 308, 312, 313 bewegt, in dieser gespannt und fixiert sowie die Qualitätsmerkmale überprüft und positiv ausgewertet wurden, werden die Teile 3a, 3b mit der Baugruppe 122 an den Fügestellen 18a, 18b, 18c; 19a, 19b mittels Fügenähten 21 miteinander verbunden, insbesondere verschweißt. Die Fügenähte 21 sind durch 1-Nähte gebildet, sodass eine Positioniergenauigkeit der Teile 3a, 3b in einer quer zur Längserstreckung der Baugruppe 122 verlaufenden Ebene von 0,1 mm bis 0,5 mm ausreichend ist. Während dem Fügevorgang, werden die Spannwerkzeuge 282a, 282b, die Spannsegmenten 298 und die Anpresselemente 304a, 304b, 304c ruhig gehalten.

Ist der Fügevorgang beendet ist, werden die Spannwerkzeuge 282a, 282b aus deren Spannpositionen (SP) in die Ausgangspositionen (AP) bewegt und dabei durch Vergrößerung des Abstandes 305 die fertig gefügte Baugruppe 147 wiederum auf den vorzugsweise während dem Spann- und Fügevorgang in der Halteposition 142 verharrenden Teiletransportträger 48' abgesetzt und aus der Fügestation 128 abtransportiert.

Die Zwischenposition (ZP) wird vor Inbetriebnahme des Fertigungssystems 1 für jede der oben genannten Spanneinrichtungen festgelegt und liegt etwa zwischen 0,3 mm und 5 mm, insbesondere zwischen 1 mm und 3 mm, vor den Anlageflächen 10, 12 bzw. Stirnflächen der Teile 1, 2, 3a, 3b.

Auch sei an dieser Stelle zusammenfassend erwähnt, dass von jenen Spannwerkzeugen, die aus der Zwischenposition (ZP) in die Spannposition (SP) verfahren, die Istwerte der Spannkräfte und Verfahr- und Spannwege erfasst, mit den Sollwerten verglichen und die Qualitätsmerkmale ausgewertet werden, während von denjenigen Spannwerkzeugen, die ausschließlich in die einer Spannposition (SP) entsprechenden Zwischenposition (ZP) verfahren, nur die Istwerte der Verfahrwege erfasst und diese mit den Sollwerten zur Lageregelung bzw. Positionierung der Spannwerkzeuge verglichen werden.

Nach den beschriebenen Verfahrensweisen werden entweder beide Spannwerkzeuge 201a, 201b, 255a, 255b, 262a, 262b; 282a, 282b der Spanneinheiten 114 bis 116; 144 gegeneinander bzw. gegenläufig oder wird nur eines der Spannwerkzeuge 201 a, 201 b, 255a, 255b, 262a, 262b; 282a, 282b der Spanneinheiten 114 bis 116; 144 von der Ausgangsposition (AP) in die Spannposition (SP) verstellt. Letztere Verfahrensweise wird dann eingesetzt, wenn die Teile 1, 2, 3a, 3b mit relativ hoher Genauigkeit gefertigt sind, wie beispielsweise durch Feinstanzen, Tiefziehen oder Massiwmformen.

In den gemeinsam beschriebenen Fig. 20 bis 22 wird nun ein Verfahren zum Positionieren und Überprüfen eines Qualitätsmerkmales eines weiter zu verarbeitenden Teiles 1 bis 3b sowie ein Verfahren zum Fügen der Teile 1 bis 3b in einer der vorangegangen beschriebenen Fügestation 43; 128 näher beschrieben. Im Nachfolgenden wird der Positionier- und Spannvorgang für die Teile 1, 2 beschrieben.

Zunächst wird der erste Teil 1 mittels der Spannwerkzeuge 201a, 201b vom Teiletransportträger 48 aus der Transportstellung 219 in die Bereitstellungsposition 270 bewegt, indem die Spannwerkzeuge 201a, 201b jeweils aus der Ausgangsposition in die Zwischenposition verfahren. Dies erfolgt bevorzugt mit hoher Geschwindigkeit, um dadurch die Taktzeit für das Positionieren und Spannen des ersten Teiles 1 möglichst niedrig zu halten. In der Zwischenposition sind die Anschlagfläche 217a, 217b der Spannwerkzeuge 201a, 201 b knapp vor den Stirn- bzw. Anlageflächen 12 des ersten Teiles 1 positioniert, jedoch liegt der Teil 1 bereits an den Auflaufschrägen 215a, 215b oder den horizontalen Auflageflächen 216a, 216b auf.

Die Fig. 20 bis 22 zeigen die Auswertung bzw. Aufzeichnung des Verfahr- und Spannweges sowie der Spannkraft beispielsweise auf den Teil 1 eines zwischen der Zwischen- und Spannposition verfahrenden Spannwerkzeuges 201b. Dazu werden nun vorzugsweise die Istwerte der Verfahr- und Spannwege als auch der Spannkraft laufend erfasst und der in Fig. 3 eingetragenen, elektronischen Auswerteeinheit 38 übermittelt, sodann in dieser mittels dem Vergleichsmodul 39 ein Soll- und Istwert-Vergleich der Verfahr- und Spannwege als auch der Spannkraft auf den Teil 1, vorzugsweise laufend durchgeführt.

Gemäß der Erfindung ist es nun vorgesehen, dass der Sollwert für die Spannkraft des Spannwerkzeuges 201b durch ein Toleranzfeld mit einer Untergrenze 315 und einer Obergrenze 316 und der Sollwert für den zurückgelegten Verfahr- und/oder Spannweg des Spannwerkzeuges 201b durch ein Toleranzfeld mit einer Untergrenze 317 und einer Obergrenze 318 begrenzt vorgegeben wird. Die Unter- und Obergrenzen 315 bis 318 definieren ein Toleranzfenster. Für die Überwachung des Spannvorganges bzw. den kontrollierten Spannvorgang wird der sich zwischen der Zwischen- und endgültigen Spannposition zurückgelegte bzw. erstreckende Verfahr- und/oder Spannweg und die Spannkraft bezogen auf den Verfahr- und/oder Spannweg aufgezeichnet.

Durch die Relativbewegung der Spannwerkzeuge 201a, 201b wird nachdem die Anschlagflächen 217a, 217b gegen die Stirn- bzw. Anlageflächen 10 vom Teil 1 anliegen, der Teil 1 geringfügig vorgespannt, infolge dessen die Spannkraft ansteigt.

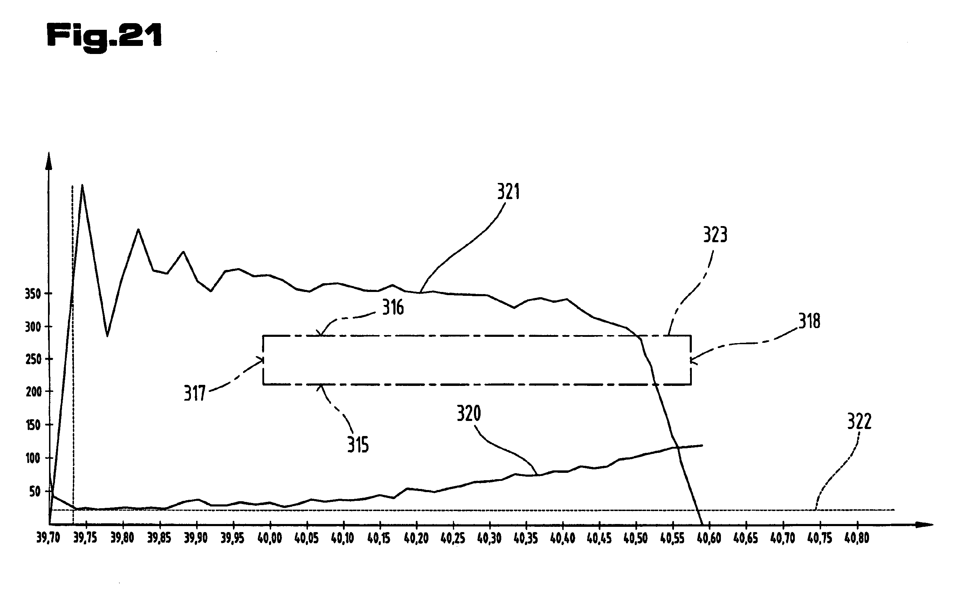

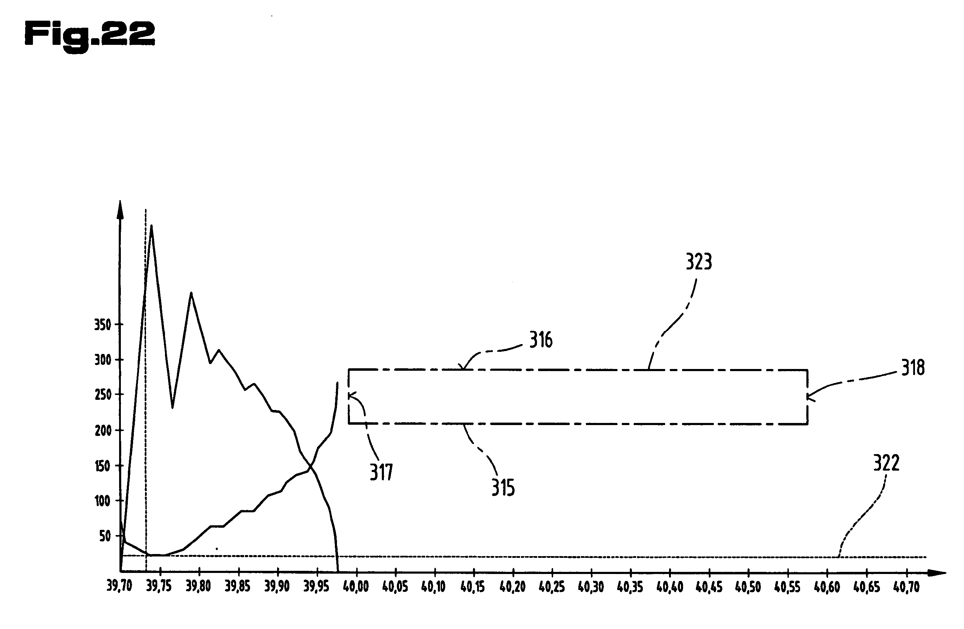

Wie bereits oben beschrieben, ist nun mit dem erfindungemäßen Verfahren ein Überprüfen eines Qualitätsmerkmales, insbesondere der Maßhaltigkeit des Teiles 1, möglich. So kann nun festgestellt werden, ob seine Länge 267 innerhalb vorgegebener Toleranzen gefertigt wurde. Beispielsweise sind abhängig vom Fügeverfahren die Toleranzgrenzen +/- 0,2 mm. Übersteigt die Länge 267 des ersten Teiles 1 die untere oder obere Toleranzgrenze, kann die Gesamtgenauigkeit der herzustellenden Baugruppe 122, 147 nicht mehr sichergestellt werden und muss dieser unzureichend genaue Teil 1 als Schlechtteil aus dem Fertigungsprozess ausgeschleust werden, wie zu den Diagrammen aus Fig. 21 und 22 näher erläutert.

Fig. 20 zeigt die Auswertung der Spannkraft und der Verfahr- und Spannwege von einem Teil 1, dessen Qualitätsmerkmal, insbesondere die Maßhaltigkeit innerhalb vorgegebener Toleranzgrenzen, erfällt ist. Wie aus dem Diagramm erkennbar, wird die Spannkraft 320 auf den Teil 1 und die Verstellgeschwindigkeit 321 des Spannwerkzeuges 201b über den Verfahr- und Spannweg zwischen der Zwischen- und Spannposition ausgewertet. Vorzugsweise wird die während der Verstellung des Spannwerkzeuges 201b zwischen der Zwischen- und Spannposition auftretende Reibkraft 322 aus dem ausgeübten Drehmoment bzw. Motorstrom des Elektromotors 188b für diese Spanneinrichtung 194b während dem Spannvorgang erfasst. Die Reibkraft 322 wird an der vertikalen, strichlierten Linie in die Steuereinrichtung 36 als Betrag eingelesen und von dieser automatisch die Unter- und Obergrenze 315, 316 des Sollwertes für die Spannkraft mit dem Betrag der Reibkraft 322 beaufschlagt.

Wird das Spannwerkzeug 201b von der Zwischen- in die Spannposition verfahren, treffen die Anschlagflächen 217a, 217b an den Anlageflächen 10 des Teiles 1 auf und steigt infolge der zunehmenden Vorspannung im Teil 1 die Spannkraft an. Auf dem Verfahrweg von der Zwischenposition bis zur Anlagefläche 10 bzw. zum Spannbeginn des Teiles 1 wird nur die beim Verfahren des Spannwerkzeuges 201b vom Linearantrieb 184b zu überwindende Reibkraft erfasst. Gleichzeitig wird die Verfahrgeschwindigkeit des Spannwerkzeuges 201b bzw. der Spanneinrichtung 194b ausgewertet. Wie ersichtlich, wird das Spannwerkzeug 201b aus der Zwischenposition heraus kurzzeitig beschleunigt und danach mit zunehmend ansteigender Spannkraft vom Geschwindigkeitsmaximum bis auf ein Geschwindigkeitsminimum geregelt abgebremst. Das Geschwindigkeitsminimum beträgt 0 mm/sec. Die Geschwindigkeitsregelung erfolgt mittels an sich bekannter Regelungen.

Der Teil 1 wird als "Gutteil" ausgewertet und das zumindest eine Spannwerkzeug 201 b in seiner Spannbewegung angehalten, sofern der Istwert des zurückgelegten Verfahr- und Spannweges vom aus der Zwischen- in die Spannposition verstellten Spannwerkzeuges 201b und der Istwert der Spannkraft auf den Teil 1 innerhalb des Toleranzfensters liegen. Mit anderen Worten, müssen in der Spannposition des Teiles 1, daher wenn dieser positioniert, gespannt und fixiert ist, die Spannwerkzeuge 201a, 201b soweit aufeinander zugestellt sein, dass eine Vorspannung im Teil 1 aufgebaut wird und dabei der Istwert der Spannkraft zwischen der Unter- und Obergrenze 315, 316 liegt.

Nachdem der Teil 1 den Qualitätsanforderungen entspricht und von der Steuereinrichtung 36 als "Gutteil" verifiziert wurde, wird der Teil 1 in seiner Spannposition 272 mittels den Anpresselementen 230a, 230b fixiert, die Spanneinheit 115, insbesondere zumindest eine der Spanneinrichtungen 195a, 195b von der Steuereinrichtung 36 angesteuert und der Spannvorgang als auch eine Überprüfung eines Qualitätsmerkmals, insbesondere die Maßhaltigkeit des zweiten Teiles 2 gestartet. Demnach wird der erste Teil 1 nur dann einem weiteren Arbeitsprozess bereitgestellt, wenn dieser auch die Qualitätsanforderungen erfüllt. Der Teil 1 und die Spannwerkzeuge 201a, 201b werden in der Zwischenzeit in seiner Spannposition unverändert gehalten.

Zunächst wird der Teil 2 mittels der zweiten Höhenpositioniervorrichtungen in die Bereitstellungsposition 270' zwischen zwei zusammenwirkende Spannwerkzeugen 255a, 255b positioniert. Danach werden die Spannwerkzeuge 255a, 255b aus ihren Ausgangspositionen in die Zwischenpositionen verfahren und in diesen kurz angehalten. Darauffolgend wird zumindest eines der Spannwerkzeuge 255b von der Zwischen- in die Spannposition verfahren. Treffen die Anschlagflächen 269a, 269b an den Anlageflächen 12 des Teiles 2 auf und steigt infolge der zunehmenden Vorspannung im Teil 2 die Spannkraft an. Die Geschwindigkeitsregelung erfolgt auf gleicher Basis wie oben beschrieben. Der Teil 2 wird als "Gutteil" ausgewertet und das zumindest eine Spannwerkzeug 255b in seiner Spannbewegung angehalten, sofern der Istwert des zurückgelegten Verfahr- und Spannweges vom aus der Zwischen- in die Spannposition verstellten Spannwerkzeuges 255b und der Istwert der Spannkraft auf den Teil 2 innerhalb des Toleranzfensters liegen. Während der Verstellbewegung des Spannwerkzeuges 255b wird der zweite Teil 2 gegenüber dem ersten Teil 1 in zumindest eine Raumrichtung, insbesondere in Richtung deren Längserstreckung positioniert.

Vorzugsweise werden die Teile 1, 2 mittig zueinander ausgerichtet, daher verlaufen die quer zur Verstellrichtung - gemäß den in Fig. 18a eingetragenen Doppelpfeil 323 - zumindest eines Spannwerkzeuges 255b verlaufenden Mittelachsen der Teile 1, 2 deckungsgleich. Sind beide Spannwerkzeuge 201a, 201b, 255a, 255b der Spanneinheiten 194a, 194b, 195a, 195b relativ zueinander verstellbar, werden die Teile 1, 2 alleinig auf Grund der synchronen Zustellbewegung derselben mittig zueinander gespannt. Dadurch ist es möglich, dass die Fertigungstoleranzen der Teile 1, 2 in Verstellrichtung - gemäß Doppelpfeil 323 - so aufgeteilt werden, dass der Fügespalt 27a, 27b auf beiden gegenüberliegenden Seiten - wie in Fig. 2 für eine Seite der Baugruppe eingetragen - auf ein zulässiges Maß gleich eingestellt wird. Liegt dieses Maß innerhalb der durch den Fokus des Laserstrahls vorgegebenen Abmessung von etwa 0,3 mm bis 0,6 mm, wird der zweite Teil 2 beim Positionier- und Spannvorgang als "Gutteil" ausgewertet. Würde hingegen nur auf einer Seite der Fügespalt 27a eingestellt, wäre dieser unzulässig breit, der zweite Teil 2 beim Positionier- und Spannvorgang als "Schlechtteil" ausgewertet, sodass ein Fügen, insbesondere Laserschweißen, nicht mit einer entsprechenden Qualitätsgüte erfolgen könnte. In der Praxis hat sich gezeigt, dass die Spannwerkzeuge 201a, 201b, 255a, 255b der Spanneinheiten 194a, 194b, 195a, 195b synchron aufeinander zugestellt werden sollen, wenn mit höheren Fertigungstoleranzen des(r) Teile(s) 1, 2 gerechnet werden muss. Auf diese Weise können nun auch Teile 1, 2 minderwertigerer Qualität verwendet werden, ohne Einbuße der Gesamtgenauigkeit an der Baugruppe 122, 147.

Erst nachdem auch der zweite Teil 2 als "Gutteil" ausgewertet und freigegeben wurde, werden die beiden Teile 1, 2 miteinander gefügt. Dies hat den Vorteil, dass ausschließlich Teile 1, 2 miteinander gefügt werden, die den Qualitätsmerkmalen entsprechen, insbesondere die Maßhaltigkeit einhalten, und eine Baugruppe 122 geschaffen wird, die höchsten Anforderungen an die Fertigungsgenauigkeit gerecht wird.

Dabei ist von Vorteil, wenn das Fügen der Teile 1, 2 mittels Laser- oder Plasmaschweißen erfolgt, da einerseits ein guter Kompromiss zwischen flexibler Fertigung und andererseits hoher Fertigungsgenauigkeit getroffen werden kann. Der beim Laser- oder Plasmaschweißen wärmebedingte Verzug infolge Schweißspannung ist nahezu vernachlässigbar gering und die hohen Anforderungen an die Maßhaltigkeit können eingehalten werden. Von Vorteil ist aber auch, wenn das Fügen durch Kleben erfolgt, wodurch die Maßgenauigkeit in noch engeren Toleranzgrenzen eingehalten werden kann.

Nachdem die Teile 1, 2 miteinander gefügt wurden, wird diese gefügte Baugruppe 122 wiederum auf einen Teiletransportträger 48 abgesetzt und mittels diesen aus der Fügestation 43 abtransportiert und gegebenenfalls einer weiteren Fügestation 128 zugeführt.

Andererseits wird das Spannwerkzeug 201b in seiner Spannbewegung angehalten und der Teil 1 aus dem aktuellen Arbeitsprozess als Schlechtteil ausgewertet, sofern der Istwert des zurückgelegten Verfahr- und Spannweges vom aus der Zwischen- in die Spannposition verstellten Spannwerkzeuges 201b und/oder der Istwert für die Spannkraft auf den Teil 1 außerhalb des vorgegebenen Toleranzfensters liegt(en), wie dies in den Fig. 21 und Fig. 22 dargestellt ist. Gemäß Fig. 21 ist erkennbar, dass der Teil 1 nicht der geforderten Maßhaltigkeit entspricht und das Mindestmaß unterschreitet, daher zu kurz ist. Demnach müsste das Spannwerkzeuges 201b bis weit über die Obergrenze 318 des Verfahr- und Spannweges verfahren, um den Sollwert für die Spannkraft auf den Teil 1 zu erreichen.

Da zweckmäßig in Abhängigkeit vom Kraftanstieg die Verfahrgeschwindigkeit des Spannwerkzeuges 201 b geregelt, insbesondere nur mit zunehmenden Kraftanstieg die Verfahrgeschwindigkeit des Spannwerkzeuges 201b zunehmend verringert wird, ergibt sich der Vorteil, dass die Verfahrgeschwindigkeit des Spannwerkzeuges 201 b über einen weiten Bereich des Verfahr- und Spannweges nur um einen geringen Wert in Bezug auf das Geschwindigkeitsmaximum reduziert wird. Die Spannkraft ist über einen weiten Bereich des Verfahr- und Spannweges annähernd konstant, weshalb auch die Verfahrgeschwindigkeit des Spannwerkzeuges 201b über diesen Bereich annähernd konstant gehalten wird. Erst nachdem durch die Regelung festgestellt wird, dass der Sollwert des Verfahr- und Spannweges und/oder der Spannkraft außerhalb des Toleranzfensters liegen wird, wird das Spannwerkzeug 201b geregelt verzögert und angehalten.

Ist hingegen der Teil 1 zu lang, gemäß der Darstellung in Fig. 22, daher entspricht er nicht der geforderten Maßhaltigkeit und wird das Höchstmaß überschritten, erreicht die Spannkraft noch vor dem Erreichen der Untergrenze 317 für den Verfahr- und Spannweges ihren Sollwert. Da die Spannkraft nun übermäßig stark ansteigt, wird gleichzeitig die geregelte Verfahrgeschwindigkeit des Spannwerkzeuges 201b stark reduziert.

Nachdem der Teil 1 den Qualitätsanforderungen nicht entspricht und von der Steuereinrichtung 36 als "Schlechtteil" verifiziert wurde, wird der Spannvorgang beendet und dieser Teil 1 aus dem aktuellen Arbeitsprozess ausgeschleust. Dazu wird vorerst das Spannwerkzeug 201b entgegen der Spannbewegung aus der Spann- in die Zwischen- oder Ausgangsposition zurückgestellt. Mit abnehmender Spannkraft wird die Verfahrgeschwindigkeit des Spannwerkzeuges 201b zunehmend bis auf das Geschwindigkeitsmaximum erhöht. Da sämtliche Bewegungen des Spannwerkzeuges 201b mit optimierten Verfahrgeschwindigkeiten von statten gehen, wird die Fügestation 43, 128 nur für eine kurze Zeitdauer blockiert.

Wesentlich ist, dass für jedes der zwischen der Zwischen- und Spannposition verfahrenden Spannwerkzeuge 201b, 269b ein Soll-Istwert-Vergleich der Verfahr- und Spannwege sowie Spannkräfte in der Auswerteeinheit 38 (siehe Fig. 3) durchgeführt wird und anhand dessen die Verifizierung zwischen "Gutteil" und "Schlechtteil" erfolgt.

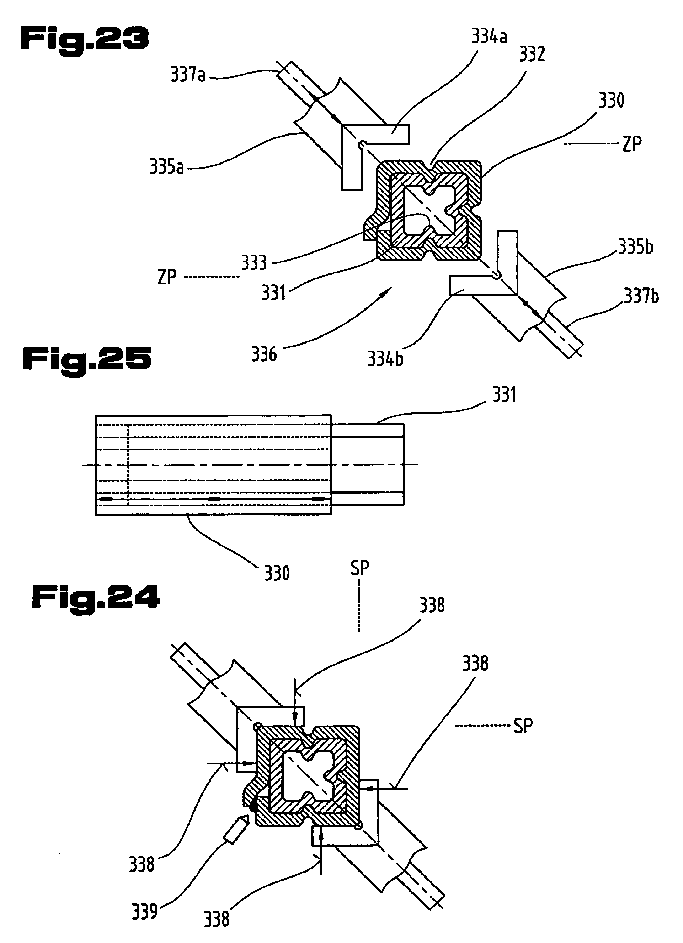

In den gemeinsam beschriebenen Fig. 23 bis 25 ist eine andere Ausführung einer Baugruppe in unterschiedlichen Ansichten gezeigt, die mit der erfindungsgemäßen Fertigungsanlage mit einer anderen Ausführung von Spanneinheiten des Spannsystems bzw. nach dem erfindungsgemäßen Verfahren hergestellt wird. Diese Baugruppe besteht aus zumindest zwei profilartigen Teilen 330, 331, die nach diesem Ausführungsbeispiel ineinander geführt und über Einformungen 332, 333 zueinander verdrehgesichert angeordnet sind. Die Teile 330, 331 sind vorzugsweise aus einem Umformteil, insbesondere Stanz- und Biegeteil oder Massivumformteil hergestellt. Der äußere Teil 330 weist auf seiner Innenseite einander zugewandte Führungsflächen auf, die zumindest abschnittsweise durch die Innenkontur des Teiles 330 gebildet sind und zwischen denen der innere Teil 331 aufgenommen ist. Der innere Teil 331 bildet an seiner Außenseite zumindest abschnittsweise Führungsflächen aus, die durch die Außenkontur des Teiles 331 gebildet sind und den Führungsflächen des äußeren Teiles 330 zugewandt sind.

Die Teile 330, 331 werden zunächst jeweils in eine in Fig. 23 dargestellte Bereitstellungsposition zwischen zusammenwirkende Spannwerkzeuge 334a, 334b von nur schematisch angedeuteten Spanneinrichtungen 335a, 335b einer Spanneinheit 336 verbracht und danach in oben beschriebener Weise mittels wenigstens einem aus einer Zwischenposition in eine Spannposition verstellbaren Spannwerkzeug 334a; 334b gespannt. Zuvor werden beide Spannwerkzeuge 334a, 334b in die Zwischenposition, wie in Fig. 23 dargestellt, verfahren und in diesen gegebenenfalls angehalten. Das Spannwerkzeug 334b verharrt nach diesem Ausführungsbeispiel in der, der Spannposition entsprechenden Zwischenposition, während das Spannwerkzeug 334a aus der Zwischenposition in die Spannposition bewegt und gegen den Teil 330 mit entgegengerichteten Spannkräften bzw. Spannkraftkomponenten - gemäß den Pfeilen 338 - angepresst wird. Andererseits können auch beide Spannwerkzeuge 334a, 334b jeweils aus deren Zwischenposition in die Spannposition synchron aufeinander zugestellt werden. Die beschriebenen Spanneinrichtungen 335a, 335b umfassen Antriebseinheiten 337a, 337b, die als Linearantriebe mit jeweils einem das Spannwerkzeug 334a, 334b lagernden Schlitten (nicht dargestellt) ausgebildet sind. Der Schlitten bildet die Rüstplattform aus.

Auch nach dieser Ausführung wird der Istwert der Spannkraft auf den Teil 330 und/oder zurückgelegtes Verfahr- und Spannweges vom aus der Zwischen- in die Spannposition zu verstellenden Spannwerkzeug 334a; 334b erfasst und einer elektronischen Auswerteeinheit übermittelt, sodann in dieser ein Soll-Istwert-Vergleich der Spannkraft und/oder oder vom Verfahr- und Spannweg durchgeführt, wie dies bereits oben hinlänglich beschrieben wurde.

Der Sollwert der Spannkraft und/oder des Verfahr- und Spannweges des(r) Spannwerkzeuge(s) 334a; 334b wird dabei so festgelegt, dass der innerhalb des äußeren Teiles 330 angeordnete, innere Teil 331 elastisch und/oder plastisch verformt wird.

Der äußere Teil 330 wird mittels dem(n) Spannwerkzeug(en) 334a; 334b solange entgegen der Wirkung der elastischen Rückstellkraft vom inneren Teil 331 verformt bzw. bewegt, bis der Istwert der Spannkraft und/oder des Verfahr- und Spannweges dem Sollwert der Spannkraft und/oder des Verfahr- und Spannweges entspricht. Dabei kommen die korrespondierenden Führungsflächen der Teile 330, 331 zur flächigen Anlage. Nachdem der Istwert den Sollwert erreicht hat und der innere Teil (331) über den äußeren Teil (330) vorgespannt ist, wird der äußere Teil 330 im Bereich seiner sich überlappenden Längsränder (Fügestelle) zumindest in Teilabschnitten miteinander gefügt, insbesondere mittels Laser-, Elektronenstrahl- oder Plasmaschweißen verschweißt oder verklebt, wie in den Fig. 24 und 25 eingetragen. Die Fügeeinrichtung, insbesondere ein Strahlschweißkopf 339, ist in Fig. 24 schematisch angedeutet. Zweckmäßig ist der Elastizitätsmodul vom inneren Teil 331 kleiner als der des äußeren Teiles 330. Beispielsweise kann der äußere Teil 330 geringfügig plastisch und der innere Teil 331 rein elastisch verformt werden. Eine solche Baugruppe kann beispielsweise als teleskopierbare Lenkwelle für ein Kraftfahrzeug eingesetzt werden.

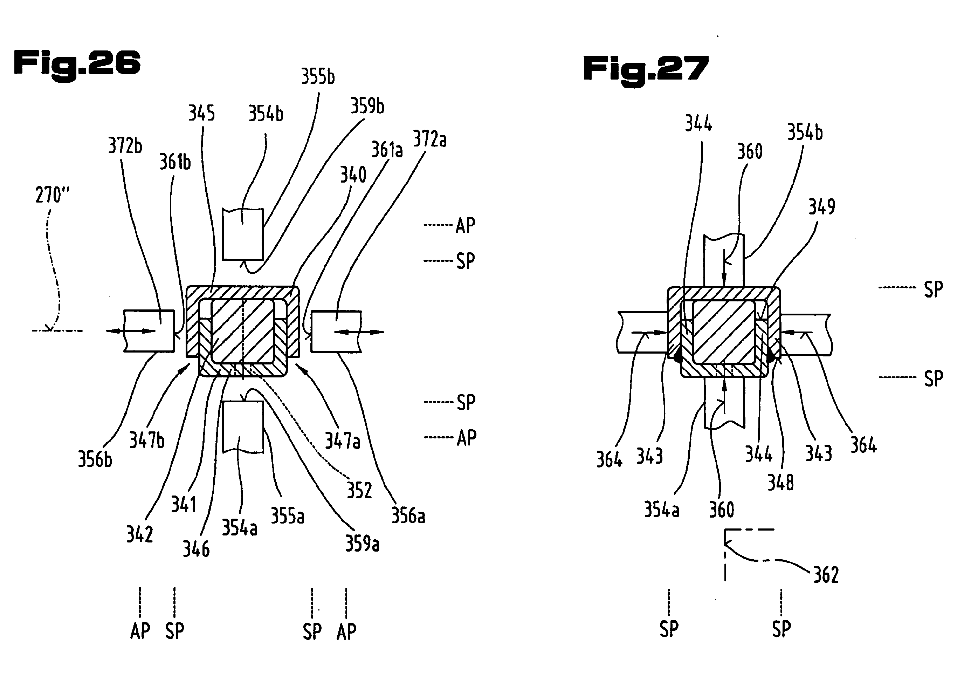

In den gemeinsam beschriebenen Fig. 26 bis 29 ist eine andere Ausführung einer Baugruppe dargestellt, die mit der erfindungsgemäßen Fertigungsanlage mit einer anderen Ausführung von Spanneinheiten des Spannsystems bzw. nach dem erfindungsgemäßen Verfahren hergestellt wird. Diese Baugruppe besteht aus drei Teilen, den beiden äußeren Teilen 340, 341 und einem zwischen diesen gelagerten, mittleren Teil 342. Die äußeren Teile 340, 341 sind in einer zu deren Längserstreckung senkrechten Ebene, im wesentlichen U-förmig ausgebildet und weisen im Abstand voneinander angeordnete, parallele Schenkel 343, 344 und eine diese verbindende Basis 345, 346 auf. Die Schenkeln 343, 344 der äußeren Teile-340, 341 sind aufeinander zugerichtet. Dabei können die Schenkeln 343, 344 der Teile 340, 341, wie in den Fig. 26 bis 28 dargestellt, an Fügestellen 347a, 347b einander überlappend angeordnet sein, sodass gegenüberliegende Stirnkanten 348, 349 der U-Teile 340, 341 im Abstand voneinander angeordnet oder die Stirnkanten 348, 349 aufeinander zugerichtet und gegeneinander angelegt sind. Die Teile 340, 341, 342 sind aus Metall und/oder Kunststoff auf Maß hergestellt. Aufgrund von Fertigungstoleranzen ist jedoch vielfach die Maßhaltigkeit der einzelnen Teile 340 bis 342 unzureichend und die Endqualität der Baugruppe nicht zufriedenstellend.

Ist nun gefordert, dass der mittlere Teile 342 unter Krafteinwirkung, insbesondere ab einer definierten Lösekraft, gegenüber die äußeren Teile 340, 341 in Richtung der Längserstreckung der Baugruppe verschoben werden kann, wird ein reproduzierbares Verhalten der Loslöskraft dadurch erreicht, dass der mittlere Teil 342 zwischen den beiden äußeren Teilen 340, 341 vorgespannt ist, insbesondere der mittlere Teil 342 elastisch und/oder plastisch verformt wird. Eine solche Baugruppe kann beispielsweise als sogenannte Blockiervorrichtung einer Diebstahlsicherung oder Crashvorrichtung an einer Lenkwelle eines Kraftfahrzeuges oder eine Überlastsicherung an einer Fügeverbindung, insbesondere als Rutschkupplung, eingesetzt werden. Der mittlere Teil 342 ist zwischen den beiden äußeren Teilen 340, 341 reibschlüssig gelagert. Übersteigt die Loslöskraft die maximal zulässige Reibkraft, wird der Reibschluss gelöst und der innere Teil 342 kann gegenüber den äußeren Teilen 340, 341 verschoben werden. Auf dem Verschiebeweg wird kinetische Energie abgebaut. Wird diese Baugruppe als Crashvorrichtung eingesetzt, kann auf dem Verschieb beweg die auf das Fahrzeug einwirkende Aufprallenergie in einem Unfall abgebaut und die Verletzungsgefahr auf den Fahrzeuglenker reduziert werden.

Die Teile 340, 341 sind vorzugsweise aus einem Blechumformteil hergestellt. Der innere Teil 342 bildet mit den miteinander gefügten, äußeren Teilen 340, 341 eine Presspassung aus. Die äußeren Teile 340, 341 weisen auf ihrer Innenseite zumindest abschnittsweise einander zugewandte Führungsflächen auf, die an der Basis 345,346 ausgebildet sind und zwischen denen der innere Teil 342 angeordnet ist. Der innere Teil 342 bildet an seiner Außenseite zumindest abschnittsweise Führungsflächen aus, die durch Abschnitte der Außenkontur des Teiles 342 gebildet sind und den Führungsflächen der äußeren Teile 340, 341 zugewandt sind. Der mittlere Teil ist an der Basis 345, 346 der Teile 340, 341 abgestützt. Der innere Teil 342 liegt zumindest bereichsweise mit seiner Außenkontur an der Innenkontur der äußeren Teile 340, 341 mit einer Vorspannkraft an. Die Vorspannkraft ist dabei so hoch gewählt, dass sie der maximal zulässigen Reibkraft entspricht. Vorzugsweise ist der Elastizitätsmodul vom inneren Teil 342 kleiner als der der äußeren Teile 340, 341. Im Nachfolgenden wird das Verfahren zur Herstellung dieser Baugruppe näher beschrieben.

Die Teile 340 bis 342 werden vorzugsweise jeweils von einer Teilebereitstellung mittels mindestens einem Handhabungssystem entnommen und auf einen von mehreren Teiletransportträgern 48 in deren Lage zueinander orientiert und grob vorpositioniert abgelegt. Dazu kann, wie oben beschrieben, der Teiletransportträger 48 mit einem Positioniermittel 80 und einer der äußeren Teil 340, 341 mit einer Positionieröffnung 352 versehen werden. Diese Teile 340 bis 342 werden gemeinsam mittels dem Teiletransportträger 48 der Transporteinrichtung 46 der Fügestation 350 zugeführt und in dieser in einer Halteposition angehalten. Darauffolgend werden die Teile 340, 341 über zumindest ein Auflagerelement einer die Höhenpositioniervorrichtung aufweisenden Hebevorrichtung gemeinsam aus der Transportstellung am Teiletransportträger 48 in die gegenüber dieser ober- oder unterhalb liegende Bereitstellungsposition 270" zwischen zusammenwirkende Spanneinrichtungen 355a, 355b, 356a, 356b der Spanneinheiten 357, 358 bewegt, insbesondere abgehoben oder abgesenkt. Dazu wird das Spannwerkzeug 354a bzw. die Spanneinrichtung 355a mittels der nicht weiters dargestellten Antriebseinheit, insbesondere einem Linearantriebe, aus deren unterhalb der Transportstellung befindlichen Ausgangsposition (AP) in eine oberhalb der Transportstellung befindliche Zwischenposition (ZP) verstellt. Die übereinander angeordneten Spanneinrichtungen 355a, 355b weisen jeweils ein Spannwerkzeug 354a, 354b und eine Antriebseinheit auf sowie bilden die erste Spanneinheit 357. Das Auflagerelement der Hebevorrichtung 353 ist nach dieser Ausführung durch das untere Spannwerkzeug 354a der ersten Spanneinheit 357 gebildet.

Die Spanneinrichtungen 355b, 356a, 356b bzw. Spannwerkzeuge 354b, 372a, 372b werden während der oder anschließend an die Verstellbewegung der Spanneinrichtung 355a bzw. des Spannwerkzeuges 354a mittels der nicht weiters dargestellten Antriebseinheiten, insbesondere Linearantriebe, aus deren Ausgangsposition (AP) in eine Zwischenposition (ZP) verstellt, wie in den Fig. in strichlierte Linien eingetragen.

Gemäß den Fig. werden die Spannwerkzeuge 354a, 354b der Spanneinrichtungen 355a, 355b relativ zueinander verstellt bis deren Anschlagflächen 359a, 359b gegen die Teile 340, 341 anliegen, sodass die äußeren Teile 340, 341 aufeinander zugestellt, positioniert sowie der mittlere Teil 342 in einer ersten Raumrichtung vorgespannt wird. Die Relativverstellung der Spannwerkzeuge 354a, 354b der Spanneinrichtungen 355a, 355b führt dazu, dass die Teile 340, 341 entgegen der Wirkung der elastischen Rückstellkraft des Teiles 342 aufeinander zugestellt werden. Erreicht nun der Istwert der Spannkraft und/oder des Verfahr- und Spannweges den Sollwert der Spannkraft und/oder des Verfahr- und Spannweges, wird die Relativverstellung der Spannwerkzeuge 354a, 354b zueinander gestoppt. Die Teile 340, 341 werden dabei mit entgegengerichteten Spannkräften - gemäß den in Fig. 27 eingetragenen Pfeilen 360 - beaufschlagt. Die Spannkräfte werden solange aufrecht erhalten, bis die Teile 340, 341 gefügt worden sind. Auf diese Weise werden die äußeren Teile 340, 341 jeweils in einer ersten Raumrichtung und zueinander positioniert sowie festgelegt.

Danach werden die Spannwerkzeuge 372a, 372b der Spanneinrichtungen 356a, 356b relativ zueinander verstellt bis Anschlagflächen 361a, 361b gegen die Teile 340, 341, insbesondere die Schenkel 343 anliegen, sodass die äußeren Teile 340, 341 jeweils in einer zweiten Raumrichtung positioniert und in eine im Raum vorgegebene Spannposition 362 bewegt sowie gegebenenfalls der mittlere Teil 342 auch in der zweiten Raumrichtung vorgespannt wird. Die Teile 340, 341 werden dabei mit entgegengerichteten Spannkräften - gemäß in Fig. 27 eingetragenen Pfeilen 364 - beaufschlagt

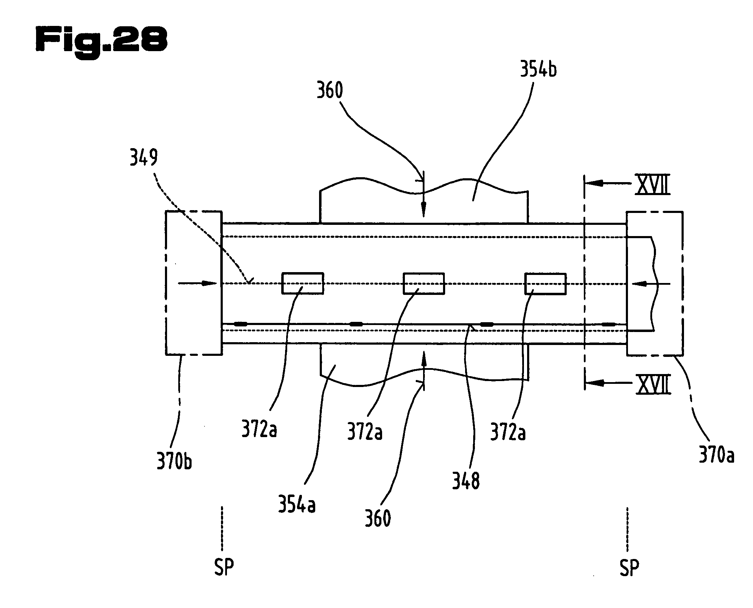

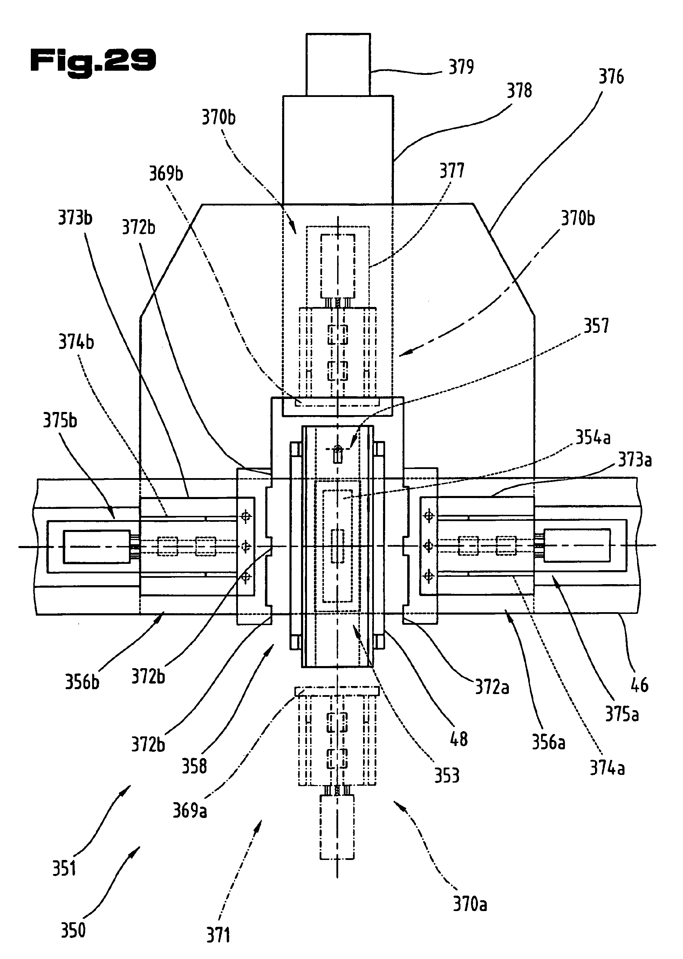

Wie in den Fig. 28 und 29 in strichpunktierten Linien eingetragen, können zumindest die äußeren Teile 340, 341, bevor sie miteinander gefügt werden, über weitere Spanneinrichtungen 370a, 370b einer dritten Spanneinheit 371 in Richtung deren Längserstreckung positioniert und die Qualitätsmerkmale, insbesondere die Maßhaltigkeit, in oben beschriebener Weise erfasst und ausgewertet werden. Die Spanneinrichtungen 370a, 370b, wie sie oben zu Fig. 14, 14a beschrieben wurde, weisen jeweils ein Spannwerkzeug 369a, 369b und eine(n) Antriebseinheit bzw. Linearantrieb auf.

Wie bereits beschrieben, können die Spannwerkzeuge 354a, 354b, 372a, 372b; 369a, 369b der ersten, zweiten als auch der dritten Spanneinheit 357, 358; 371 jeweils von der Zwischenposition (ZP) in die Spannposition (SP) synchron verfahren, indem die Elektromotoren der Antriebseinheiten elektrisch gekoppelt werden. Andererseits kann auch nur eines der Spannwerkzeuge 354a, 354b, 372a, 372b; 369a, 369b der ersten, zweiten als auch der dritten Spanneinheit 357, 358; 371 jeweils von der Zwischenposition (ZP) in die Spannposition (SP) verfahren und auf das stillstehende Spannwerkzeug 354a, 354b, 372a, 372b; 369a, 369b zugestellt werden. Die Zwischenposition (ZP) entspricht dann der Spannposition (SP).

Der Positionier- und Spannvorgang erfolgt nach oben beschriebener Weise durch Erfassen der Istwerte für Spannkraft und/oder Verfahr- und Spannweg und durch Soll-Istwert-Vergleich der Spannkraft und/oder des Verfahr- und/oder Spannweges für die aus der Zwischenposition (ZP) in die Spannposition (SP) verfahrenden Spannwerkzeuge 354a, 354b, 372a, 372b; 369a, 369b jeder Spanneinheit 357, 358; 371. Die Sollwerte für die Spannkraft und/oder Verfahr- und Spannweg ergibt sich aus der Vorgabe der Loslöskraft und wird beispielsweise empirisch aus Versuchen ermittelt, aus Erfahrungswerten gewonnen oder errechnet.

Sind nun die Spannkräfte und/oder die Verfahr- und Spannwege der Spannwerkzeuge 354a, 354b, 372a, 372b; 369a, 369b jeder Spanneinheit 357, 358; 371 innerhalb des oben beschriebenen Toleranzfensters, werden die Spannkräfte auf die Teile 340, 341 noch so lange aufrecht gehalten, bis die Teile 340, 341 an den Fügestellen 347a, 347b zumindest bereichsweise miteinander gefügt wurden. Das Toleranzfenster für die Spannkraft und/oder den Verfahr- und Spannweg eines jeden Spannwerkzeuges 354a, 354b, 372a, 372b; 369a, 369b werden vorzugsweise empirisch ermittelt, sodass die Loslöskraft zuverlässig eingestellt ist.

Zum besseren Verständnis des Aufbaus des die Spanneinheiten 357, 358; 371 umfassenden Spannsystems 351, ist dieses in Fig. 29 schematisch gezeigt.

Die nebeneinander angeordneten Spanneinrichtungen 356a, 356b weisen jeweils eine Antriebseinheit und drei über die Antriebseinheit verstellbare Spannwerkzeuge 372a, 372b auf, die über einen gemeinsamen Tragrahmen 373a, 373b an der durch einen Schlitten 374a, 374b des Linearantriebes der Antriebseinheit 375a, 375b gebildeten Rüstplattform befestigt sind. Der Tragrahmen 373a, 373b ist ausgebildet wie in den Fig. 14, 14a und weist die zwei Tragwände und eine Montageplatte auf. Die Spanneinrichtungen 356a, 356b bilden die zweite Spanneinheit 358.

Die zusammenwirkenden Spanneinrichtungen 356a, 356b sind auf einer etwa U-förmigen Befestigungsplatte 376 in Vorschubrichtung - gemäß Pfeil 65 - hintereinander angeordnet. Diese Befestigungsplatte 376 ist auf einem Schlitten 377 eines als Zustellachse 378 ausgebildeten Linearantriebes mit elektronisch geregelten Elektromotor 379 gelagert. Mittels der Zustellachse 378 können nun die zusammenwirkenden Spanneinrichtungen 356a, 356b der zweiten Spanneinheit 358 gemeinsam verstellt werden. Währenddem die Teiletransportträger 48 der Transporteinrichtung 46 getaktet fortbewegt werden, sind die Spanneinrichtungen 356a, 356b in einer Vorposition seitlich zur Transporteinrichtung 46 positioniert. Während dem Stillstand zumindest des in die Halteposition eingefahrenen Teiletransportträgers 48, werden die Spannwerkzeuge 372a, 372b der Spanneinrichtungen 356a, 356b jeweils in eine Ausgangsposition verbracht.

Wie weiters in Fig. 29 eingetragen, ist an der Befestigungsplatte 376 gegebenenfalls die Spanneinrichtung 370b der dritten Spanneinheit 371 montiert. Die Spanneinrichtung 370a ist seitlich zur Transporteinrichtung 46 auf einer nicht dargestellten Montageplatte eines Grundrahmens der Fügestation befestigt und weisen jeweils die Spannwerkzeuge 369a, 369b auf.

Die Spanneinrichtungen 355a, 355b der ersten Spanneinheit 357 sind am Grundrahmen der Fügestation gelagert.

Andererseits ist es aber auch möglich, dass die Spanneinrichtungen 356a, 356b; 370a, 370b der zweiten und/oder dritten Spanneinheit 338; 371 durch Anpressvorrichtungen und die Spannwerkzeuge 372a, 372b durch Anpresselemente gebildet sind, die zwischen einer Ruheposition und einer Anpressposition verstellbar sind, wobei in der Anpressposition die Schenkel 343, 344 der Teile 340, 341 gegen Abschnitte des Außenumfangs des inneren Teiles 342 angedrückt werden, ohne dass dabei eine Auswertung einer Spannkraft auf die Teile 340 bis 342 und/oder eines Verfahr- und Spannweges erfolgt.

Vorzugsweise werden die Teile 340 bis 342 bereits als Teilegruppe in der Teilebereitstellung in eine Übergabeposition zugeführt und von dieser über ein Handhabungssystem an eine Übernahmeposition der Transporteinrichtung 46 übergeben. Die in der Lage orientierte Teilegruppe wird in der Halteposition vom Teiletransportträger 48 mittels einer Höhenpositioniervorrichtung abgehoben.

Werden allerdings die Teile 340 bis 342 aufeinanderfolgend und/oder gruppenweise der Fügestation zugeführt, sind für die aus den Teilen 341, 342 bestehende Teilegruppe eine erste Höhenpositioniervorrichtung und für den Teil 340 eine zweite Höhenpositioniervorrichtung vorgesehen. Beispielsweise ist die zweite Höhenpositioniervorrichtung durch ein Handhabungssystem mit einem Greifer gebildet, welcher von der Teilebereitstellung den Teil 340 entnimmt und auf die in der Halteposition befindliche Teilegruppe abgesetzt wird. Darauffolgend erfolgt der Positionier- und Spannvorgang mittels des Spannsystems 351.

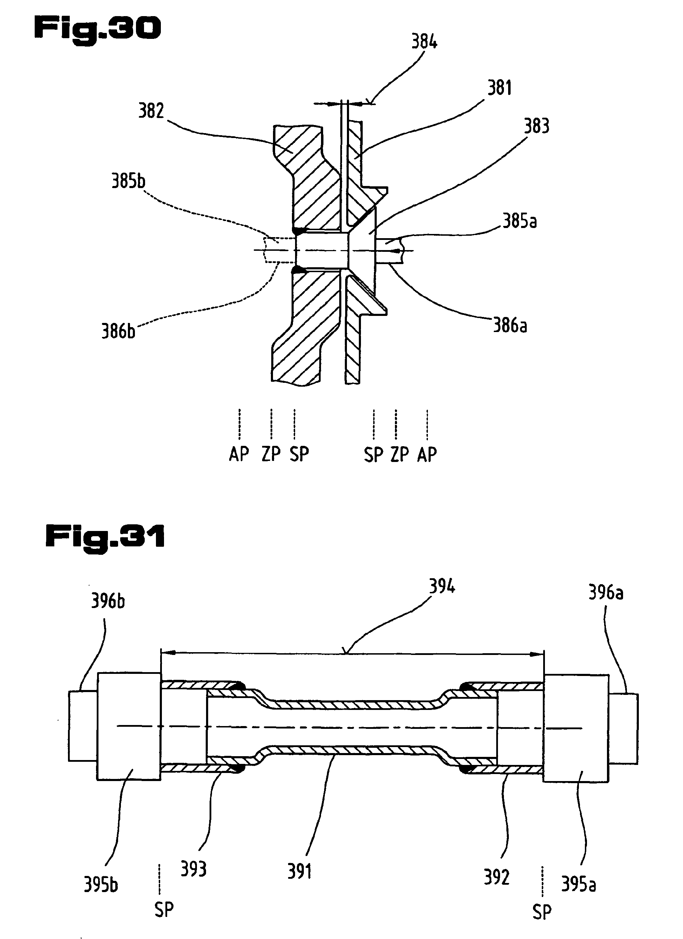

In Fig. 30 ist eine andere Ausführung einer Baugruppe, insbesondere eine Gelenkverbindung, bestehend aus drei Teilen 381 bis 383gezeigt. Die Teile 381, 382 sind durch eine erste und zweite Gelenkstange gebildet. Der dritte Teil 383 ist durch einen Lagerbolzen gebildet, der einen konischen Kopf und einen mit diesem verbundenen zylindrischen Schaft umfasst. Der Kopf wird in eine konische Aufnahme in der ersten Gelenkstange eingesetzt.

Damit die Teile 381, 382 der Gelenkverbindung möglichst leichtgängig gegeneinander verschwenkt werden können, sind die Teile 381, 382 nicht gegeneinander vorgespannt, sondern so miteinander verbunden werden, dass ein Spiel 384 bzw. ein Abstandsmaß zwischen den Teilen 381, 382 eingestellt ist. Das Spiel 380 kann auf Null oder so eingestellt werden, dass dieses einen kleinen Spalt im Ausmaß von einigen wenigen Zehntel Millimeter ausbildet. Das Spiel 383 wird über den Lagerbolzen eingestellt.

Im Nachfolgenden wird nur auf den Positionier- und Spannvorgang der Teile 381 bis 383 eingegangen, da die unterschiedlichen Möglichkeiten für den Transport derselben oben bereits ausführlich beschrieben wurden.

In gezeigter Fig. befinden sich die Teile 381 bis 383 bereits in der Bereitstellungsposition zwischen Spannwerkzeugen 385a, 385b von zusammenwirkenden Spanneinrichtungen 386a, 386b, die jeweils mittels nicht dargestellter Antriebseinheiten bzw. Linearantriebe aus der Ausgangsposition (AP) in die Zwischenposition (ZP) verfahren werden. In die Spannposition (SP) kann wiederum nur eines der Spannwerkzeuge 385a, 385b oder können beide Spannwerkzeuge 385a, 385b synchron zueinander verfahren. Im Nachfolgenden wird davon ausgegangen, dass sich die Spannwerkzeugen 385a, 385b bereits in der Zwischenposition (ZP) befinden und zumindest eines davon in die Spannposition (SP) bewegt wird. Nach gezeigter Ausführung wirken die Spannwerkzeuge 385a, 385b auf den Lagerbolzen ein.

Zunächst werden in der Bereitstellungsposition die Teile 381, 382 in deren Orientierung zueinander ausgerichtet und beispielsweise der Teil 382 fixiert gehalten, worauf der Lagerbolzen mittels dem Spannwerkzeug 385a axial verstellt wird, wobei der Istwert des Verfahrweges ermittelt und der Auswerteeinheit 38 eingegeben wird, in der ein Soll- Istwert-Vergleich des Verfahrweges durchgeführt wird. Erreicht der Istwert den Sollwert des Verfahrweges, sind die Teile 381 bis 383 in deren Spannposition und so zueinander positioniert sowie gehalten, dass das Spiel 384 zwischen den Teilen 381, 382 eingestellt ist. Das verfahrende Spannwerkzeug 385a wird in der Spannposition (SP) positioniert gehalten und danach der Schaft vom Lagerbolzen und der Teil 382 gefügt.

In einer anderen Ausführung, werden in der Bereitstellungsposition die Teile 381, 382 in deren Orientierung zueinander ausgerichtet und beispielsweise der Teil 382 fixiert gehalten, worauf der Lagerbolzen mittels dem Spannwerkzeug 385a axial verstellt und der Teil 381 auf den Teil 382 zugestellt sowie gegen diesen kurz angepresst wird, worauf das Spannwerkzeug 385a in entgegengesetzte Richtung in eine Spannposition (SP) bzw. soweit verstellt wird, dass das Spiel 384 zwischen den Teilen 381, 382 eingestellt ist. Hierzu ist neben dem Spannwerkzeug 385a noch ein diesem gegenüberliegendes, zweites Spannwerkzeug 385b, wie in strichlierte Linien eingetragen, erforderlich. Der Lagerbolzen ist zwischen einander zugewandten Anschlagflächen der Spannwerkzeuge 385a, 385b aufgenommen. Von den Spannwerkzeugen 385a, 385b wird der Istwert des Verfahr- und/oder Spannweges laufend ermittelt und mit dem vorgegebenen Sollwert des Verfahr- und/oder Spannweges verglichen sowie der Soll-Istwert-Vergleich ausgewertet. Erreichen die Spannwerkzeuge 385a, 385b jeweils den vorgegebenen Sollwert für den Verfahr- und/oder Spannweg, ist das Spiel 384 eingestellt. Nachdem das Spiel 384 bzw. Maß eingestellt wurde, werden die Teile 382, 383 gefügt.

In einer weiteren Ausführung, wird der Lagerbolzen mittels des Spannwerkzeuges 385a axial verstellt und der Teil 381 auf den Teil 382 zugestellt sowie gegen diesen mit einer Spannkraft angepresst wird. Wie in strichlierte Linien eingetragen, wirkt auf den Lagerbolzen ein zweites Spannwerkzeug 385b ein. Vom ersten und/oder zweiten Spannwerkzeug 385a; 385b wird der Istwert der Spannkraft laufend erfasst und der Auswerteeinheit 38 übermittelt. Erreicht der Istwert der Spannkraft eine vordefinierte Setzkraft, wird das verfahrende Spannwerkzeug 385a; 385b angehalten und danach in entgegengesetzter Richtung in eine Spannposition (SP) bewegt. Dabei wird das Spannwerkzeug 385a; 385b soweit verstellt, dass der Istwert der Spannkraft einen Sollwert der Spannkraft erreicht, der gegenüber die Setzkraft kleiner und so ausgelegt ist, dass die Teile 381 bis 383 noch ausreichend gegeneinander abgestützt sind und nicht auseinander fallen. Liegt nun der Istwert der Spannkraft innerhalb der oben beschriebenen Unter- und Obergrenze 315, 316 der Spannkraft, ist das Spiel 384 auf Null eingestellt. Die Teile 381 bis 383 sind in diesem Zustand bzw. in der Spannposition (SP) im wesentlichen entspannt und kraftfrei.

Soll hingegen ein Spiel 384 von einigen Hunderstel Millimeter, beispielsweise 0,05 mm, eingestellt werden, wird vom ersten und/oder zweiten Spannwerkzeug 385a; 385b der Istwert der Spannkraft sowie Verfahr- und Spannweg laufend erfasst und der Auswerteeinheit übermittelt. Erreicht der Istwert der Spannkraft eine vordefinierte Setzkraft, wird das verfahrende Spannwerkzeug 385a; 385b angehalten und danach in entgegengesetzter Richtung in eine Spannposition (SP) bewegt. Dabei wird das Spannwerkzeug 385a; 385b soweit verstellt, dass der Istwert der Spannkraft einen Sollwert der Spannkraft erreicht, der gegenüber die Setzkraft kleiner und so ausgelegt ist, dass die Teile 381 bis 383 noch ausreichend gegeneinander abgestützt sind, aber im wesentlichen entspannt sind. Danach wird das gewünschtes Spiel 384 eingestellt. Dazu wird, wenn der Sollwert der Spannkraft erreicht wurde, der Istwert des Verfahr- und Spannweges erfasst. Das erste und/oder zweite Spannwerkzeug 385a; 385b wird nun um einen dem Spiel 384 entsprechenden Verfahr- und Spannweg in die Spannposition (SP) verstellt und die Teile 381, 382 auseinander bewegt. Wird der Sollwert des Verfahr- und Spannweges erreicht, wird das erste und/oder zweite Spannwerkzeug 385a; 385b in der Spannposition (SP) gehalten, solange bis die Teile 382, 383 miteinander gefügt sind.

Letztere Ausführungen haben sich von Vorteil erwiesen, da aus fertigungstechnischen Gründen die Teile 381 bis 383 üblicherweise geringfügige Oberflächenrauhigkeiten aufweisen und durch das gegenseitige Anpressen der Teile 381 bis 383 die zusammengepressten Flächenabschnitte plastisch verformt werden, wie dies dem Fachmann unter dem Begriff "Setzen" bekannt ist. Auf diese Weise kann nun auch ein Spiel 384 von Null Millimeter exakt eingestellt und auch im Betrieb der Gelenkverbindung beibehalten werden.

Wie nicht weiters dargestellt, besteht auch die Möglichkeit, dass zur Einstellung eines Maßes zwischen zwei Teilen ein Abstandhalter, beispielsweise eine Fühllehre, verwendet wird. Dieser wird gemäß der Ausführung in Fig. 30 zwischen den Teilen 381, 382 über die Zeitdauer des Spann- und Fügevorganges angeordnet und besitzt eine gegenüber dem Material der Teile 381, 382 wesentlich höhere Festigkeit. Nach diesem Ausführungsbeispiel werden zunächst in der Bereitstellungsposition die Teile 381, 382 in deren Orientierung zueinander ausgerichtet und beispielsweise der Teil 382 fixiert gehalten sowie der Abstandhalter zwischen den Teilen 381, 382 eingebracht. Darauffolgend wird zumindest eines der Spannwerkzeuge 386a, 386b gegen den Teil 381 und/oder Teil 383 angedrückt und der Teil 381 in Richtung auf den Teil 383 bis auf die dem Maß 384 entsprechende Höhe des Abstandhalters bewegt. Dabei steigt die Spannkraft an. Der Istwert der Spannkraft sowie des Verfahr- und Spannweges werden laufend erfasst und der Auswerteeinheit 38 übermittelt. Erreicht der Istwert der Spannkraft oder des Verfahr- und Spannweges den Sollwert der Spannkraft oder des Verfahr- und Spannweges, wird das verfahrende Spannwerkzeug 385a angehalten, die Teile 381, 383 gefügt und danach der Abstandhalter entfernt und die Baugruppe von der Fügestation abtransportiert. Auf diese Weise kann das Maß 384 exakt eingestellt werden.

In Fig. 31 ist eine weitere Ausführung einer Baugruppe, bestehend aus drei Teilen 391 bis 393 gezeigt, die rohrförmig ausgebildet sind. Die Teile 392, 393 sind auf den Teil 391 an den Enden aufgeschoben.

Gemäß dieser Ausführung soll ein Abstandsmaß 394 zwischen den voneinander abgewandten Stirnkanten der Teile 392, 393 bzw. eine Gesamtlänge der Baugruppe eingestellt werden.

In gezeigter Fig. befinden sich die Teile 391 bis 393 bereits in der Bereitstellungsposition zwischen Spannwerkzeugen 395a, 395b von zusammenwirkenden Spanneinrichtungen 396a, 396b, die jeweils mittels nicht dargestellter Antriebseinheiten bzw. Linearantriebe aus der Ausgangsposition (AP) in die Zwischenposition (ZP) verfahren werden. In die Spannposition (SP) kann wiederum nur eines der Spannwerkzeuge 395a, 395b oder können beide Spannwerkzeuge 395a, 395b synchron zueinander verfahren.

Zunächst werden die Teile 392, 393 auf den Teil 391 an den Enden aufgeschoben und danach die Enden über eine Spannzange oder über Innenhochdruckumformen gegenüber die Teile 392, 393 aufgeweitet. Die Enden weiten sich also plastisch auf bis sie zur umfänglichen festen Anlage an der Innenseite der Teile 392, 393 kommen. Die äußeren Teile 392, 393 weiten sich momentan zwar auch auf, jedoch nur im elastischen Bereich, sodass nach dem Entspannen der Andruckkraft das Material der Teile 392, 393 zu den plastisch aufgeweiteten Enden des inneren Teiles 391 hinfedert, wodurch ein Reibschluss zwischen den Teilen 391 bis 393 gegeben ist. Da die Enden des Teiles 391 plastisch aufgeweitet werden, wird eine hohe Positioniergenauigkeit der Teile 391 bis 393 erreicht. Die Längsachse der Teile 391 bis 393 fluchten exakt.

Die Teile 392, 393 werden danach mittels dem ersten und/oder zweiten Spannwerkzeug 395a, 395b auf den aufgeweiteten Enden gegenüber den in der Bereitstellungsposition fixierten Teil 391 in axialer Richtung soweit verschoben, dass das Abstandsmaß 394 eingestellt wird.

Vorzugsweise werden beide Spannwerkzeuge 395a, 395b jeweils aus deren Zwischenposition (ZP) in die Spannposition (SP) synchron aufeinander zugestellt und dabei der Istwert des Verfahr- und Spannweges erfasst. Erreicht der Istwert des Verfahr- und Spannweges den Sollwert des Verfahr- und Spannweges, sind die hülsenartigen Teile 392, 393 in die Spannposition verschoben und ist das Abstandsmaß 394 eingestellt. Darauffolgend werden die Teile 392, 393 mit dem Teil 391 gefügt, insbesondere verschweißt oder geklebt.

Eine solche Baugruppe kann beispielsweise als Mantelrohr für eine Lenkwelle eines Kraftfahrzeuges ausgebildet sein, bei dem in die Teile 392, 393 Lager (nicht dargestellt), wie ein Kugellager, eingepresst werden. Die Teile 392, 393 dienen als präzise Lageraufnahmen.

In einer anderen Ausführung bildet die Baugruppe eine Gelenkwelle, die den rohrförmigen ersten Teil 391 und an den Enden desselben angeordnete Gelenkteile 392, 393 umfasst. Eine Gelenkwelle erfordert nicht nur einen exakten Abstand von Lagerachsen der Gelenkteile 392, 393 sondern müssen die Lagerachsen der Gelenkteile 392, 393 auch senkrecht zur Längsachse des Teiles 391 und zueinander parallel verlaufen. Um dies zu erreichen, werden die Gelenkteile 392, 393 auf dem rohrförmigen Teil 391 so gegeneinander verdreht, dass ein Drehwinkel bzw. Winkelmaß zwischen den Lagerachsen der Gelenkteile 392, 393 von 0° eingestellt ist. Hierzu werden die Gelenkteile 392, 393 jeweils von einem Spannwerkzeug ergriffen und in eine Spannposition verbracht, in der das Winkelmaß und der Abstand zwischen den Lagerachsen exakt eingestellt ist. Für die Einstellung vom Winkelmaß wird der Istwert des dem Drehwinkel entsprechenden Verfahrweges vom Spannwerkzeug laufend erfasst und der Auswerteeinheit 38 übermittelt. Erreicht der Istwert des Verfahrweges den Sollwert des Verfahrweges, wird das Spannwerkzeug in der Stellbewegung angehalten. Danach werden die Teile 381, 382, 383 gefügt. Das Einstellen des Abstandsmaßes zwischen den Lagerachsen erfolgt in oben beschriebener Weise.

Abschließend sei auch noch darauf hingewiesen, dass aus dem Soll-Istwert-Vergleich der Spannkraft und/oder des Verfahr- und/oder Spannweges auch die Abmessung, insbesondere die Länge jedes Teiles ausgewertet werden kann.

Genauso gut kann alternativ zum eine Gewindespindel und Spindelmutter aufweisenden Linearantrieb der Spanneinheiten, Zustellachsen oder des Antriebssystems für die Schweißvorrichtung auch ein Linearmotor, insbesondere Asynchron- und Synchron-Linearmotor eingesetzt werden. Linearmotoren erlauben die direkte Erzeugung linearer Bewegung ohne Getriebe. Sie bestehen aus einem stromdurchflossenen Primärteil (vergleichbar mit dem Stator eines Rotationsmotors) und einem Reaktionsteil, dem Sekundärteil (vergleichbar mit dem Rotor eines Rotationsmotors). Zweckmäßig ist der Primärteil ortsfest angeordnet und beispielsweise an der Tragkonstruktion der Fügestation befestigt, während der Sekundärteil an dem im Wesentlichen spielfrei geführt verstellbaren Schlitten der Antriebseinheiten angeordnet ist. Für den berührungsfreien Antrieb des Schlittens bietet sich beispielsweise ein Langstator-Synchronmotor an. Dabei wird die Antriebsleistung dem im Verstellweg befindlichen Primärteil zugeführt, während der Schlitten nur den Erregerteil enthält. Der Erregerteil ist so angeordnet, dass der Schlitten von den Magnetfeldkräften getragen wird. Nach dieser Ausführung wird der Strom des stromdurchflossenen Primärteiles erfasst und daraus in der Auswerteeinheit 38 der Istwert des Verfahr- und/oder Spannweges und/oder der Spannkraft ermittelt.

Der Ordnung halber sei abschließend darauf hingewiesen, dass zum besseren Verständnis des Fertigungssystems, der Spannsysteme und Baugruppen dieses bzw. deren Bestandteile teilweise unmaßstäblich und/oder vergrößert und/oder verkleinert dargestellt wurden.

### Bezugszeichenaufstellung

- 1: Teil
- 2: Teil
- 3a,b: Teil
- 5: Basis

- 6: Schenkel
- 7: Positionieröffnung
- 8: Auflagefortsatz
- 9: Auflagefläche
- 10: Anlagefläche

- 11: Positionieröffnung
- 12: Anlagefläche
- 15: Tragplatte

- 16: Hülse
- 17a,b: Fügestelle
- 18a,b,c: Fügestelle
- 19a,b: Fügestelle

- 21: Fügenaht
- 22: Anlagefläche
- 23: Anlagefläche
- 24a,b: Fügestoß
- 25: Anlagefläche

- 26a,b,c: Fügestoß
- 27a,b: Fügespalte

- 31: Fertigungssystem
- 32: Fertigungsanlage
- 33: Fertigungsanlage
- 34: Energiequelle

- 36: Steuereinrichtung
- 37: Energiequelle
- 38: Auswerteeinheit
- 39: Vergleichsmodul
- 40: Auswertemodul

- 41: Verbindungsleitung
- 42: Transportsystem
- 43: Fügestation
- 44: Übernahmebereich
- 45: Weitergabebereich

- 46: Transporteinrichtung
- 47a,b: Führungsbahn
- 48: Teiletransportträger
- 48': Teiletransportträger
- 49: Teilespeicher
- 50: Teilespeicher

- 51: Aufnahme
- 52: Transportkette
- 54: Umlenkstation
- 55: Gehäuseteil

- 56: Stirnplatte
- 57: Kupplungsvorrichtung
- 58: Stützvorrichtung
- 59: Aufstandsfläche
- 60: Symmetrieebene

- 61: Befestigungsvorrichtung
- 62: Seitenwand
- 63: Höhenführungsbahn
- 64: Seitenführungsbahn
- 65: Pfeil

- 66: Stützrolle
- 67: Druckrolle
- 68: Seitenfläche
- 69: Seitenfläche
- 70: Laufrolle

- 71: Kettenbolzen
- 72: Kupplungsfortsatz
- 73: Kupplungsaufnahme
- 74: Montageplatte
- 75: Stützsäule

- 76: Trägerplatte
- 77a,b: Aufnahmebügel
- 78: Führungssteg
- 79: Basis
- 80: Positioniermittel

- 81: Seitenführungsfläche
- 82a,b: Auflagefläche
- 83: Zufördereinrichtung
- 84: Zufördereinrichtung
- 85: Grundrahmen

- 86: Pfeil
- 87: Hilfsteiletransportträger
- 90: Führungsbahn

- 91: Zugmittel
- 92: Antriebsmotor
- 93: Fahrgestell
- 94: Laufrad
- 95: Aufnahme

- 96a,b: Aufnahmebügel
- 97: Führungssteg
- 98: Basis
- 99: Positioniermittel
- 100: Seitenführungsflächen

- 101ab: Auflagefläche
- 102: Anhaltevorrichtung
- 103a,b: Anschlagelement
- 104: Übergabeposition
- 104': Übergabeposition
- 105: Handhabungssystem

- 106: Übernahmeposition
- 106': Übernahmeposition
- 107: Handhabungssystem
- 110: Halteposition

- 111: Spannsystem
- 112a,b: Zustellachse
- 114: Spanneinheit
- 115: Spanneinheit

- 116: Spanneinheit
- 119: Schweißvorrichtung

- 121: Strahlschweißkopf
- 122: Baugruppe
- 123: Handhabungssystem
- 124: Schlechtteilebox
- 125: Endposition

- 126: zweiter Übernahmebereich
- 127: zweites Transportsystem
- 128: zweite Fügestation
- 129: zweiter Weitergabebereich
- 130: zweite Transporteinrichtung

- 131a,b: Aufnahme
- 132: Vorrichtung
- 133: Vorrichtung
- 134: Behälter
- 135: Teilespeicher

- 136: Übergabeposition
- 136': Übergabeposition
- 137: Handhabungssystem
- 138: Übernahmeposition
- 138': Übernahmeposition
- 139: Handhabungssystem
- 140: Pfeil

- 142: Halteposition
- 143: Spannsystem
- 144: Spanneinheit
- 145: Schweißvorrichtung

- 146a,b: Strahlschweißvorrichtung
- 147: Baugruppe
- 148: Handhabungssystem
- 149: Schlechtteilebox
- 150: Endposition

- 151: Abfördervorrichtung
- 152: Steher
- 153: Portal
- 154: Portal
- 155: Konsole

- 156: Antriebssystem
- 157: Montageplatte
- 158: Tragprofil
- 159: Stützkonsole
- 160: Tragprofil

- 161: Trägerplatte
- 162: Aussparung
- 163: Anschlussschnittstelle
- 164: Absaugrohr

- 170a,b: Linearantrieb

- 171a,b: Elektromotor
- 172: Linearantrieb
- 173: Elektromotor
- 174: Linearantrieb
- 175: Elektromotor

- 176: Befestigungsvorrichtung
- 177: Schwenkachse
- 178: Schwenkachse
- 180a,b: Antriebseinheit

- 181a,b: Antriebseinheit
- 182a,b: Antriebseinheit
- 184a,b: Linearantrieb
- 185a,b: Linearantrieb

- 186a,b: Linearantrieb
- 187: Rüstplattform
- 188a,b: Elektromotor
- 189a,b: Elektromotor
- 190a,b: Elektromotor

- 191a,b: Schlitten
- 192a,b: Schlitten
- 193a,b: Schlitten
- 194a,b: Spanneinrichtung
- 195a,b: Spanneinrichtung

- 196a,b: Linearantrieb
- 197a,b: Elektromotor
- 198a,b: Schlitten
- 200a,b: Höhenpositioniervorrichtung

- 201a,b: Spannwerkzeug
- 202a,b: Tragrahmen
- 203a,b: Anpressvorrichtung
- 204a,b: Widerlager
- 205a,b: Montageplatte

- 206a,b: Tragwand
- 207a,b: Tragwand
- 208a,b: Tragwand
- 209a,b: Montageplatte
- 210a,b: Tragplatte

- 211a,b: Kragarm
- 212a,b: Spannbacke
- 213a,b: Auflagerelement
- 214a,b: Hebevorrichtung
- 215a,b: Auflaufschräge

- 216a,b: Auflagefläche
- 217a,b: Anschlagfläche
- 218a,b: Kante
- 219: Transportstellung

- 219': Transportstellung
- 220a,b: Hebevorrichtung

- 221a,b: Schieberelement
- 222a,b: Führungsorgan
- 223a,b: Führungsbahn
- 224a,b: Stellantrieb
- 225a,b: Schlitten

- 226a,b: Übertragungselement
- 227a,b: Anschlagelement
- 228a,b: Stellvorrichtung
- 229a,b: Stellvorrichtung
- 230a,b: Anpresselement

- 231a,b: Anpresselement
- 232a,b: Gehäuseteil
- 233a,b: Seitenwand
- 234a,b: Boden
- 235a,b: Deckel

- 236a,b: Führungsfläche
- 237a,b: Horizontalschieber
- 238a,b: Horizontalschieber
- 239a,b: Führungsfläche
- 240a,b: Führungsfläche

- 241a,b: Vertikalschieber
- 242: Kulissenanordnung
- 242': Kulissenanordnung
- 243: Kulissenelement
- 243': Kulissenelement
- 244: Kulissenbahn
- 244': Kulissenbahn
- 245: Durchtrittsöffnung
- 245': Durchtrittsöffnung

- 246a,b: Koppelelement
- 247a,b: Antriebsmotor
- 248a,b: Vertikalschieber
- 249a,b: Koppelelement
- 250a,b: Montagewinkel

- 251a,b: Antriebsmotor
- 252a,b: Spannbacke
- 254a,b: Tragrahmen
- 255a,b: Spannwerkzeug

- 256a,b: Montageplatte
- 257a,b: Tragwand
- 258a,b: Tragwand
- 259a,b: Tragplatte
- 260a,b: Spanneinrichtung

- 261a,b: Tragrahmen
- 262a,b: Spannwerkzeug
- 263: Befestigungsplatte
- 264a,b: Montageplatte
- 265a,b: Tragwand

- 266: Weite
- 267: Länge
- 268: Weite
- 269a,b: Anschlagfläche
- 270: Bereitstellungsposition
- 270': Bereitstellungsposition

- 271: Spannkraft
- 272: Spannposition
- 273: Spannkraft
- 274: Spannposition

- 277a,b: Anschlagfläche
- 278: Spannkraft
- 280a,b: Spanneinrichtung

- 281a,b: Antriebseinheit
- 282a,b: Spannwerkzeug
- 283a,b: Tragrahmen
- 284a,b: Elektromotor
- 285a,b: Linearantrieb

- 286: Rüstplattform
- 287a,b: Schlitten
- 288a,b: Höhenpositioniervorrichtung
- 289a,b: Stellvorrichtung
- 290a,b: Montageplatte

- 291a,b: Seitenwand
- 292a,b: Tragwand
- 293a,b: Hebevorrichtung
- 294: Transportstellung
- 294': Transportstellung
- 295a,b: Auflageelement

- 296a,b: Auflaufschräge
- 297a,b: Auflagefläche

- 298: Spannsegment
- 299a,b: Stellantrieb
- 300a,b: Anschlagfläche

- 301: Anpressvorrichtung
- 302: Bereitstellungsposition
- 302': Bereitstellungsposition
- 304a,b,c: Anpresselement

- 305: Weite
- 306: Länge
- 307: Spannkraft
- 308: Spannposition

- 312: Spannposition
- 313: Spannposition
- 315: Untergrenze

- 316: Obergrenze
- 317: Untergrenze
- 318: Obergrenze
- 320: Spannkraftverlauf

- 321: Geschwindigkeitsprofil
- 322: Reibkraft
- 323: Doppelpfeil

- 330: Teil

- 331: Teil
- 332: Einformung
- 333: Einformung
- 334a,b: Spannwerkzeug
- 335a,b: Spanneinrichtung

- 336: Spanneinheit
- 337a,b: Antriebseinheit
- 338: Spannkraft
- 339: Strahlschweißkopf
- 340: Teil

- 341: Teil
- 342: Teil
- 343: Schenkel
- 344: Schenkel
- 345: Basis

- 346: Basis
- 347a,b: Fügestelle
- 348: Stirnkante
- 349: Stirnkante
- 350: Fügestation

- 351: Spannsystem
- 352: Positionieröffnung
- 353: Hebevorrichtung
- 354a,b: Spannwerkzeug
- 355a,b: Spanneinrichtung

- 356a,b: Spanneinrichtung
- 357: Spanneinheit
- 358: Spanneinheit
- 359a,b: Anschlagfläche
- 360: Spannkraft

- 361a,b: Anschlagfläche
- 362: Spannposition
- 364: Spannkraft

- 369a,b: Spannwerkzeug
- 370a,b: Spanneinrichtung

- 371: Spanneinheit
- 372a,b: Spannwerkzeug
- 373a,b: Tragrahmen
- 374a,b: Schlitten
- 375a,b: Antriebseinheit

- 376: Befestigungsplatte
- 377: Schlitten
- 378: Zustellachse
- 379: Elektromotor

- 381: Teil
- 382: Teil
- 383: Teil
- 384: Spiel
- 385a,b: Spannwerkzeug
- 386a,b: Spanneinrichtung

- 391: Teil
- 392: Teil
- 393: Teil
- 394: Abstandsmaß
- 395a,b: Spanneinrichtung

- 396a,b: Spanneinrichtung

## Patentansprüche

1. Verfahren zum Fügen von Teilen (381 bis 383; 391 bis 393) in einer Fügestation (43) einer Fertigungsanlage (32), bei dem die Teile (381 bis 383; 391 bis 393) jeweils in eine Bereitstellungsposition zwischen zusammenwirkende Spannwerkzeuge (385a, 385b; 395a, 395b) verbracht und danach mittels wenigstens einem aus einer die Teile (381 bis 383; 391 bis 393) freigebenden Ausgangsposition (AP) in eine die Teile (381 bis 383; 391 bis 393) spannende Spannposition (SP), durch einen elektronisch geregelten Linearantrieb verstellbaren Spannwerkzeug (385a, 385b; 395a, 395b) gespannt und darauffolgend zumindest in Teilabschnitten miteinander gefügt werden, wobei der zwischen der Ausgangs- und Spannposition (AP, SP) zurückgelegte Verfahr- und/oder Spannweg des verstellbaren Spannwerkzeuges (385a, 385b; 395a, 395b) und/oder die Spannkraft des bewegbaren Spannwerkzeuges (385a, 385b; 395a, 395b) auf den entsprechenden Teil (381 bis 383; 391 bis 393) als Istwert vorzugsweise laufend erfasst und einer elektronischen Auswerteeinheit (38) übermittelt wird, sodann in dieser ein Soll-Istwert-Vergleich der Spannkraft auf den entsprechenden Teil (381 bis 383; 391 bis 393) und/oder vom Verfahr- und/oder Spannweg des verstellbaren Spannwerkzeuges (385a, 385b; 395a, 395b) vorzugsweise laufend durchgeführt wird, **dadurch gekennzeichnet, dass** die Teile (381 bis 383; 391 bis 393) zueinander positioniert und zur Einstellung eines Maßes (384; 394) zwischen den Teilen (381 bis 383; 391 bis 393) derart zueinander bewegt werden, bis der Istwert der Spannkraft und/oder des Verfahr- und/oder Spannweges dem Sollwert der Spannkraft und/oder des Verfahr- oder Spannweges entspricht und nachdem der Istwert den Sollwert erreicht hat, die Teile (381 bis 383; 391 bis 393) in deren Position gehalten und miteinander gefügt werden.

2. Verfahren zum Fügen von Teilen (330, 331) in einer Fügestation (43) einer Fertigungsanlage (32), bei dem die Teile (330, 331) jeweils in eine Bereitstellungsposition zwischen zusammenwirkende Spannwerkzeuge (334a, 334b) verbracht und danach mittels wenigstens einem aus einer die Teile (330, 331) freigebenden Ausgangsposition (AP) in eine die Teile (330, 331) spannende Spannposition (SP), durch einen elektronisch geregelten Linearantrieb verstellbaren Spannwerkzeug (334a, 334b) gespannt und darauffolgend zumindest in Teilabschnitten miteinander gefügt werden, wobei der zwischen der Ausgangs- und Spannposition (AP, SP) zurückgelegte Verfahr- und Spannweg des verstellbaren Spannwerkzeuges (334a, 334b) und/oder die Spannkraft des bewegbaren Spannwerkzeuges (334a, 334b) auf den entsprechenden Teil (330, 331) als Istwert vorzugsweise laufend erfasst und einer elektronischen Auswerteeinheit (38) übermittelt wird, sodann in dieser ein Soll-Istwert-Vergleich der Spannkraft auf den entsprechenden Teil (330, 331) und/oder vom Verfahr- und Spannweg des verstellbaren Spannwerkzeuges (334a, 334b) vorzugsweise laufend durchgeführt wird, **dadurch gekennzeichnet, dass** zunächst ein innerer, profilartiger Teil (331) zwischen Führungsflächen wenigstens eines äußeren, profilartigen Teiles (330) angeordnet wird, sodann mittels dem verstellbaren Spannwerkzeug (334a, 334b) der äußere Teil (330) entgegen der Wirkung einer elastischen Rückstellkraft vom inneren Teil (331) verformt wird bis der Istwert der Spannkraft und/oder des Spannweges dem Sollwert der Spannkraft und/oder des Spannweges entspricht und nachdem der Istwert den Sollwert erreicht hat und der innere Teil (331) über den äußeren Teil (330) vorgespannt ist, der äußere Teil (330) in Position gehalten und im Bereich seiner Längsränder zumindest in Teilabschnitten miteinander gefügt werden.

3. Verfahren zum Fügen von Teilen (340 bis 342) in einer Fügestation (43) einer Fertigungsanlage (32), bei dem die Teile (340 bis 342) jeweils in eine Bereitstellungsposition (270") zwischen zusammenwirkende Spannwerkzeuge (354a, 354b) verbracht und danach mittels wenigstens einem aus einer die Teile (340 bis 342) freigebenden Ausgangsposition (AP) in eine die Teile (340 bis 342) spannende Spannposition (SP), durch einen elektronisch geregelten Linearantrieb verstellbaren Spannwerkzeug (354a, 354b) gespannt und darauffolgend zumindest in Teilabschnitten miteinander gefügt werden, wobei der zwischen der Ausgangs- und Spannposition (AP, SP) zurückgelegte Verfahr- und Spannweg des verstellbaren Spannwerkzeuges (354a, 354b) und/oder die Spannkraft des bewegbaren Spannwerkzeuges (354a, 354b) auf den entsprechenden Teil (340 bis 342) als Istwert vorzugsweise laufend erfasst und einer elektronischen Auswerteeinheit (38) übermittelt wird, sodann in dieser ein Soll-Istwert-Vergleich der Spannkraft auf den entsprechenden Teil (340 bis 342) und/oder vom Verfahr- und Spannweg des verstellbaren Spannwerkzeuges (354a, 354b) vorzugsweise laufend durchgeführt wird, **dadurch gekennzeichnet, dass** zunächst zwischen Führungsflächen von äußeren Teilen (340, 341) ein innerer Teil (342) angeordnet wird, sodann mittels dem verstellbaren Spannwerkzeug (354a, 354b) zumindest einer der äußeren Teile (340, 341) entgegen der Wirkung einer elastischen Rückstellkraft vom inneren Teil (342) in Richtung zum anderen, äußeren Teil (340, 341) bewegt wird bis der Istwert der Spannkraft und/ oder des Spannweges dem Sollwert der Spannkraft und/oder des Spannweges entspricht und nachdem der Istwert den Sollwert erreicht hat und der innere Teil (342) zwischen den äußeren Teilen (340, 341) vorgespannt ist, die äußeren Teile (340, 341) in deren Position gehalten und miteinander gefügt werden.

4. Verfahren nach Anspruch 2 oder 3, **dadurch gekennzeichnet, dass** der innere Teil (331; 342) während der Zustellbewegung eines äußeren Teiles (330; 340, 341) auf den inneren Teil (331; 342) elastisch und/oder plastisch verformt wird.

5. Verfahren nach einem der Ansprüche 1 bis 3, **dadurch gekennzeichnet, dass** der Sollwert für die Spannkraft des verstellbaren Spannwerkzeuges (334a, 334b; 354a, 354b; 385a, 385b; 395a, 395b) auf den Teil (330, 331; 340 bis 342; 381 bis 383; 391 bis 393) durch ein Toleranzfeld mit einer Untergrenze (315) und einer Obergrenze (316) und der Sollwert für den zurückzulegenden Spannweg des Spannwerkzeuges (334a, 334b; 354a, 354b; 385a, 385b; 395a, 395b) durch ein Toleranzfeld mit einer Untergrenze (317) und einer Obergrenze (318) begrenzt vorgegeben wird.

6. Verfahren nach einem der Ansprüche 1 bis 3, **dadurch gekennzeichnet, dass** die Teile (330, 331; 340 bis 342; 381 bis 383; 391 bis 393) über mehrere Strahlschweißköpfe (121; 146a, 146b) gleichzeitig an mehreren zueinander versetzten Stellen entlang der Fügestelle (17a bis 19b) miteinander verschweißt werden.

7. Verfahren nach einem der Ansprüche 1 bis 3, **dadurch gekennzeichnet, dass** die Teile (330, 331; 340 bis 342; 381 bis 383; 391 bis 393) verschweißt, vorzugsweise mit dem Laserschweiß-, Plasmaschweiß- oder Elektronenschweißverfahren, oder geklebt werden.

## Claims

1. Method of joining parts (381 to 383; 391 to 393) in a joining station (43) of a production plant (32), whereby the parts (381 to 383; 391 to 393) are moved respectively into a ready position between co-operating clamping tools (385a, 385b; 395a, 395b) and then clamped by means of at least one clamping tool (385a, 385b; 395a, 395b) displaceable by means of an electronically controlled linear drive from an initial position (AP) releasing the parts (381 to 383; 391 to 393) into a clamping position (SP) clamping the parts (381 to 383; 391 to 393) and are then joined to one another in at least part-portions, and the travel and/or clamping distance travelled by the displaceable clamping tool (385a, 385; 395a, 395b) between the initial and clamping positions (AP, SP) and/or the clamping force of the displaceable clamping tool (385a, 385b; 395a, 395b) on the corresponding part (381 to 383; 391 to 393) is detected as an actual value, preferably on a continuous basis, and transmitted to an electronic evaluation unit (38) so that a desired-actual value comparison of the clamping force on the corresponding part (381 to 383; 391 to 393) and/or the travel and/or clamping distance of the displaceable clamping tool (385a, 385b; 395a, 395b) can be run in it, preferably on a continuous basis, **characterised in that** the parts (381 to 383; 391 to 393) are moved positioned relative to one another and in such a way as to adjust a distance (384; 394) between the parts (381 to 383; 391 to 393) until the actual value of the clamping force and/or the travel and/or clamping distance corresponds to the desired value of the clamping force and/or the travel or clamping distance, and once the actual value has reached the desired value, the parts (381 to 383; 391 to 393) are held in their position and joined to one another.

2. Method of joining parts (330, 331) in a joining station (43) of a production plant (32), whereby the parts (330, 331) are moved respectively into a ready position between co-operating clamping tools (334a, 334b) and then clamped by means of at least one clamping tool (334a, 334b) displaceable by means of an electronically controlled linear drive from an initial position (AP) releasing the parts (330, 331) into a clamping position (SP) clamping the parts (330, 331) and are then joined to one another in at least part-portions, and the travel and clamping distance travelled by the displaceable clamping tool (334a, 334) between the initial and clamping positions (AP, SP) and/or the clamping force of the displaceable clamping tool (334a, 334b) on the corresponding part (330, 331) is detected as an actual value, preferably on a continuous basis, and transmitted to an electronic evaluation unit (38) so that a desired-actual value comparison of the clamping force on the corresponding part (330, 331) and/or the travel and/or clamping distance of the displaceable clamping tool (334a, 334b) can be run in it, preferably on a continuous basis, **characterised in that** an inner, profiled-type part (331) is firstly disposed between guide surfaces of at least one outer profiled-type part (330), after which the outer part (330) is deformed by means of the displaceable clamping tool (334a, 334b) opposing the action of an elastic rebounding force of the inner part (331) until the actual value of the clamping force and/or the clamping distance corresponds to the desired value of the clamping force and/or the clamping distance, and once the actual value reaches the desired value and the inner part (331) is pre-tensioned via the outer part (330), the outer part (330) is held in position and they are joined to one another in at least part-portions in the region of its longitudinal edges.

3. Method of joining parts (340 to 342) in a joining station (43) of a production plant (32), whereby the parts (340 to 342) are moved respectively into a ready position (270'=) between co-operating clamping tools (354a, 354b) and then clamped by means of at least one clamping tool (354a, 354b) displaceable by means of an electronically controlled linear drive from an initial position (AP) releasing the parts (340 to 342) into a clamping position (SP) clamping the parts (340 to 342) and are then joined to one another in at least part-portions, and the travel and clamping distance travelled by the displaceable clamping tool (354a, 354b) between the initial and clamping positions (AP, SP) and/or the clamping force of the displaceable clamping tool (354a, 354b) on the corresponding part (340 to 342) is detected as an actual value, preferably on a continuous basis, and transmitted to an electronic evaluation unit (38) so that a desired-actual value comparison of the clamping force on the corresponding part (340 to 342) and/or the travel and/or clamping distance of the displaceable clamping tool (354a, 354b) can be run in it, preferably on a continuous basis, **characterised in that** an inner part (342) is disposed between guide surfaces of outer parts (340, 341) and then at least one of the outer parts (340, 341) is moved so that it opposes the action of an elastic rebounding force of the inner part (342) in the direction towards the other outer part (340, 341) until the actual value of the clamping force and/or the clamping distance corresponds to the desired value of the clamping force and/or the clamping distance, and once the actual value has reached the desired value and the inner part (342) is pre-tensioned between the outer parts (340, 341), the outer parts (340, 341) are held in their position and joined to one another.

4. Method as claimed in claim 2 or 3, **characterised in that** the inner part (331; 342) is elastically and/or plastically deformed onto the inner part (331; 342) during the feed-in movement of an outer part (330; 340, 341).

5. Method as claimed in one of claims 1 to 3, **characterised in that** the desired value for the clamping force of the displaceable clamping tool (334a, 334b; 354a, 354b; 385a, 385b; 395a, 395b) on the part (330, 331; 340 to 342; 381 to 383; 391 to 393) is predefined by a tolerance range limited by a lower limit (315) and an upper limit (316) and the desired value for the clamping distance to be travelled by the clamping tool (334a, 334b; 354a, 354b; 385a, 385b; 395a, 395b) is predefined by a tolerance range limited by a lower limit (317) and an upper limit (318).

6. Method as claimed in one of claims 1 to 3, **characterised in that** the parts (330, 331; 340 to 342; 381 to 383; 391 to 393) are welded to one another simultaneously at several different points offset from one another along the joining point (17a to 19b) by means of several jet welding heads (121; 146a, 146b).

7. Method as claimed in one of claims 1 to 3, **characterised in that** the parts (330, 331; 340 to 342; 381 to 383; 391 to 393) are welded, preferably by laser welding, plasma welding or electron welding processes or glued.

## Revendications

1. Procédé pour l'assemblage de pièces (381 à 383; 391 à 393) dans un poste d'assemblage (43) d'une installation de fabrication (32), selon lequel les pièces (381 à 383; 391 à 393) sont amenées chacune dans une position de mise à disposition entre des outils de serrage (385a, 385b; 395a, 395b) coopérants et sont bloquées ensuite au moyen d'au moins un outil de serrage (385a, 385b; 395a, 395b) pouvant être déplacé par un entraînement linéaire à réglage électronique hors d'une position initiale (AP), libérant une des pièces (381 à 383; 391 à 393), dans une position de serrage (SP) bloquant une des pièces (381 à 383; 391 à 393), puis sont assemblées entre elles au moins dans certains tronçons, la distance de réglage et/ou de serrage parcourue par l'outil de serrage (385a, 385b; 395a, 395b) réglable entre la position initiale (AP) et la position de serrage (SP) et/ou la force de serrage de l'outil de serrage (385a, 385b; 395a, 395b) mobile exercée sur la pièce (381 à 383; 391 à 393) correspondante étant enregistrée de préférence en continu en tant que valeur réelle et étant transférée dans une unité d'analyse (38) électronique, puis dans celle-ci est effectuée de préférence en continu une comparaison entre la valeur de consigne et la valeur réelle de la force de serrage exercée sur la pièce (381 à 383; 391 à 393) correspondante et/ou de la distance de réglage et/ou de serrage de l'outil de serrage (385a, 385b; 395a, 395b) réglable, **caractérisé en ce que** les pièces (381 à 383; 391 à 393) sont positionnées les unes par rapport aux autres et sont déplacées les unes par rapport aux autres pour la mise au point d'une distance (384; 394) entre les pièces (381 à 383; 391 à 393), jusqu'à ce que la valeur réelle de la force de serrage et/ou de la distance de réglage et/ou de serrage corresponde à la valeur de consigne de la force de serrage et/ou de la distance de réglage et/ou de serrage, et après que la valeur réelle a atteint la valeur de consigne, les pièces (381 à 383; 391 à 393) sont maintenues dans leur position et sont assemblées entre elles.

2. Procédé pour l'assemblage de pièces (330, 331) dans un poste d'assemblage (43) d'une installation de fabrication (32), selon lequel les pièces (330, 331) sont amenées chacune dans une position de mise à disposition entre des outils de serrage (334a, 334b) coopérants et sont bloquées ensuite au moyen d'au moins un outil de serrage (334a, 334b) pouvant être déplacé par un entraînement linéaire à réglage électronique hors d'une position initiale (AP), libérant une des pièces (330, 331), dans une position de serrage (SP) bloquant une des pièces (330, 331), puis sont assemblées entre elles au moins dans certains tronçons, la distance de réglage et de serrage parcourue par l'outil de serrage (334a, 334b) réglable entre la position initiale (AP) et la position de serrage (SP) et/ou la force de serrage de l'outil de serrage ((334a, 334b) mobile exercée sur la pièce (330, 331) correspondante étant enregistrée de préférence en continu en tant que valeur réelle et étant transférée dans une unité d'analyse (38) électronique, puis dans celle-ci est effectuée de préférence en continu une comparaison entre la valeur de consigne et la valeur réelle de la force de serrage exercée sur la pièce (330, 331) correspondante et/ou de la distance de réglage et de serrage de l'outil de serrage (334a, 334b) réglable, **caractérisé en ce que**, tout d'abord, une pièce profilée interne (331) est disposée entre des surfaces de guidage d'au moins une pièce profilée externe (330), puis au moyen de l'outil de serrage (334a, 334b) réglable, la pièce externe (330) est déformée dans le sens opposé à l'action d'une force de rappel élastique de la pièce interne (331) jusqu'à ce que la valeur réelle de la force de serrage et/ou de la distance de serrage corresponde à la valeur de consigne de la force de serrage et/ou de la distance de serrage, et après que la valeur réelle a atteint la valeur de consigne et que la pièce interne (331) est précontrainte au-dessus de la pièce externe (330), ladite pièce externe (330) est maintenue en position et est assemblée dans la zone de ses bords longitudinaux au moins dans certains tronçons.

3. Procédé pour l'assemblage de pièces (340 à 342) dans un poste d'assemblage (43) d'une installation de fabrication (32), selon lequel les pièces (340 à 342) sont amenées chacune dans une position de mise à disposition (270") entre des outils de serrage (354a, 354b) coopérants et sont bloquées ensuite au moyen d'au moins un outil de serrage (354a, 354b) pouvant être déplacé par un entraînement linéaire à réglage électronique hors d'une position initiale (AP), libérant une des pièces (340 à 342), dans une position de serrage (SP) bloquant une des pièces (340 à 342), puis sont assemblées entre elles au moins dans certains tronçons, la distance de réglage et de serrage parcourue par l'outil de serrage (354a, 354b) réglable entre la position initiale (AP) et la position de serrage (SP) et/ou la force de serrage de l'outil de serrage (354a, 354b) mobile exercée sur la pièce (340 à 342) correspondante étant enregistrée de préférence en continu en tant que valeur réelle et étant transférée dans une unité d'analyse (38) électronique, puis dans celle-ci est effectuée de préférence en continu une comparaison entre la valeur de consigne et la valeur réelle de la force de serrage exercée sur la pièce (340 à 342) correspondante et/ou de la distance de réglage et de serrage de l'outil de serrage (354a, 354b) réglable, **caractérisé en ce que**, tout d'abord, une pièce interne (342) est disposée entre des surfaces de guidage de pièces externes (340, 341), puis au moyen de l'outil de serrage (334a, 334b) réglable, au moins une des pièces externes (340, 341) est déformée dans le sens opposé à l'action d'une force de rappel élastique de la pièce interne (342) vers l'autre pièce externe (340, 341) jusqu'à ce que la valeur réelle de la force de serrage et/ou de la distance de serrage corresponde à la valeur de consigne de la force de serrage et/ou de la distance de serrage, et après que la valeur réelle a atteint la valeur de consigne et que la pièce interne (342) est précontrainte entre les pièces externes (340, 341), les pièces externes (340, 341) sont maintenues dans leur position et sont assemblées entre elles.

4. Procédé selon la revendication 2 ou 3, **caractérisé en ce que** la pièce interne (331; 342) est déformée par effet élastique et/ou plastique pendant le mouvement d'approche d'une pièce externe (330; 340, 341) vers la pièce interne (331; 342).

5. Procédé selon l'une quelconque des revendications 1 à 3, **caractérisé en ce que** la valeur de consigne pour la force de serrage de l'outil de serrage (334a, 334b; 354a, 354b; 385a, 385b; 395a, 395b) réglable sur la pièce (330, 331; 340 à 342; 381 à 383; 391 à 393) est définie de manière limitée par une fourchette de tolérances avec une limite inférieure (315) et une limite supérieure (316), et la valeur de consigne de la distance de serrage parcourue par l'outil de serrage (334a, 334b; 354a, 354b; 385a, 385b; 395a, 395b) est définie de manière limitée par une fourchette de tolérances avec une limite inférieure (317) et une limite supérieure (318).

6. Procédé selon l'une quelconque des revendications 1 à 3, **caractérisé en ce que** les pièces (330, 331; 340 à 342; 381 à 383; 391 à 393) sont soudées entre elles, simultanément au niveau de plusieurs emplacements décalés entre eux le long de la zone de jonction (17a à 19b), par l'intermédiaire de plusieurs têtes de soudage par rayonnement.

7. Procédé selon l'une quelconque des revendications 1 à 3, **caractérisé en ce que** les pièces (330, 331; 340 à 342; 381 à 383; 391 à 393) sont soudées, de préférence par soudage laser, par soudage plasma ou par soudage par faisceau d'électrons, ou sont collées.
